# EUROPEAN PATENT SPECIFICATION

(11) **EP 0 917 056 B1**
(45) Date of publication and mention of the grant of the patent: **09.01.2008**
(21) Application number: 98309006.9
(22) Date of filing: 04.11.1998
(51) Int. Cl.: G06F 9/46

(54) **A multi-processor computer system and a method of operating thereof**
Multiprozessor-Rechnersystem und Verfahren zu seinem Betrieb
Système d'ordinateur multiprocesseur et procédé pour son fonctionnement

(30) Priority: 04.11.1997 US 64250 P; 10.06.1998 US 95368; 10.06.1998 US 95265; 10.06.1998 US 95521; 10.06.1998 US 95188; 10.06.1998 US 90027; 10.06.1998 US 95543; 10.06.1998 US 95379; 10.06.1998 US 95277; 10.06.1998 US 95266; 10.06.1998 US 95264; 10.06.1998 US 95256
(43) Date of publication of application: 19.05.1999
(73) Proprietor: Compaq Computer Corporation, Houston Texas 77070 (US)
(72) Inventor: Noel, Karen, Pembroke, NH 03275 (US); Benson, Thomas, Hollis, NH 03049 (US); Jordan, Gregory H., Hollis, NH 03049 (US); Kauffman, James R., Nashua, NH 03062 (US); Mason, Andrew H., Hollis, NH 03049 (US); Harter, Paul K., Groton, MA 01450 (US); Bishop, Richard A., Merrimack, NH 03054 (US); Kleinsorge, Frederick G., Amherst, NH 03031 (US); Shirron, Stephen, Acton, MA 01720 (US); Zalewski, Stephen, Redmond, WA 98052 (US)
(74) Representative: Brunner, Michael John

(56) References cited:
- EP-A- 0 321 694
- EP-A- 0 593 874
- WO-A-88/01772
- US-A- 5 237 566
- US-A- 5 574 914
- BOB BECK: "AAMP: A MULTIPROCESSOR APPROACH FOR OPERATING SYSTEM AND APPLICATION MIGRATION" OPERATING SYSTEMS REVIEW (SIGOPS),US,ACM HEADQUARTER. NEW YORK, vol. 24, no. 2, 1 April 1990 (1990-04-01), pages 41-55, XP000140419
- ASHWINI K. NANDA, LAXMI N. BHUYAN: "MAPPING APPLICATIONS ONTO A CACHE COHERENT MULTIPROCESSOR" PROCEEDINGS OF THE SUPERCOMPUTING CONFERENCE,US,LOS ALAMITOS, IEEE COMP. SOC. PRESS, vol. CONF. 5, 1992, pages 368-377, XP000358003 ISBN: 0-8186-2630-5
- RICHARD RASHID, AVADIS TEVANIAN JR., MICHAEL YOUNG, DAVID GOLUB, ROBERT BARON, DAVID BLACK, WILLIAM J. BOLOSKY, JONATHAN CHEW: "MACHINE-INDEPENDENT VIRTUAL MEMORY MANAGEMENT FOR PAGED UNIPROCESSOR AND MULTIPROCESSOR ARCHITECTURES" IEEE TRANSACTIONS ON COMPUTERS,US,IEEE INC. NEW YORK, vol. 37, no. 8, 1 August 1988 (1988-08-01), pages 896-907, XP000098791 ISSN: 0018-9340

## Description

This invention relates to multiprocessor computer architectures in which processors and other computer hardware resources are grouped in partitions, each of which has an operating system instance.

The efficient operation of many applications in present computing environments depend upon fast, powerful and flexible computing systems. The configuration and design of such systems has become very complicated when such systems are to be used in an "enterprise" commercial environment where there may be many separate departments, many different problem types and continually changing computing needs. Users in such environments generally want to be able to quickly and easily change the capacity of the system, its speed and its configuration. They may also want to expand the system work capacity and change configurations to achieve better utilization of resources without stopping execution of application programs on the system. In addition they may want be able to configure the system in order to maximize resource availability so that each application will have an optimum computing configuration.

Traditionally, computing speed has been addressed by using a "shared nothing" computing architecture where data, business logic, and graphic user interfaces are distinct tiers and have specific computing resources dedicated to each tier. Initially, a single central processing unit was used and the power and speed of such a computing system was increased by increasing the clock rate of the single central processing unit. More recently, computing systems have been developed which use several processors working as a team instead one massive processor working alone. In this manner, a complex application can be distributed among many processors instead of waiting to be executed by a single processor. Such systems typically consist of several central processing units (CPUs) which are controlled by a single operating system. In a variant of a multiple processor system called "symmetric multiprocessing" or SMP, the applications are distributed equally across all processors. The processors also share memory. In another variant called "asymmetric multiprocessing" or AMP, one processor acts as a "master" and all of the other processors act as "slaves." Therefore, all operations, including the operating system, must pass through the master before being passed onto the slave processors. These multiprocessing architectures have the advantage that performance can be increased by adding additional processors, but suffer from the disadvantage that the software running on such systems must be carefully written to take advantage of the multiple processors and it is difficult to scale the software as the number of processors increases. Current commercial workloads do not scale well beyond 8-24 CPUs as a single SMP system, the exact number depending upon platform, operating system and application mix.

For increased performance, another typical answer has been to dedicate computer resources (machines) to an application in order to optimally tune the machine resources to the application. However, this approach has not been adopted by the majority of users because most sites have many applications and separate databases developed by different vendors. Therefore, it is difficult, and expensive, to dedicate resources among all of the applications especially in environments where the application mix is constantly changing. Further, with dedicated resources, it is essentially impossible to quickly and easily migrate resources from one computer system to another, especially if different vendors are involved. Even if such a migration can be performed, it typically involves the intervention of a system administrator and requires at least some of the computer systems to be powered down and rebooted.

Alternatively, a computing system can be partitioned with hardware to make a subset of the resources on a computer available to a specific application. This approach avoids dedicating the resources permanently since the partitions can be changed, but still leaves issues concerning performance improvements by means of load balancing of resources among partitions and resource availability.

The availability and maintainability issues were addressed by a "shared everything" model in which a large centralized robust server that contains most of the resources is networked with and services many small, uncomplicated client network computers. Alternatively, "clusters" are used in which each system or "node" has its own memory and is controlled by its own operating system. The systems interact by sharing disks and passing messages among themselves via some type of communication network. A cluster system has the advantage that additional systems can easily be added to a cluster. However, networks and clusters suffer from a lack of shared memory and from limited interconnect bandwidth which places limitations on performance.

In many enterprise computing environments, it is clear that the two separate computing models must be simultaneously accommodated and each model optimized. Further, it is highly desirable to be able to modify computer configurations "on the fly" without rebooting any of the systems. Several prior art approaches have been used to attempt this accommodation. For example, a design called a "virtual machine" or VM developed and marketed by International Business Machines Corporation, Armonk, New York, uses a single physical machine, with one or more physical processors, in combination with software which simulates multiple virtual machines. Each of those virtual machines has, in principle, access to all the physical resources of the underlying real computer. The assignment of resources to each virtual machine is controlled by a program called a "hypervisor". There is only one hypervisor in the system and it is responsible for all the physical resources. Consequently, the hypervisor, not the other operating systems, deals with the allocation of physical hardware. The hypervisor intercepts requests for resources from the other operating systems and deals with the requests in a globally-correct way.

The VM architecture supports the concept of a "logical partition" or LPAR. Each LPAR contains some of the available physical CPUs and resources which are logically assigned to the partition. The same resources can be assigned to more than one partition. LPARs are set up by an administrator statically, but can respond to changes in load dynamically, and without rebooting, in several ways. For example, if two logical partitions, each containing ten CPUs, are shared on a physical system containing ten physical CPUs, and, if the logical ten CPU partitions have complementary peak loads, each partition can take over the entire physical ten CPU system as the workload shifts without a re-boot or operator intervention.

In addition, the CPUs logically assigned to each partition can be turned "on" and "off" dynamically via normal operating system operator commands without reboot. The only limitation is that the number of CPUs active at system initialization is the maximum number of CPUs that can be turned "on" in any partition.

Finally, in cases where the aggregate workload demand of all partitions is more than can be delivered by the physical system, LPAR "weights" can be used to define the portion of the total CPU resources which is given to each partition. These weights can be changed by system administrators, on-the-fly, with no disruption.

Another prior art system is called a "Parallel Sysplex" and is also marketed and developed by the International Business Machines Corporation. This architecture consists of a set of computers that are clustered via a hardware entity called a "coupling facility" attached to each CPU. The coupling facilities on each node are connected, via a fiber-optic link, and each node operates as a traditional SMP machine, with a maximum of 10 CPUs. Certain CPU instructions directly invoke the coupling facility. For example, a node registers a data structure with the coupling facility, then the coupling facility takes care of keeping the data structures coherent within the local memory of each node.

The Enterprise 10000 Unix server developed and marketed by Sun Microsystems, Mountain View, California, uses a partitioning arrangement called "Dynamic System Domains" to logically divide the resources of a single physical server into multiple partitions, or domains, each of which operates as a stand-alone server. Each of the partitions has CPUs, memory and I/O hardware. Dynamic reconfiguration allows a system administrator to create, resize, or delete domains "on the fly" and without rebooting. Every domain remains logically isolated from any other domain in the system, isolating it completely from any software error or CPU, memory, or I/O error generated by any other domain. There is no sharing of resources between any of the domains.

The Hive Project conducted at Stanford University uses an architecture which is structured as a set of cells. When the system boots, each cell is assigned a range of nodes, each having memory and I/O devices, that the cell owns throughout execution. Each cell manages the processors, memory and I/O devices on those nodes as if it were an independent operating system. The cells cooperate to present the illusion of a single system to user- level processes.

Hive cells are not responsible for deciding how to divide their resources between local and remote requests. Each cell is responsible only for maintaining its internal resources and for optimizing performance within the resources it has been allocated. Global resource allocation is carried out by a user-level process called "wax." The Hive system attempts to prevent data corruption by using certain fault containment boundaries between the cells. In order to implement the tight sharing expected from a multiprocessor system, despite the fault containment boundaries between cells, resource sharing is implemented through the cooperation of the various cell kernels, but the policy is implemented outside the kernels in the wax process. Both memory and processors can be shared.

A system called "Cellular IRIX" developed and marketed by Silicon Graphics Inc. Mountain View, California, supports modular computing by extending traditional symmetric multiprocessing systems. The Cellular IRIX architecture distributes global kernel text and data into optimized SMP-sized chunks or "cells". Cells represent a control domain consisting of one or more machine modules, where each module consists of processors, memory, and I/O. Applications running on these cells rely extensively on a full set of local operating system services, including local copies of operating system text and kernel data structures, bit only one instance of the operating system exists on the entire system. Inter-cell coordination allows application images to directly and transparently utilize processing, memory and I/O resources from other cells without incurring the overhead of data copies or extra context switches.

Another existing architecture called NUMA-Q developed and marketed by Sequent Computer Systems, Ind., Beaverton, Oregon uses "quads", or a group of four processors per portion of memory, as the basic building block for NUMA-Q SMP nodes. Adding I/O to each quad further improves performance. Therefore, the NUMA-Q architecture not only distributes physical memory but puts a predetermined number of processors and PCI slots next to each processor. The memory in each quad is not local memory in the traditional sense. Rather, it is a portion of the physical memory address space and has a specific address range. The address map is divided evenly over memory, with each quad containing a contiguous portion of address space. Only one copy of the operating system is running and, as in any SMP system, it resides in memory and runs processes without distinction and simultaneously on one or more processors.

Accordingly, while many attempts have been made at providing a flexible computer system, existing systems each have significant shortcomings. Therefore, it would be desirable to have a new computer system design which provides improved flexibility, resource availability, resource migration capabilities and scalability.

US-A-5574914 discloses an apparatus and method for managing a number of data processing resources to produce one or more independent and separate data processing partitions. A dynamic reconfiguration capacity is provided which allows resources to be assigned to a number of otherwise autonomous systems using a centralised control entity. An interconnection mechanism is disclosed to connect system resources and a software mechanism is disclosed for assigning the assignable system resources to a plurality of partitions. However, this disclosure does not teach about an operating system of the apparatus.

Bob Beck: "AAMP: A Multiprocessor Approach for Operating System and Application Migration" Operating Systems Review (SIGOPS), US, ACM Headquarters. New York, vol. 24, no. 2, 1 April 1990, pages 41-55, discloses a method for running multiple multiprocessor operating systems on multiple instruction set processors. The method disclosed in this document supports running different operating systems on processors in a multiprocessor system and the accommodation of multiple instruction set processors. However, this disclosure does not teach about a reboot of a computer system.

According to the present invention there is provided a computer system having a plurality of assignable system resources, including processors, memory and I/O circuitry, the computer system comprising:
an interconnection mechanism for electrically interconnecting the processors, memory and I/O circuitry so that each processor has electrical access to all of the memory and at least some of the I/O circuitry;
a software mechanism for assigning the assignable system resources to a plurality of partitions, each partition including at least one processor, some memory and some I/O circuitry;
an operating system instance running in each partition;
at least one group of partitions forms a community that shares memory;
a processor migration apparatus that reassigns a first processor from a first partition to a second partition without a reboot of the entire system, wherein said migration apparatus stores a processing context of the processor relative to the first partition prior to the reassignment, and, after the reassignment of the first processor, the first processor loads any processing context that it may have stored during a previous execution with the second partition.

According to a second aspect of the present invention there is provided a method of operating a computer system having a plurality of assignable system resources, including processors, memory and I/O circuitry, the method comprising the steps of:
(a) electrically interconnecting the processors, memory and I/O circuitry so that each processor has electrical access to all of the memory and at least some of the I/O circuitry;
(b) assigning the assignable system resources to a plurality of partitions, each partition including at least one processor, some memory and some I/O circuitry;
(c) running an operating system instance in each partition; and
(d) forming a community (420) of partitions by sharing memory among a group of partitions; and
reassigning a first processor from a first partition to a second partition without rebooting the entire system, wherein said reassigning comprises causing, prior to the reassignment, the first processor to store a processing context relative to the first partition, and causing the first processor, after reassignment, to load any processing context which it may have stored from a previous execution with the second partition.

The above and further advantages of the invention may be better understood by referring to the following description in conjunction with the accompanying drawings, in which:
Figure 1 is a schematic block diagram of a hardware platform illustrating several system building blocks.
Figure 2 is a schematic diagram of an APMP computer system constructed in accordance with the principles of the present invention illustrating several partitions.
Figure 3 is a schematic diagram of a configuration tree which represents hardware resource configurations and software configurations and their component parts with child and sibling pointers.
Figure 4 is a schematic diagram of the configuration tree shown in Figure 3 and rearranged to illustrate the assignment of hardware to software instances by ownership pointers.
Figure 5 is a flowchart outlining steps in an illustrative routine for creating an APMP computer system in accordance with the principles of the present invention.
Figure 6 is a flowchart illustrating the steps in an illustrative routine for creating entries in an APMP system management database which maintains information concerning the APMP system and its configuration.
Figures 7A and 7B, when placed together, form a flowchart illustrating in detail the steps in an illustrative routine for creating an APMP computer system in accordance with the principles of the present invention.
Figures 8A and 8B, when placed together, form a flowchart illustrating the steps in an illustrative routine followed by an operating system instance to join an APMP computer system which is already created.
Figure 9 is a flowchart generally illustrating the steps for migrating a resource from one partition to another.
Figures 10A - 10E are block schematic illustrations which graphically depict the steps for migrating a resource from one partition to another.
Figure 11 is a block schematic diagram illustrating an overview of the inventive system.
Figure 12 is a block schematic diagram illustrating the inventive computing system operating as a shared nothing computing system.
Figure 13 is a block schematic diagram illustrating the inventive computing system operating as a shared partial computing system.
Figure 14 is a block schematic diagram illustrating the inventive computing system operating as a shared everything computing system.
Figure 15 is a block schematic diagram illustrating migration of CPUs in the inventive computing system.
Figure 16 is a schematic view of sets used by instances running on several respective partitions of the computer system of the present invention and the categorizing of CPUs of the system relative to those instances.
Figure 17 is a schematic view of a partition and a set of memory locations used to designate which CPUs of the system are in various sets of the instance running on the partition.
Figure 18 is a schematic view similar to Figure 17, but which shows an additional set relative to an alternative embodiment of the invention.
Figure 19 is a flowchart illustrating the steps in an illustrative routine followed by an operating system instance as it removes private memory from a system.
Figure 20 is a flowchart illustrating the steps in an illustrative routine followed by an operating system instance as it removes shared memory from a system.
Figure 21 is a memory map of a PFN database in accordance with the invention.
Figure 22 is a flowchart illustrating the steps in an illustrative routine followed by a CPU which is migrating from one partition to another under a "PAL" type migration.
Figure 23 is a flowchart illustrating the steps in an illustrative routine followed by software in a partition to which a CPU is migrating.
Figure 24 is a schematic view of a first partition and a backup partition to which resources of the first partition are migrated upon the occurrence of a failure within the first partition.
Figure 25 is a schematic view of an array of target instance IDs used by a local instance to determine the destination partitions of resources that are migrated out of a partition as part of a controlled shutdown when in which a failure has occurred in the local instance.
Figures 26A-26B, when placed together, form a flowchart that shows the general procedure followed for resource relocation after a failure occurs in an instance of a first partition.
Figure 27 is a flowchart showing the procedure followed by a CPU migrating from an instance within which a failure has occurred.
Figure 28 is a flowchart illustrating the steps followed during initial assignment of permanent ownership of a CPU of the present invention.
Figure 29 is a flowchart illustrating the steps followed during a change of permanent ownership of a CPU of the present invention.
Figures 30A-30C, when placed together, form a flowchart illustrating the steps in an illustrative routine followed by the system when a CPU is migrating under a "HALT" type migration.
Figure 31 is a flowchart illustrating the steps in an illustrative routine followed by the system when a CPU in a halted state is migrated.
Figures 32A-32B, when placed together, form a flowchart illustrating the steps in an illustrative routine followed by the system when a CPU is migrated by deassigning it and subsequently reassigning it. Figures 33A and 33B, when placed together, form a flowchart illustrating the steps in a routine followed by two operating system instances to communicate from one instance to the other using single-bit notification.
Figures 34A and 34B, when placed together, form a flowchart illustrating the steps in a routine followed by two operating system instances to communicate from one instance to the other using packetized data transfer.

### A. OVERALL SYSTEM

A computer platform constructed in accordance with the principles of the present invention is a multi-processor system capable of being partitioned to allow the concurrent execution of multiple instances of operating system software. The system does not require hardware support for the partitioning of its memory, CPUs and I/O subsystems, but some hardware may be used to provide additional hardware assistance for isolating faults, and minimizing the cost of software engineering. The following specification describes the interfaces and data structures required to support the inventive software architecture. The interfaces and data structures described are not meant to imply a specific operating system must be used, or that only a single type of operating system will execute concurrently. Any operating system which implements the software requirements discussed below can participate in the inventive system operation.

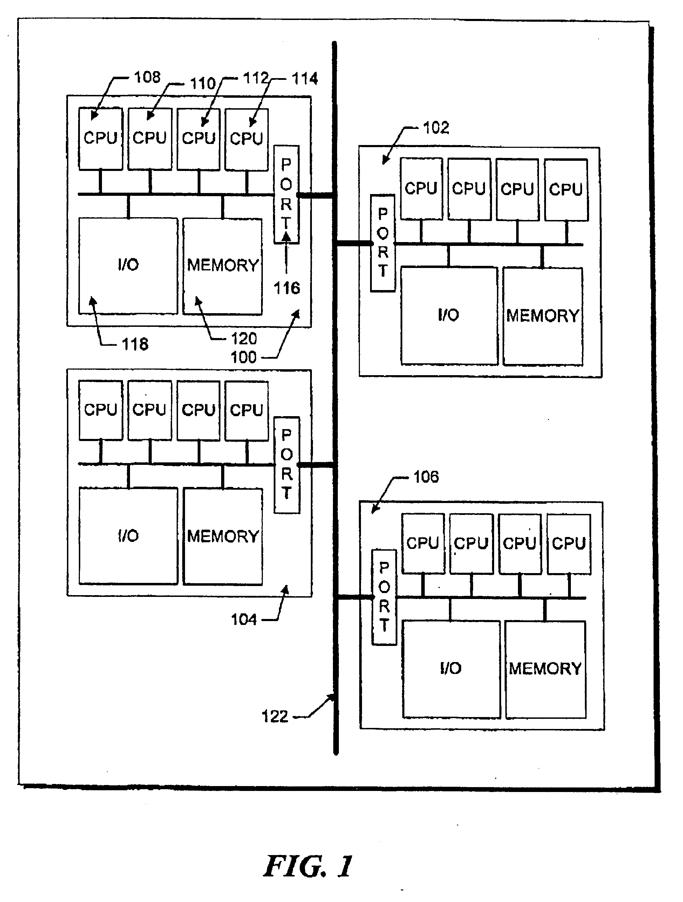

System Building BlocksThe inventive software architecture operates on a hardware platform which incorporates multiple CPUs, memory and I/O hardware. Preferably, a modular architecture such as that shown in Figure 1 is used, although those skilled in the art will understand that other architectures can also be used, which architectures need not be modular. Figure 1 illustrates a computing system constructed of four basic system building blocks (SBBs) 100 - 106. In the illustrative embodiment, each building block, such as block 100, is identical and comprises several CPUs 108 - 114, several memory slots (illustrated collectively as memory 120), an I/O processor 118, and a port 116 which contains a switch (not shown) that can connect the system to another such system. However, in other embodiments, the building blocks need not be identical. Large multiprocessor systems can be constructed by connecting the desired number of system building blocks by means of their ports. Switch technology, rather than bus technology, is employed to connect building block components in order to both achieve the improved bandwidth and to allow for non-uniform memory architectures (NUMA).

In accordance with the principles of the invention, the hardware switches are arranged so that each CPU can address all available memory and I/O ports regardless of the number of building blocks configured as schematically illustrated by line 122. In addition, all CPUs may communicate to any or all other CPUs in all SBBs with conventional mechanisms, such as inter-processor interrupts. Consequently, the CPUs and other hardware resources can be associated solely with software. Such a platform architecture is inherently scalable so that large amounts of processing power, memory and I/O will be available in a single computer.

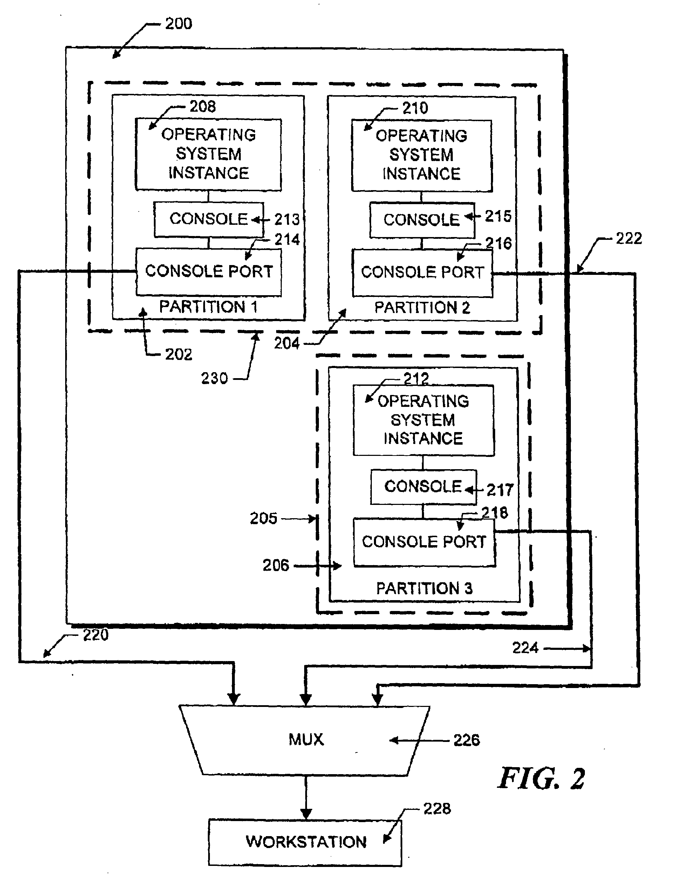

An APMP computer system 200 constructed in accordance with the principles of the present invention from a software view is illustrated in Figure 2. In this system, the hardware components have been allocated to allow concurrent execution of multiple operating system instances 208, 210, 212.In a preferred embodiment, this allocation is performed by a software program called a "console" program, which, as will hereinafter be described in detail, is loaded into memory at power up. Console programs are shown schematically in Figure 2 as programs 213, 215 and 217. The console program may be a modification of an existing administrative program or a separate program which interacts with an operating system to control the operation of the preferred embodiment. The console program does not virtualize the system resources, that is, it does not create any software layers between the running operating systems 208, 210 and 212 and the physical hardware, such as memory and I/O units (not shown in Figure 2.) Nor is the state of the running operating systems 208, 210 and 212 swapped to provide access to the same hardware. Instead, the inventive system logically divides the hardware into partitions. It is the responsibility of operating system instance 208, 210, and 212 to use the resources appropriately and provide coordination of resource allocation and sharing. The hardware platform may optionally provide hardware assistance for the division of resources, and may provide fault barriers to minimize the ability of an operating system to corrupt memory, or affect devices controlled by another operating system copy.

The execution environment for a single copy of an operating system, such as copy 208 is called a "partition" 202, and the executing operating system in partition 202 is called "instance" 208. Each operating system instance is capable of booting and running independently of all other operating system instances in the computer system, and can cooperatively take part in sharing resources between operating system instances as described below.

In order to run an operating system instance, a partition must include a hardware restart parameter block (HWRPB), a copy of a console program, some amount of memory, one or more CPUs, and at least one I/O bus which must have a dedicated physical port for the console. The HWRPB is a configuration block which is passed between the console program and the operating system. Each of console programs 213, 215 and 217, is connected to a console port, shown as ports 214, 216 and 218, respectively. Console ports, such as ports 214, 216 and 218, generally come in the form of a serial line port, or attached graphics, keyboard and mouse options. For the purposes of the inventive computer system, the capability of supporting a dedicated graphics port and associated input devices is not required, although a specific operating system may require it. The base assumption is that a serial port is sufficient for each partition. While a separate terminal, or independent graphics console, could be used to display information generated by each console, preferably the serial lines 220, 222 and 224, can all be connected to a single multiplexer 226 attached to a workstation, PC, or LAT 228 for display of console information.

It is important to note that partitions are not synonymous with system building blocks. For example, partition 202 may comprise the hardware in building blocks 100 and 106 in Figure 1 whereas partitions 204 and 206 might comprise the hardware in building blocks 102 and 104, respectively. Partitions may also include part of the hardware in a building block.

Partitions can be "initialized" or "uninitialized." An initialized partition has sufficient resources to execute an operating system instance, has a console program image loaded, and a primary CPU available and executing. An initialized partition may be under control of a console program, or may be executing an operating system instance. In an initialized state, a partition has full ownership and control of hardware components assigned to it and only the partition itself may release its components.

In accordance with the principles of the invention, resources can be reassigned from one initialized partition to another. Reassignment of resources can only be performed by the initialized partition to which the resource is currently assigned. When a partition is in an uninitialized state, other partitions may reassign its hardware components and may delete it.

An uninitialized partition is a partition which has no primary CPU executing either under control of a console program or an operating system. For example, a partition may be uninitialized due to a lack of sufficient resources at power up to run a primary CPU, or when a system administrator is reconfiguring the computer system. When in an uninitialized state, a partition may reassign its hardware components and may be deleted by another partition. Unassigned resources may be assigned by any partition.Partitions may be organized into "communities" which provide the basis for grouping separate execution contexts to allow cooperative resource sharing. Partitions in the same community can share resources. Partitions that are not within the same community cannot share resources. Resources may only be manually moved between partitions that are not in the same community by the system administrator by de-assigning the resource (and stopping usage), and manually reconfiguring the resource. Communities can be used to create independent operating system domains, or to implement user policy for hardware usage. In Figure 2, partitions 202 and 204 have been organized into community 230. Partition 206 may be in its own community 205. Communities can be constructed using the configuration tree described below and may be enforced by hardware.

### The Console Program

When a computer system constructed in accordance with the principles of the present invention is enabled on a platform, multiple HWRPB's must be created, multiple console program copies must be loaded, and system resources must be assigned in such a way that each HWRPB is associated with specific components of the system. To do this, the first console program to run will create a configuration tree structure in memory which represents all of the hardware in the system. The tree will also contain the software partitioning information, and the assignments of hardware to partitions and is discussed in detail below.More specifically, when the APMP system is powered up, a CPU will be selected as a primary CPU in a conventional manner by hardware which is specific to the platform on which the system is running. The primary CPU then loads a copy of a console program into memory. This console copy is called a "master" console" program. The primary CPU initially operates under control of the master console program to perform testing and checking assuming that there is a single system which owns the entire machine. Subsequently, a set of environment variables are loaded which define the system partitions. Finally, the master console creates and initializes the partitions based on the environment variables. In this latter process the master console operates to create the configuration tree, to create additional HWRPB data blocks, to load the additional console program copies, and to start the CPUs on the alternate HWRPBs. Each partition then has an operating system instance running on it, which instance cooperates with a console program copy also running in that partition. In an unconfigured APMP system, the master console program will initially create a single partition containing the primary CPU, a minimum amount of memory, and a physical system administrator's console selected in a platform-specific way. Console program commands will then allow the system administrator to create additional partitions, and configure I/O buses, memory, and CPUs for each partition.

After associations of resources to partitions have been made by the console program, the associations are stored in non-volatile RAM to allow for an automatic configuration of the system during subsequent boots. During subsequent boots, the master console program must validate the current configuration with the stored configuration to handle the removal and addition of new components. Newly-added components are placed into an unassigned state, until they are assigned by the system administrator. If the removal of a hardware component results in a partition with insufficient resources to run an operating system, resources will continue to be assigned to the partition, but it will be incapable of running an operating system instance until additional new resources are allocated to it.As previously mentioned, the console program communicates with an operating system instance by means of an HWRPB which is passed to the operating system during operating system boot up. The fundamental requirements for a console program are that it should be able to create multiple copies of HWRPBs and itself. Each HWRPB copy created by the console program will be capable of booting an independent operating system instance into a private section of memory and each operating system instance booted in this manner can be identified by a unique value placed into the HWRPB. The value indicates the partition, and is also used as the operating system instance ID.

In addition, the console program is configured to provide a mechanism to remove a CPU from the available CPUs within a partition in response to a request by an operating system running in that partition. Each operating system instance must be able to shutdown, halt, or otherwise crash in a manner that control is passed to the console program. Conversely, each operating system instance must be able to reboot into an operational mode, independently of any other operating system instance.

Each HWRPB which is created by a console program will contain a CPU slot-specific database for each CPU that is in the system, or that can be added to the system without powering the entire system down. Each CPU that is physically present will be marked "present", but only CPUs that will initially execute in a specific partition will be marked "available" in the HWRPB for the partition. The operating system instance running on a partition will be capable of recognizing that a CPU may be available at some future time by a present (PP) bit in a per-CPU state flag fields of the HWRPB, and can build data structures to reflect this. When set, the available (PA) bit in the per-CPU state flag fields indicates that the associated CPU is currently associated with the partition, and can be invited to join SMP operation.

### The Configuration Tree

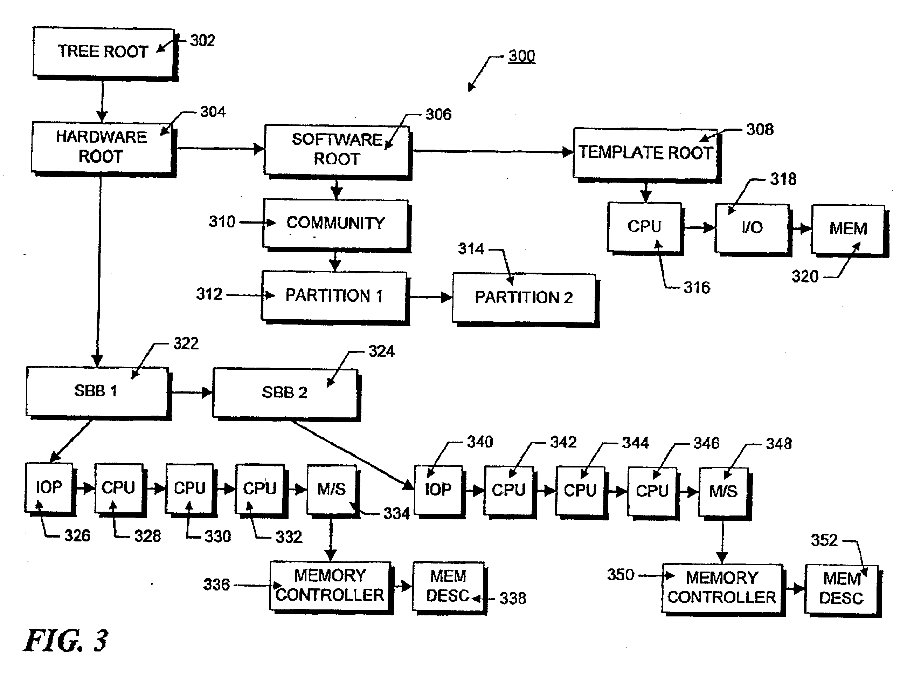

As previously mentioned, the master console program creates a configuration tree which represents the hardware configuration, and the assignment of each component in the system to each partition. Each console program then identifies the configuration tree to its associated operating system instance by placing a pointer to the tree in the HWRPB.Referring to Figure 3, the configuration tree 300 represents the hardware components in the system, the platform constraints and minimums, and the software configuration. The master console program builds the tree using information discovered by probing the hardware, and from information stored in non-volatile RAM which contains configuration information generated during previous initializations.

The master console may generate a single copy of the tree which copy is shared by all operating system instances, or it may replicate the tree for each instance. A single copy of the tree has the disadvantage that it can create a single point of failure in systems with independent memories. However, platforms that generate multiple tree copies require the console programs to be capable of keeping changes to the tree synchronized.

The configuration tree comprises multiple nodes including root nodes, child nodes and sibling nodes. Each node is formed of a fixed header and a variable length extension for overlaid data structures. The tree starts with a tree root node 302 representing the entire system box, followed by branches that describe the hardware configuration (hardware root node 304), the software configuration (software root node 306), and the minimum partition requirements (template root node 308.) In Figure 3, the arrows represent child and sibling relationships. The children of a node represent component parts of the hardware or software configuration. Siblings represent peers of a component that may not be related except by having the same parent. Nodes in the tree 300 contain information on the software communities and operating system instances, hardware configuration, configuration constraints, performance boundaries and hot-swap capabilities. The nodes also provide the relationship of hardware to software ownership, or the sharing of a hardware component.The nodes are stored contiguously in memory and the address offset from the tree root node 302 of the tree 300 to a specific node forms a "handle" which may be used from any operating system instance to unambiguously identify the same component on any operating system instance. In addition, each component in the inventive computer system has a separate ID. This may illustratively be a 64-bit unsigned value. The ID must specify a unique component when combined with the type and subtype values of the component. That is, for a given type of component, the ID must identify a specific component. The ID may be a simple number, for example the CPU ID, it may be some other unique encoding, or a physical address. The component ID and handle allow any member of the computer system to identify a specific piece of hardware or software. That is, any partition using either method of specification must be able to use the same specification, and obtain the same result.

As described above, the inventive computer system is composed of one or more communities which, in turn, are composed of one or more partitions. By dividing the partitions across the independent communities, the inventive computer system can be placed into a configuration in which sharing of devices and memory can be limited. Communities and partitions will have IDs which are densely packed. The hardware platform will determine the maximum number of partitions based on the hardware that is present in the system, as well as having a platform maximum limit. Partition and community IDs will never exceed this value during runtime. IDs will be reused for deleted partitions and communities. The maximum number of communities is the same as the maximum number of partitions. In addition, each operating system instance is identified by a unique instance identifier, for example a combination of the partition ID plus an incarnation number.

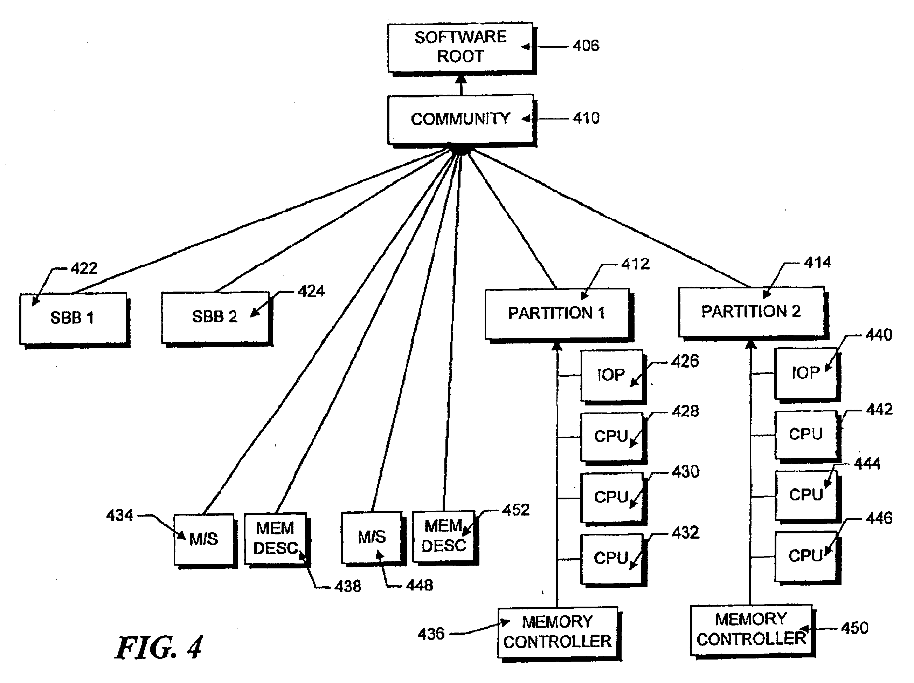

The communities and partitions are represented by a software root node 306, which has community node children (of which community node 310 is shown), and partition node grandchildren (of which two nodes, 312 and 314, are shown.)The hardware components are represented by a hardware root node 304 which contains children that represent a hierarchical representation of all of the hardware currently present in the computer system. "Ownership" of a hardware component is represented by a handle in the associated hardware node which points to the appropriate software node (310, 312 or 314.) These handles are illustrated in Figure 4 which will be discussed in more detail below. Components that are owned by a specific partition will have handles that point to the node representing the partition. Hardware which is shared by multiple partitions (for example, memory) will have handles that point to the community to which sharing is confined. Un-owned hardware will have a handle of zero (representing the tree root node 302).

Hardware components place configuration constraints on how ownership may be divided. A "config" handle in the configuration tree node associated with each component determines if the component is free to be associated anywhere in the computer system by pointing to the hardware root node 304. However, some hardware components may be bound to an ancestor node and must be configured as part of this node. Examples of this are CPUs, which may have no constraints on where they execute, but which are a component part of a system building block (SBB), such as SBBs 322 or 324. In this case, even though the CPU is a child of the SBB, its config handle will point to the hardware root node 304. An I/O bus, however, may not be able to be owned by a partition other than the partition that owns its I/O processor. In this case, the configuration tree node representing the I/O bus would have a config handle pointing to the I/O processor. Because the rules governing hardware configuration are platform specific, this information is provided to the operating system instances by the config handle. Each hardware component also has an "affinity" handle. The affinity handle is identical to the config handle, except that it represents a configuration which will obtain the best performance of the component. For example, a CPU or memory may have a config handle which allows it to be configured anywhere in the computer system (it points to the hardware root node 304), however, for optimal performance, the CPU or memory should be configured to use the System Building Block of which they are a part. The result is that the config pointer points to the hardware root node 304, but the affinity pointer points to an SBB node such as node 322 or node 324. The affinity of any component is platform specific, and determined by the firmware. Firmware may use this information when asked to form "optimal" automatic configurations.

Each node also contains several flags which indicate the type and state of the node. These flags include a node_hotswap flag which indicates that the component represented is a "hot swappable" component and can be powered down independently of its parent and siblings. However, all children of this node must power down if this component powers down. If the children can power down independently of this component, they must also have this bit set in their corresponding nodes. Another flag is a node_unavailable flag which, when set, indicates that the component represented by the node is not currently available for use. When a component is powered down (or is never powered up) it is flagged as unavailable.

Two flags, node_hardware and node_template, indicate the type of node. Further flags, such as node_initialized and node_cpu_primary may also be provided to indicate whether the node represents a partition which has been initialized or a CPU that is currently a primary CPU.

The configuration tree 300 may extend to the level of device controllers, which will allow the operating system to build bus and device configuration tables without probing the buses. However, the tree may also end at any level, if all components below it cannot be configured independently. System software will still be required to probe for bus and device information not provided by the tree.

The console program implements and enforces configuration constraints, if any, on each component of the system. In general, components are either assignable without constraints (for example, CPUs may have no constraints), or are configurable only as a part of another component (a device adapter, for example, may be configurable only as a part of its bus). A partition which is, as explained above, a grouping of CPUs, memory, and I/O devices into a unique software entity also has minimum requirements. For example, the minimum hardware requirements for a partition are at least one CPU, some private memory (platform dependent minimum, including console memory) and an I/O bus, including a physical, non-shared, console port.

The minimal component requirements for a partition are provided by the information contained in the template root node 308. The template root node 308 contains nodes, 316, 318 and 320, representing the hardware components that must be provided to create a partition capable of execution of a console program and an operating system instance. Configuration editors can use this information as the basis to determine what types, and how many resources must be available to form a new partition.

During the construction of a new partition, the template subtree will be "walked", and, for each node in the template subtree, there must be a node with the same type and subtype owned by the new partition so that it will be capable of loading a console program and booting an operating system instance. If there are more than one node of the same type and subtype in the template tree, there must also be multiple nodes in the new partition. The console program will use the template to validate that a new partition has the minimum requirements prior to attempting to load a console program and initialize operation.

The following is a detailed example of a particular implementation of configuration tree nodes. It is intended for descriptive purposes only and is not intended to be limiting. Each HWRPB must point to a configuration tree which provides the current configuration, and the assignments of components to partitions. A configuration pointer (in the CONFIG field) in the HWRPB is used to point to the configuration tree. The CONFIG field points to a 64-byte header containing the size of the memory pool for the tree, and the initial checksum of the memory. Immediately following the header is the root node of the tree. The header and root node of the tree will be page aligned.

The total size in bytes of the memory allocated for the configuration tree is located in the first quadword of the header. The size is guaranteed to be in multiples of the hardware page size. The second quadword of the header is reserved for a checksum. In order to examine the configuration tree, an operating system instance maps the tree into its local address space. Because an operating system instance may map this memory with read access allowed for all applications, some provision must be made to prevent a non-privileged application from gaining access to console data to which it should not have access. Access may be restricted by appropriately allocating memory. For example, the memory may be page aligned and allocated in whole pages. Normally, an operating system instance will map the first page of the configuration tree, obtain the tree size, and then remap the memory allocated for configuration tree usage. The total size may include additional memory used by the console for dynamic changes to the tree.

Preferably, configuration tree nodes are formed with fixed headers, and may optionally contain type-specific information following the fixed portion. The size field contains the full length of the node, nodes are illustratively allocated in multiples of 64-bytes and padded as needed. The following description defines illustrative fields in the fixed header for a node:

```
 typedef struct_gct_node {
          unsigned char             type;
          unsigned char             subtype;
          uint16                    size;
          GCT_HANDLE                owner;
          GCT_HANDLE                current_owner;
          GCT_ID                    id;
          union {
             uint64                 node_flags;
             struct {
                unsigned            node_hardware          : 1;
                unsigned            node_hotswap           : 1;
                unsigned            node_unavailable       : 1;
                unsigned            node_hw_template       : 1;
                unsigned            node_initialized       : 1;
                unsigned            node_cpu_primary       : 1;
 
          #define NODE_HARDWARE                0x001
          #define NODE_HOTSWAP                 0x002
          #define NODE_UNAVAILABLE             0x004
          #define NODE_HW_TEMPLATE             0x008
          #define NODE_INITIALIZED             0x010
          #define NODE_PRIMARY                 0x020
 
             } flag_bits;
          } flag_union;
          GCT_HANDLE config;
          GCT_HANDLE affinity;
          GCT_HANDLE parent;
          GCT_HANDLE next_sib;
          GCT_HANDLE prev_sib;
          GCT_HANDLE child;
          GCT_HANDLE reserved;
          uint32 magic
          }GCT_NODE;
```

In the above definition the type definitions "uint" are unsigned integers with the appropriate bit lengths. As previously mentioned, nodes are located and identified by a handle (identified by the typedef GCT_HANDLE in the definition above). An illustrative handle is a signed 32-bit offset from the base of the configuration tree to the node. The value is unique across all partitions in the computer system. That is, a handle obtained on one partition must be valid to lookup a node, or as an input to a console callback, on all partitions. The magic field contains a predetermined bit pattern which indicates that the node is actually a valid node.

The tree root node represents the entire system. Its handle is always zero. That is, it is always located at the first physical location in the memory allocated for the configuration tree following the config header. It has the following definition:

```
 typedef struct_gct_root_node {
         GCT_NODE         hd;
         uint64           lock;
         uint64           transient_level;
         uint64           current_level;
         uint64           console_req;
         uint64           min_alloc;
         uint64           min_align;
         uint64           base_alloc;
         uint64           base_align;
         uint64           max_phys_address;
         uint64           mem_size;
         uint64           platform_type;
         int32            platform_name;
         GCT_HANDLE       primary_instance;
         GCT_HANDLE       first_free;
         GCT_HANDLE       high_limit;
         GCT_HANDLE       lookaside;
         GCT_HANDLE       available;
         uint32           max_partition;
         int32            partitions;
         int32            communities;
         uint32           max_platform_partition;
         uint32           max_fragments;
         uint32           max_desc;
         char        APMP_id[16];
         char        APMP_id_pad [4];
         int32            bindings;
 } GCT_ROOT_NODE;
```

The fields in the root node are defined as follows:
lock
   This field is used as a simple lock by software wishing to inhibit changes to the structure of the tree, and the software configuration. When this value is -1 (all bits on) the tree is unlocked; when the value is >=0 the tree is locked. This field is modified using atomic operations. The caller of the lock routine passes a partition ID which is written to the lock field. This can be used to assist in fault tracing, and recovery during crashes.
transient_level
   This field is incremented at the start of a tree update.
current_level
   This field is updated at the completion of a tree update.
console_req
   This field specifies the memory required in bytes for the console in the base memory segment of a partition.
min_alloc
   This field holds the minimum size of a memory fragment, and the allocation unit (fragments size must be a multiple of the allocation). It must be a power of 2.
min_align
   This field holds the alignment requirements for a memory fragment. It must be a power of 2.
base_alloc
   This field specifies the minimum memory in bytes (including console_req) needed for the base memory segment for a partition. This is where the console, console structures, and operating system will be loaded for a partition. It must be greater or equal to minAlloc and a multiple of minAlloc.
base_align
   This field holds the alignment requirement for the base memory segment of a partition. It must be a power of 2, and have an alignment of at least min_align.
max_phys_address
   The field holds the calculated largest physical address that could exist on the system, including memory subsystems that are not currently powered on and available.
mem_size
   This field holds the total memory currently in system.
platform_type
   This field stores the type of platform taken from a field in the HWRPB. platform_name
   This field holds an integer offset from the base of the tree root node to a string representing the name of the platform.
primary_instance
   This field stores the partition ID of the first operating system instance. first_free
   This field holds the offset from the tree root node to the first free byte of memory pool used for new nodes.
high_limit
   This field holds the highest address at which a valid node can be located within the configuration tree. It is used by callbacks to validate that a handle is legal.
lookaside
   This field is the handle of a linked list of nodes that have been deleted, and that may be reclaimed. When a community or partition are deleted, the node is linked into this list, and creation of a new partition or community will look at this list before allocating from free pool.
available
   This field holds the number of bytes remaining in the free pool pointed to by the first_free field.
max_partitions
   This field holds the maximum number of partitions computed by the platform based on the amount of hardware resources currently available.
partitions
   This field holds an offset from the base of the root node to an array of handles. Each partition ID is used as an index into this array, and the partition node handle is stored at the indexed location. When a new partition is created, this array is examined to find the first partition ID which does not have a corresponding partition node handle and this partition ID is used as the ID for the new partition.
communities
   This field also holds an offset from the base of the root node to an array of handles. Each community ID is used an index into this array, and a community node handle is stored in the array. When a new community is created, this array is examined to find the first community ID which does not have a corresponding community node handle and this community ID is used as the ID for the new community. There cannot be more communities than partitions, so the array is sized based on the maximum number of partitions.
max_platform_partition
   This field holds the maximum number of partitions that can simultaneously exist on the platform, even if additional hardware is added (potentially inswapped).
max_fragments
   This field holds a platform defined maximum number of fragments into which a memory descriptor can be divided. It is used to size the array of fragments in the memory descriptor node.
max_desc
   This field holds the maximum number of memory descriptors for the platform. APMP_id
   This field holds a system ID set by system software and saved in non-volatile RAM.
APMP_id_pad
   This field holds padding bytes for the APMP ID.
bindings
   This field holds an offset to an array of "bindings" Each binding entry describes a type of hardware node, the type of node the parent must be, the configuration binding, and the affinity binding for a node type. Bindings are used by software to determine how node types are related and configuration and affinity rules.

A community provides the basis for the sharing of resources between partitions. While a hardware component may be assigned to any partition in a community, the actual sharing of a device, such as memory, occurs only within a community. The community node 310 contains a pointer to a control section, called an APMP database, which allows the operating system instances to control access and membership in the community for the purpose of sharing memory and communications between instances. The APMP database and the creation of communities are discussed in detail below. The configuration ID for the community is a signed 16-bit integer value assigned by the console program. The ID value will never be greater than the maximum number of partitions that can be created on the platform.

A partition node, such as node 312 or 314, represents a collection of hardware that is capable of running an independent copy of the console program, and an independent copy of an operating system. The configuration ID for this node is a signed 16-bit integer value assigned by the console. The ID will never be greater than the maximum number of partitions that can be created on the platform. The node has the definition:

```
 typedef struct_gct_partition_node {
         GCT_NODE          hd;
         uint64            hwrpb;
         uint64            incarnation;
         uint64            priority;
         int32             os_type;
         uint32            partition_reserved_1;
         uint64            instance_name_format;
         char              instance_name[128];
 } GCT_PARTITION_NODE;
```

The defined fields have the definitions:
hwrpb
   This field holds the physical address of the hardware restart parameter block for this partition. To minimize changes to the HWRPB, the HWRPB does not contain a pointer to the partition, or the partition ID. Instead, the partition nodes contain a pointer to the HWRPB. System software can then determine the partition ID of the partition in which it is running by searching the partition nodes for the partition which contains the physical address of its HWRPB.
incarnation
   This field holds a value which is incremented each time the primary CPU of the partition executes a boot or restart operation on the partition.
priority
   This field holds a partition priority.
os_type
   This field holds a value which indicates the type of operating system that will be loaded in the partition.
partition_reserved_1
   This field is reserved for future use.
instance_name_format
   This field holds a value that describes the format of the instance name string. instance_name
   This field holds a formatted string which is interpreted using the instance_name_format field. The value in this field provides a high-level path name to the operating system instance executing in the partition. This field is loaded by system software and is not saved across power cycles. The field is cleared at power up and at partition creation and deletion.

A System Building Block node, such as node 322 or 324, represents an arbitrary piece of hardware, or conceptual grouping used by system platforms with modular designs such as that illustrated in Figure 2. A QBB (Quad Building Block) is a specific example of an SBB and corresponds to units such as units 100, 102, 104 and 106 in Figure 1. Children of the SBB nodes 322 and 324 include input/output processor nodes 326 and 340.

CPU nodes, such as nodes 328-332 and 342-346, are assumed to be capable of operation as a primary CPU for SMP operation. In the rare case where a CPU is not primary capable, it will have a SUBTYPE code indicating that it cannot be used as a primary CPU in SMP operation. This information is critical when configuring resources to create a new partition. The CPU node will also carry information on where the CPU is currently executing. The primary for a partition will have the NODE_CPU_PRIMARY flag set in the NODE_FLAGS field. The CPU node has the following definition:

```
 typedef struct_gct_cpu_node {
            GCT_NODE hd;
 } GCT_CPU_NODE;
```

A memory subsystem node, such as node 334 or 348, is a "pseudo" node that groups together nodes representing the physical memory controllers and the assignments of the memory that the controllers provide. The children of this node consist of one or more memory controller nodes (such as nodes 336 and 350) which the console has configured to operate together (interleaved), and one or more memory descriptor nodes (such as nodes 338 and 352) which describe physically contiguous ranges of memory.

A memory controller node (such as nodes 336 or 350) is used to express a physical hardware component, and its owner is typically the partition which will handle errors, and initialization. Memory controllers cannot be assigned to communities, as they require a specific operating system instance for initialization, testing and errors. However, a memory description, defined by a memory descriptor node, may be split into "fragments" to allow different partitions or communities to own specific memory ranges within the memory descriptor. Memory is unlike other hardware resources in that it may be shared concurrently, or broken into "private" areas. Each memory descriptor node contains a list of subset ranges that allow the memory to be divided among partitions, as well as shared between partitions (owned by a community). A memory descriptor node (such as nodes 338 or 352) is defined as:

```
 typedef struct_gct_mem_desc_node {
       GCT_NODE          hd;
       GCT_MEM_INFO      mem_info;
       int32             mem_frag;
 }GCT_MEM_DESC_NODE;
```

The mem_info structure has the following definition:

```
 typedef struct_gct_mem_info {
       uint64       base_pa;
       uint64       base_size;
       uint32       desc_count;
       uint32       info_fill;
 }GCT_MEM_INFO:
```

The mem_frag field holds an offset from the base of the-memory descriptor node to an array of GCT_MEM_DESC structures which have the definition:

```
 typedef struct_gct_nem_desc {
       uint64                pa;
       unit64                size;
       GCT_HANDLE                   mem_owner;
       GCT_HANDLE                   mem_current_owner;
       union {
             uint32          mem_flags;
             struct {
                    unsigned       mem_console : 1;
                    unsigned       mem_private : 1;
                    unsigned       mem_shared  : 1;
                    unsigned       base        : 1;
 
       #define CGT_MEM_CONSOLE     0x1
       #define CGT_MEM_PRIVATE     0x2
       #define CGT_MEM_SHARED      0x4
       #define CGT_MEM_CONSOLE     0x8
 
            } flag_bits;
       }    flag_union;
       uint32 mem_fill;
 } GCT_MEM_DESC;
```

The number of fragments in a memory description node (nodes 338 or 352) is limited by platform firmware. This creates an upper bound on memory division, and limits unbounded growth of the configuration tree. Software can determine the maximum number of fragments from the max_fragments field in the tree root node 302 (discussed above), or by calling an appropriate console callback function to return the value. Each fragment can be assigned to any partition, provided that the config binding, and the ownership of the memory descriptor and memory subsystem nodes allow it. Each fragment contains a base physical address, size, and owner field, as well as flags indicating the type of usage.

To allow shared memory access, the memory subsystem parent node, and the memory descriptor node must be owned by a community. The fragments within the memory descriptor may then be owned by the community (shared) or by any partition within the community.

Fragments can have minimum allocation sizes and alignments provided in the tree root node 302. The base memory for a partition (the fragments where the console and operating system will be loaded) may have a greater allocation and alignment than other fragments (see the tree root node definition above). If the owner field of the memory descriptor node is a partition, then the fragments can only be owned by that partition.

Figure 4 illustrates the configuration tree shown in Figure 3 when it is viewed from a perspective of ownership. The console program for a partition relinquishes ownership and control of the partition resources to the operating system instance running in that partition when the primary CPU for that partition starts execution. The concept of "ownership" determines how the hardware resources and CPUs are assigned to software partitions and communities. The configuration tree has ownership pointers illustrated in Figure 4 which determine the mapping of hardware devices to software such as partitions (exclusive access) and communities (shared access). An operating system instance uses the information in the configuration tree to determine to which hardware resources it has access and reconfiguration control.

Passive hardware resources which have no owner are unavailable for use until ownership is established. Once ownership is established by altering the configuration tree, the operating system instances may begin using the resources. When an instance makes an initial request, ownership can be changed by causing the owning operating system to stop using a resource or by a console program taking action to stop using a resource in a partition where no operating system instance is executing. The configuration tree is then altered to transfer ownership of the resource to another operating system instance. The action required to cause an operating system to stop using a hardware resource is operating system specific, and may require a reboot of the operating system instances affected by the change.

To manage the transition of a resource from an owned and active state, to a unowned and inactive state, two fields are provided in each node of the tree. The owner field represents the owner of a resource and is loaded with the handle of the owning software partition or community. At power up of an APMP system, the owner fields of the hardware nodes are loaded from the contents of non-volatile RAM to establish an initial configuration.

To change the owner of a resource, the handle value is modified in the owner field of the hardware component, and in the owner fields of any descendants of the hardware component which are bound to the component by their config handles. The current_owner field represents the current user of the resource. When the owner and current_owner fields hold the same non-zero value, the resource is owned and active. Only the owner of a resource can de-assign the resource (set the owner field to zero). A resource that has null owner and current_owner fields is unowned, and inactive. Only resources which have null owner and current_owner fields may be assigned to a new partition or community.

When a resource is de-assigned, the owner may decide to de-assign the owner field, or both the owner and current_owner fields. The decision is based on the ability of the owning operating system instance running in the partition to discontinue the use of the resource prior to de-assigning ownership. In the case where a reboot is required to relinquish ownership, the owner field is cleared, but the current_owner field is not changed. When the owning operating system instance reboots, the console program can clear any current_owner fields for resources that have no owner during initialization.

During initialization, the console program will modify the curren_owner field to match the owner field for any node of which it is the owner, and for which the current_owner field is null. System software should only use hardware of which it is the current owner. In the case of a de-assignment of a resource which is owned by a community, it is the responsibility of system software to manage the transition between states. In some embodiments, a resource may be loaned to another partition. In this condition, the owner and current_owner fields are both valid, but not equal. The following table summarizes the possible resource states and the values of the owner and current_owner fields:

**TABLE 1**

| Owner field value | current_owner field value | Resource State |
|---|---|---|
| None | none | unowned, and inactive |
| | | |
| None | valid | unowned, but still active |
| | | |
| Valid | none | owned, not yet active |
| | | |
| Valid | equal to owner | owned and active |
| | | |
| Valid | is not equal to owner | loaned |

Because CPUs are active devices, and sharing of CPUs means that a CPU could be executing in the context of a partition which may not be its "owner", ownership of a CPU is different from ownership of a passive resource. The CPU node in the configuration tree provides two fields that indicate which partition a CPU is nominally "owned" by, and in which partition the CPU is currently executing. The owner field contains a value which indicates the nominal ownership of the CPU, or more specifically, the partition in which the CPU will initially execute at system power up.

Until an initial ownership is established (that is, if the owner field is unassigned), CPUs are placed into a HWRPB context decided by the master console, but the HWRPB available bit for the CPU will not be set in any HWRPB. This combination prevents the CPU from joining any operating system instance in SMP operation. When ownership of a CPU is established (the owner field is filled in with a valid partition handle), the CPU will migrate, if necessary, to the owning partition, set the available bit in the HWRPB associated with that partition, and request to join SMP operation of the instance running in that partition, or join the console program in SMP mode. The combination of the present an available bits in the HWRPB tell the operating system instance that the CPU is available for use in SMP operation, and the operating system instance may use these bits to build appropriate per-CPU data structures, and to send a message to the CPU to request it to join SMP operation.

When a CPU sets the available bit in an HWRPB, it also enters a value into the current_owner field in its corresponding CPU node in the configuration tree. The current_owner field value is the handle of the partition in which the CPU has set the active HWRPB bit and is capable of joining SMP operation. The current_owner field for a CPU is only set by the console program. When a CPU migrates from one partition to another partition, or is halted into an unassigned state, the current_owner field is cleared (or changed to the new partition handle value) at the same time that the available bit is cleared in the HWRPB. The current_owner field should not be written to directly by system software, and only reflects which HWRPB has the available bit set for the CPU.

During runtime, an operating system instance can temporarily "loan" a CPU to another partition without changing the nominal ownership of the CPU. The traditional SMP concept of ownership using the HWRPB present and available bits is used to reflect the current execution context of the CPU by modifying the HWRPB and the configuration tree in atomic operations. The current_owner field can further be used by system software in one of the partitions to determine in which partition the CPU is currently executing (other instances can determine the location of a particular CPU by examining the configuration tree.)

It is also possible to de-assign a CPU and return it into a state in which the available bit is not set in any HWRPB, and the current_owner field in the configuration tree node for the CPU is cleared. This is accomplished by halting the execution of the CPU and causing the console program to clear the owner field in the configuration tree node, as well as the current_owner field and the available HWRPB bit. The CPU will then execute in console mode and poll the owner field waiting for a valid partition handle to be written to it. System software can then establish a new owner, and the CPU begin execution in the new partition.

Illustrative ownership pointers-are illustrated in Figure 4 by arrows. Each of the nodes in Figure 4 that corresponds to a similar node in Figure 3 is given a corresponding number. For example, the software root node denoted in Figure 3 as node 306 is denoted as node 406 in Figure 4. As shown in Figure 4, the community 410 is "owned" by the software root 406. Likewise, the system building blocks 1 and 2 (422 and 425) are owned by the community 410. Similarly, partitions 412 and 414 are also owned by the community 410.

Partition 412 owns CPUs 428-432 and the I/O processor 426. The memory controller 436 is also a part of partition 1 (412). In a like manner, partition 2 (414) owns CPUs 442-446, I/O processor 440 and memory controller 450.

The common or shared memory in the system is comprised of memory subsystems 434 and 448 and memory descriptors 438 and 452. These are owned by the community 410. Thus, Figure 4 describes the layout of the system as it would appear to the operating system instances.

### Operating System Characteristics

As previously mentioned, the illustrative computer system can operate with several different operating systems in different partitions. However, conventional operating systems may need to be modified in some aspects in order to make them compatible with the inventive system, depending on how the system is configured. Some sample modifications for the illustrative embodiment are listed below:
1. Instances may need to be modified to include a mechanism for choosing a "primary" CPU in the partition to run the console and be a target for communication from other instances. The selection of a primary CPU can be done in a conventional manner using arbitration mechanisms or other conventional devices.
2. Each instance may need modifications that allow it to communicate and cooperate with the console program which is responsible for creating a configuration data block that describes the resources available to the partition in which the instance is running. For example, the instance should not probe the underlying hardware to determine what resources are available for usage by the instance. Instead, if it is passed a configuration data block that describes what resources that instance is allowed to access, it will need to work with the specified resources.
3. An instance may need to be capable of starting at an arbitrary physical address and may not be able to reserve any specific physical address in order to avoid conflicting with other operating systems running at that particular address.
4. An instance may need to be capable of supporting multiple arbitrary physical holes in its address space, if it is part of a system configuration in which memory is shared between partitions. In addition, an instance may need to deal with physical holes in its address space in order to support "hot inswap" of memory.
5. An instance may need to pass messages and receive notifications that new resources are available to partitions and instances. More particularly, a protocol is needed to inform an instance to search for a new resource. Otherwise, the instance may never realize that the resource has arrived and is ready for use.
6. An instance may need to be capable of running entirely within its "private memory" if it is used in a system where instances do not share memory. Alternatively, an instance may need to be capable of using physical "shared memory" for communicating or sharing data with other instances running within the computer if the instance is part of a system in which memory is shared. In such a shared memory system, an instance may need to be capable of mapping physical "shared memory" as identified in the configuration tree into its virtual address space, and the virtual address spaces of the "processes" running within that operating system instance.
7. Each instance may need some mechanism to contact another CPU in the computer system in order to communicate with it.
8. An instance may also need to be able to recognize other CPUs that are compatible with its operations, even if the CPUs are not currently assigned to its partition. For example, the instance may need to be able to ascertain CPU parameters, such as console revision number and clock speed, to determine whether it could run with that CPU, if the CPU was re-assigned to the partition in which the instance is running.

### Changing the Configuration Tree

Each console program provides a number of callback functions to allow the associated operating system instance to change the configuration of the APMP system, for example, by creating a new community or partition, or altering the ownership of memory fragments. In addition, other callback functions provide the ability to remove a community, or partition, or to start operation on a newly-created partition.

However, callback functions do not cause any changes to take place on the running operating system instances. Any changes made to the configuration tree must be acted upon by each instance affected by the change. The type of action that must take place in an instance when the configuration tree is altered is a function of the type of change, and the operating system instance capabilities. For example, moving an input/output processor from one partition to another may require both partitions to reboot. Changing the memory allocation of fragments, on the other hand, might be handled by an operating system instance without the need for a reboot.

Configuration of an APMP system entails the creation of communities and partitions, and the assignment of unassigned components. When a component is moved from one partition to another, the current owner removes itself as owner of the resource and then indicates the new owner of the resource. The new owner can then use the resource. When an instance running in a partition releases a component, the instance must no longer access the component. This simple procedure eliminates the complex synchronization needed to allow blind stealing of a component from an instance, and possible race conditions in booting an instance during a reconfiguration.

Once initialized, configuration tree nodes will never be deleted or moved, that is, their handles will always be valid. Thus, hardware node addresses may be cached by software. Callback functions which purport to delete a partition or a community do not actually delete the associated node, or remove it from the tree, but instead flag the node as UNAVAILABLE, and clear the ownership fields of any hardware resource that was owned by the software component.

In order to synchronize changes to the configuration tree, the root node of the tree maintains two counters (transient_level and current_level). The transient_level counter is incremented at the start of an update to the tree, and the current_level counter is incremented when the update is complete. Software may use these counters to determine when a change has occurred, or is occurring to the tree. When an update is completed by a console, an interrupt can be generated to all CPUs in the APMP system. This interrupt can be used to cause system software to update its state based on changes to the tree.

### Creation of an APMP Computer System

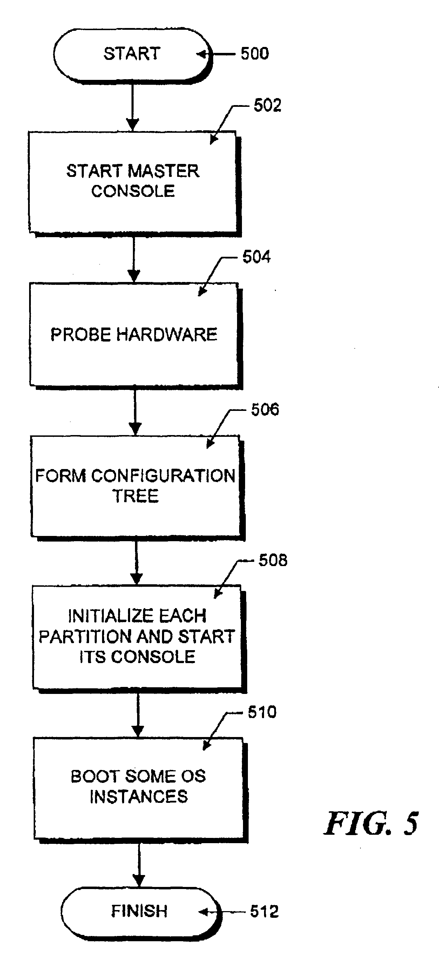

Figure 5 is a flowchart that illustrates an overview of the formation of the illustrative adaptively-partitioned, multi-processor (APMP) computer system. The routine starts in step 500 and proceeds to step 502 where a master console program is started. If the APMP computer system is being created on power up, the CPU on which the master console runs is chosen by a predetermined mechanism, such as arbitration, or another hardware mechanism. If the APMP computer system is being created on hardware that is already running, a CPU in the first partition that tries to join the (non-existent) system runs the master console program, as discussed below.

Next, in step 504, the master console program probes the hardware and creates the configuration tree in step 506 as discussed above. If there is more than one partition in the APMP system on power up, each partition is initialized and its console program is started (step 508).

Finally, an operating system instance is booted in at least one of the partitions as indicated in step 510. The first operating system instance to boot creates an APMP database and fills in the entries as described below. APMP databases store information relating to the state of active operating system instances in the system. The routine then finishes in step 512. It should be noted that an instance is not required to participate in an APMP system. The instance can choose not to participate or to participate at a time that occurs well after boot. Those instances which do participate form a "sharing set." The first instance which decides to join a sub-facility is responsible for the content of, and synchronizing access to, its own segment.

The initial, header portion of an APMP database is the first part of the APMP database mapped by a joining operating system instance. Portions of the header are accessed before the instance has joined the sharing set, and, in fact, before the instance knows that the APMP computer system exists.

The header section contains:
1. a membership and creation synchronization quadword
2. a computer system software version
3. state information, creation time, incarnation count, etc.
4. a pointer (offset) to a membership mask
5. crashing instance, crash acknowledge bits, etc.
6. validation masks, including a bit for each service
7. memory mapping information (page frame number information) for the entire APMP database
8. offset/length pairs describing each of the service segments (lengths in bytes rounded to pages and offsets full pages) including :
   shared memory services
   cpu communications services
   membership services (if required)
   locking services

The array of node blocks is indexed by a system partition id (one per instance possible on the current platform) and each block contains:
instance software version
interrupt reason mask
instance state
instance incarnation
instance heartbeat
instance membership timestamp
little brother instance id and inactive-time; big brother instance id
instance validation done bit.

An APMP database is stored in shared memory. The initial fixed portion of N physically contiguous pages occupies the first N pages of one of two memory ranges allocated by the first instance to join during initial partitioning of the hardware. The instance directs the console to store the starting physical addresses of these ranges in the configuration tree. The purpose of allocating two ranges is to permit failover in case of hardware memory failure. Memory management is responsible for mapping the physical memory into virtual address space for the APMP database.

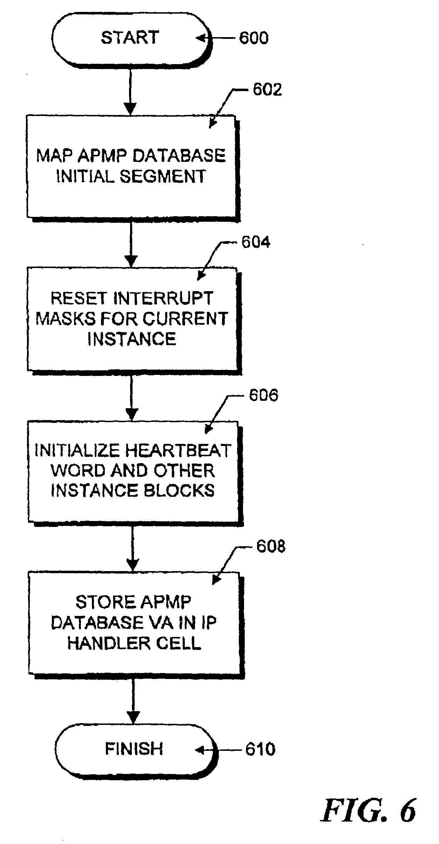

The detailed actions taken by an operating system instance are illustrated in Figure 6. More specifically, when an operating system instance wishes to become a member of a sharing set, it must be prepared to create the APMP computer system if it is the first instance attempting to "join" a non-existent system. In order for the instance to determine whether an APMP system already exists, the instance must be able to examine the state of shared memory as described above. Further, it must be able to synchronize with other instances which may be attempting to join the APMP system and the sharing set at the same time to prevent conflicting creation attempts. The master console creates the configuration tree as discussed above. Subsequently, a region of memory is initialized by the first, or primary, operating system instance to boot, and this memory region can be used for an APMP database.

### Mapping the APMP Database Header

The goal of the initial actions taken by all operating system instances is to map the header portion of the APMP database and initialize primitive inter-instance interrupt handling to lay the groundwork for a create or join decision. The routine used is illustrated in Figure 6 which begins in step 600. The first action taken by each instance (step 602) is to engage memory management to map the initial segment of the APMP database as described above. At this time, the array of node blocks in the second database section is also mapped. Memory management maps the initial and second segments of the APMP database into the primary operating system address space and returns the start address and length. The instance then informs the console to store the location and size of the segments in the configuration tree.

Next, in step 604, the initial virtual address of the APMP database is used to allow the initialization routine to zero interrupt reason masks in the node block assigned to the current instance.

A zero initial value is then stored to the heartbeat field for the instance in the node block, and other node block fields. In some cases, the instance attempting to create a new APMP computer system was previously a member of an APMP system and did not withdraw from the APMP system. If this instance is rebooting before the other instances have removed it, then its bit will still be "on" in the system membership mask. Other unusual or error cases can also lead to "garbage" being stored in the system membership mask.

Next, in step 608, the virtual address (VA) of the APMP database is stored in a private cell which is examined by an inter-processor interrupt handler. The handler examines this cell to determine whether to test the per-instance interrupt reason mask in the APMP database header for work to do. If this cell is zero, the APMP database is not mapped and nothing further is done by the handler. As previously discussed, the entire APMP database, including this mask, is initialized so that the handler does nothing before the address is stored. In addition, a clock interrupt handler can examine the same private cell to determine whether to increment the instance-specific heartbeat field for this instance in the appropriate node block. If the private cell is zero, the interrupt handler does not increment the heartbeat field.

At this point, the routine is finished (step 610) and the APMP database header is accessible and the joining instance is able to examine the header and decide whether the APMP computer system does not exist and, therefore, the instance must create it, or whether the instance will be joining an already-existing APMP system.

Once the APMP header is mapped, the header is examined to determine whether an APMP computer system is up and functioning, and, if not, whether the current instance should initialize the APMP database and create the APMP computer system. The problem of joining an existing APMP system becomes more difficult, for example, if the APMP computer system was created at one time, but now has no members, or if the APMP system is being reformed after an error. In this case, the state of the APMP database memory is not known in advance, and a simple memory test is not sufficient. An instance that is attempting to join a possibly existing APMP system must be able to determine whether an APMP system exists or not and, if it does not, the instance must be able to create a new APMP system without interference from other instances. This interference could arise from threads running either on the same instance or on another instance.

In order to prevent such interference, the create/join decision is made by first locking the APMP database and then examining the APMP header to determine whether there is a functioning APMP computer system. If there is a properly functioning APMP system, then the instance joins the system and releases the lock on the APMP database. Alternatively, if there is no APMP system, or if the there is an APMP system, but it is non-functioning, then the instance creates a new APMP system, with itself as a member and releases the lock on the APMP database.

If there appears to be an APMP system in transition, then the instance waits until the APMP system is again operational or dead, and then proceeds as above. If a system cannot be created, then joining fails.

### Creating a new APMP Computer System

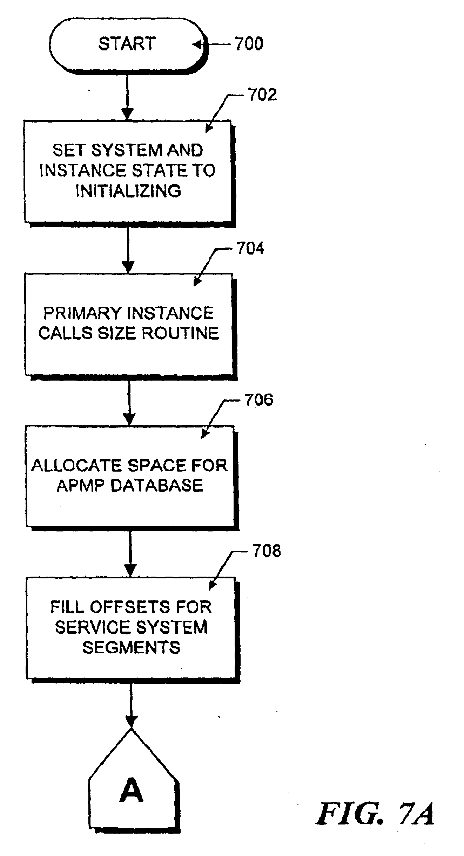

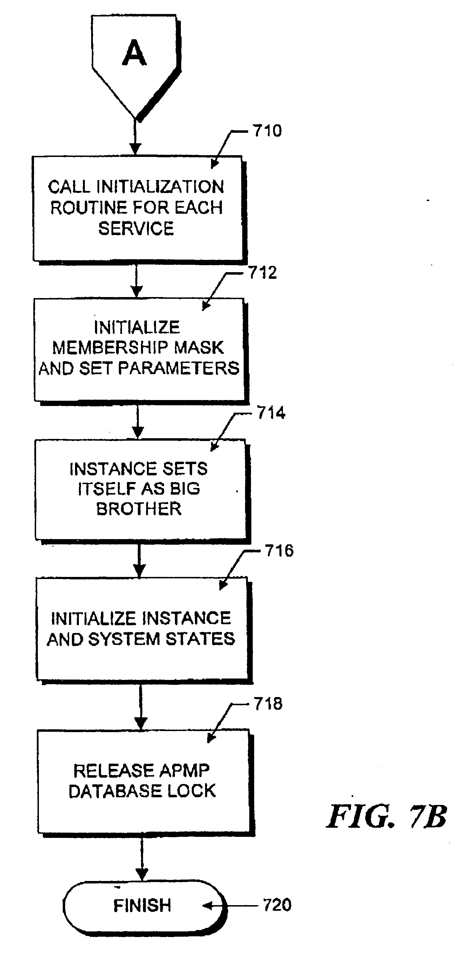

Assuming that a new APMP system must be created, the creator instance is responsible for allocating the rest of the APMP database, initializing the header and invoking system services. Assuming the APMP database is locked as described above, the following steps are taken by the creator instance to initialize the APMP system (these steps are shown in Figures 7A and 7B):

| | |
|---|---|
| Step 702 | the creator instance sets the APMP system state and its node block state to "initializing." |
| Step 704 | the creator instance calls a size routine for each system service with the address of its length field in the header. |
| Step 706 | the resulting length fields are summed and the creator instance calls memory management to allocate space for the entire APMP database by creating a new mapping and deleting the old mapping. |
| Step 708 | the creator instance fills in the offsets to the beginnings of each system service segment. |
| Step 710 | the initialization routine for each service is called with the virtual addresses of the APMP database, the service segment and the segment length. |
| Step 712 | the creator instance initializes a membership mask to make itself the sole member and increments an incarnation count. It then sets creation time, software version, and other creation parameters. |
| Step 714 | the instance then sets itself as its own big and little brother (for heartbeat monitoring purposes as described below). |
| Step 716 | the instance then fills in its instance state as "member" and the APMP system state as "operational." |
| Step 718 | finally, the instance releases the APMP database lock. |

The routine then ends in step 720.

### Joining an Existing APMP Computer System

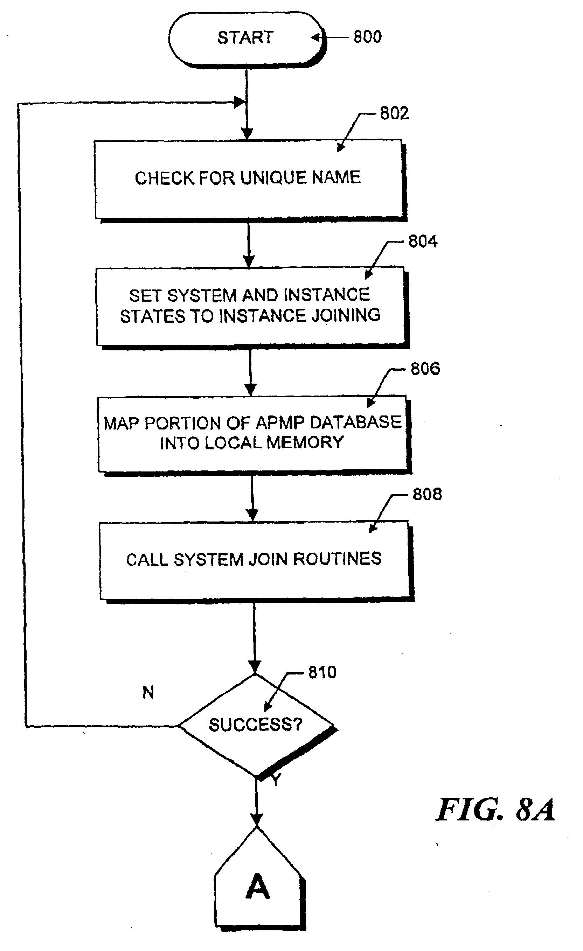

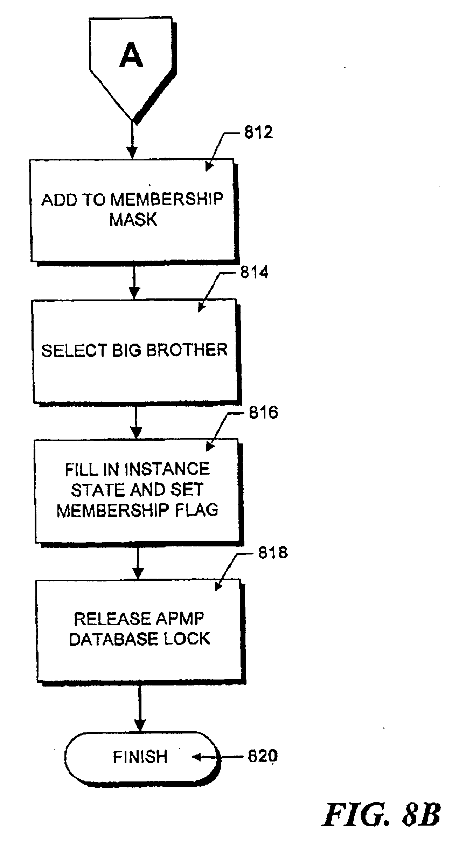

Assuming an instance has the APMP database locked, the following steps are taken by the instance to become a member of an existing APMP system (shown in Figures 8A and 8B):

| | |
|---|---|
| Step 802 | the instance checks to make sure that its instance name is unique. If another current member has the instance's proposed name, joining is aborted. |
| Step 804 | the instance sets the APMP system state and its node block state to "instance joining" |
| Step 806 | the instance calls a memory management routine to map the variable portion of the APMP database into its local address space. |
| Step 808 | the instance calls system joining routines for each system service with the virtual addresses of the APMP database and its segment and its segment length. |
| Step 810 | if all system service joining routines report success, then the instance joining routine continues. If any system service join routine fails, the instance joining process must start over and possibly create a new APMP computer system. |
| Step 812 | assuming that success was achieved in step 810, the instance adds itself to the system membership mask. |
| Step 814 | the instance selects a big brother to monitor its instance health as set forth below. |
| Step 816 | the instance fills in its instance state as "member" and sets a local membership flag. |
| Step 818 | the instance releases the configuration database lock. |

The routine then ends in step 820.

The loss of an instance, either through inactivity timeout or a crash, is detected by means of a "heartbeat" mechanism implemented in the APMP database. Instances will attempt to do minimal checking and cleanup and notify the rest of the APMP system during an instance crash. When this is not possible, system services will detect the disappearance of an instance via a software heartbeat mechanism. In particular, a "heartbeat" field is allocated in the APMP database for each active instance. This field is written to by the corresponding instance at time intervals that are less than a predetermined value, for example, every two milliseconds.

Any instance may examine the heartbeat field of any other instance to make a direct determination for some specific purpose. An instance reads the heartbeat field of another instance by reading its heartbeat field twice separated by a two millisecond time duration. If the heartbeat is not incremented between the two reads, the instance is considered inactive (gone, halted at control-P, or hung at or above clock interrupt priority level.) If the instance remains inactive for a predetermined time, then the instance is considered dead or disinterested.

In addition, a special arrangement is used to monitor all instances because it is not feasible for every instance to watch every other instance, especially as the APMP system becomes large. This arrangement uses a "big brother - little brother" scheme. More particularly, when an instance joins the APMP system, before releasing the lock on the APMP database, it picks one of the current members to be its big brother and watch over the joining instance. The joining instance first assumes big brother duties for its chosen big brother's current little brother, and then assigns itself as the new little brother of the chosen instance. Conversely, when an instance exits the APMP computer system while still in operation so that it is able to perform exit processing, and while it is holding the lock on the APMP database, it assigns its big brother duties to its current big brother before it stops incrementing its heartbeat.

Every clock tick, after incrementing its own heartbeat, each instance reads its little brother's heartbeat and compares it to the value read at the last clock tick. If the new value is greater, or the little brother's ID has changed, the little brother is considered active. However, if the little brother ID and its heartbeat value are the same, the little brother is considered inactive, and the current instance begins watching its little brother's little brother as well. This accumulation of responsibility continues to a predetermined maximum and insures that the failure of one instance does not result in missing the failure of its little brother. If the little brother begins incrementing its heartbeat again, all additional responsibilities are dropped.

If a member instance is judged dead, or disinterested, and it has not notified the APMP computer system of its intent to shut down or crash, the instance is removed from the APMP system. This may be done, for example, by setting the "bugcheck" bit in the instance primitive interrupt mask and sending an IP interrupt to all CPU's of the instance. As a rule, shared memory may only be accessed below the hardware priority of the IP interrupt. This insures that if the CPUs in the instance should attempt to execute at a priority below that of the IP interrupt, the IP interrupt will occur first and thus the CPU will see the "bugcheck" bit before any lower priority threads can execute. This insures the operating system instance will crash and not touch shared resources such as memory which may have been reallocated for other purposes when the instances were judged dead. As an additional or alternative mechanism, a console callback (should one exist) can be invoked to remove the instance. In addition, in accordance with a preferred embodiment, whenever an instance disappears or drops out of the APMP computer system without warning, the remaining instances perform some sanity checks to determine whether they can continue. These checks include verifying that all pages in the APMP database are still accessible, i.e. that there was not a memory failure.

### Assignment of Resources After Joining

A CPU can have at most one owner partition at any given time in the power-up life of an APMP system. However, the reflection of that ownership and the entity responsible for controlling it can change as a result of configuration and state transitions undergone by the resource itself, the partition it resides within, and the instance running in that partition.

CPU ownership is indicated in a number of ways, in a number of structures dictated by the entity that is managing the resource at the time. In the most basic case, the CPU can be in an unassigned state, available to all partitions that reside in the same sharing set as the CPU. Eventually that CPU is assigned to a specific partition, which may or may not be running an operating system instance. In either case, the partition reflects its ownership to all other partitions through the configuration tree structure, and to all operating system instances that may run in that partition through the AVAILABLE bit in the HWRPB per-CPU flags field.

If the owning partition has no operating system instance running on it, its console is responsible for responding to, and initiating, transition events on the resources within it. The console decides if the resource is in a state that allows it to migrate to another partition or to revert back to the unassigned state.

If, however, there is an instance currently running in the partition, the console relinquishes responsibility for initiating resource transitions and is responsible for notifying the running primary of the instance when a configuration change has taken place. It is still the facilitator of the underlying hardware transition, but control of resource transitions is elevated one level up to the operating system instance. The transfer of responsibility takes place when the primary CPU executes its first instruction outside of console mode in a system boot.

Operating system instances can maintain ownership state information in any number of ways that promote the most efficient usage of the information internally. For example, a hierarchy of state bit vectors can be used which reflect the instance-specific information both internally and globally (to other members sharing an APMP database).

The internal representations are strictly for the use of the instance. They are built up at boot time from the underlying configuration tree and HWRPB information, but are maintained as strict software constructs for the life of the operating system instance. They represent the software view of the partition resources available to the instance, and may - through software rule sets - further restrict the configuration to a subset of that indicated by the physical constructs. Nevertheless, all resources in the partition are owned and managed by the instance - using the console mechanisms to direct state transitions - until that operating system invocation is no longer a viable entity. That state is indicated by halting the primary CPU once again back into console mode with no possibility of returning without a reboot.

Ownership of CPU resources never extends beyond the instance. The state information of each individual instance is duplicated in an APMP database for read-only decision-making purposes, but no other instance can force a state transition event for another's CPU resource. Each instance is responsible for understanding and controlling its own resource set; it may receive external requests for its resources, but only it can make the decision to allow the resources to be transferred.

When each such CPU becomes operational, it does not set its AVAILABLE bit in the per-CPU flags. When the AVAILABLE bit is not set, no instance will attempt to start, nor expect the CPU to join in SMP operation. Instead, the CPU, in console mode, polls the owner field in the configuration tree waiting for a valid partition to be assigned. Once a valid partition is assigned as the owner by the primary console, the CPU will begin operation in that partition.

During runtime, the current_owner field reflects the partition where a CPU is executing. The AVAILABLE bit in the per-CPU flags field in the HWRPB remains the ultimate indicator of whether a CPU is actually available, or executing, for SMP operation with an operating system instance, and has the same meaning as in conventional SMP systems.
It should be noted that an instance need not be a member of a sharing set to participate in many of the reconfiguration features of an APMP computer system. An instance can transfer its resources to another instance in the APMP system so that an instance which is not a part of a sharing set can transfer a resource to an instance which is part of the sharing set. Similarly, the instance which is not a part of the sharing set can receive a resource from an instance which is part of the sharing set.

### Shared Memory

Through software configuration, recorded in the console configuration tree, some memory is marked as shared among all instances in a community. Some memory is marked as private to a partition which can be running an instance of an operating system. All other memory is marked as unowned. Since the configuration is defined by software, it is possible to dynamically change partitions and the relative sizes of partitions.

All memory within the physical hardware system is associated with an owner field within the configuration tree. Memory can be owned by a partition, in which case the memory is used as private memory by the operating system or console software running within the partition. This is referred to as "private" memory. Alternatively, memory may be owned by a community, in which case, the memory is shared for all instances within the community and such memory is referred to as "shared" memory. Memory can also be configured to be owned by no partition or community. Such "unowned" memory may be powered down and out-swapped while the remainder of the system continues to operate, if hardware allows such "hot out-swapping".

Memory can be shared among instances in a community through the use of shared memory regions. A shared memory region can be created by any instance. A tag is specified to coordinate access to the same region by multiple instances. A virtual size is specified as well as a physical size. The virtual size may be the same size or larger than the physical size. Shared memory is initialized by a call-back routine. A lock is held during initialization to block out other instances from mapping to the region while the region is being initialized. Once the shared memory region is created by one instance, other instances can be mapped and attached to the region. A zero page table entry is used to indicate pages that are part of the region virtually but do not have physical memory associated with them. The memory region data structure records which instances have attached to the region. An instance must specify a call-back routine when attaching to a shared memory region. This routine is called for a variety of reasons: during initialization or shutdown of the system, or whenever another instance is attaching to or detaching from the region, or whenever an instance that was attached has crashed (detached in an unorderly fashion). Depending upon the call-back reason, during shutdown, for example, the call-back routine is expected to block access to the shared memory region.

An instance can request that more physical memory be added to a region. Only the instance that makes this request initially maps these new pages. When another instance attempts to access these pages, an access violation handler gains control (because that instance will have a zero page table entry (PTE) associated with that memory region), and the access violation handler updates the mapping region with any new pages. When an instance unmaps the region, the detachment is recorded in the APMP database. When all instances have detached from a region, it can be deleted and all pages released toa shared memory free page list. The shared memory region data structure also records which instances have outstanding I/O on any page within the region. The operating system instances record their individual reference counters such that they know when to set and clear their I/O bit in the region. An instance cannot unmap and detach from a shared memory region if it has outstanding I/O to any page within the region.

A shared memory API is a set of routines that can be called by user mode applications and maps shared memory into the application's address space. When a shared memory region is created, as described above, the associated creating instance keeps track of how the operating system's data structures relate to the shared memory region. When the instance has created data structures for the shared memory region, the instance is attached to the region. Then, when the shared memory mapping API routine is called, normal operating system mechanisms are used to map the application address space to the shared memory. When the local operating system data structures are cleaned up, the instance is detached from the region. A global section may be associated with a shared memory region in a one-to-one fashion.

An instance may specify a "context variable" which is to be associated with a region. If another instance attempts to attach to a region and does not specify the same context, an error is returned. This specification of a context variable may be used, for example, to associate a version number with the application. Additionally, an instance may specify a private context variable to be associated with the instance private data stored for a region. When the call-back routine is called, the instance can gather additional information about the region by obtaining the private context variable. The private context may be used, for example, to store a port number.

Shared memory can be borrowed by an operating system instance for use as instance private memory. Shared memory can be borrowed through the use of the shared memory API. Shared memory can be created, then used by only the local instance. This technique is useful if not all memory marked as shared is being used by the community member instances. The extra shared memory can be a pooled source of free memory. In other words, shared memory can be borrowed by the creation of a shared memory region. The pages in the shared memory region can be used by the local operating system for various purposes.

Private memory can be configured to be owned by the instance whose CPU(s) have fastest access to the memory. Nonuniform memory access is accommodated in the design's shared memory by organizing internal data structures for shared memory in groups according to the hardware characteristics of the memory. These internal data structures are called common property partitions. The shared memory API allows for memory characteristics to be specified by the caller. These characteristics can be expressed as nonuniform memory access properties such as "near" or "far".

The PFN database accommodates private memory and shared memory and reconfigured memory using a large array of page frame number (PFN) database entries. There is no physical memory behind a virtual array that describes pages that are private to another instance, nor corresponding to memory locations supported by memory boards that are missing from the system, nor corresponding to physical memory addressing holes. The layout of the PFN database suggests a particular granularity of physical memory. That is, in order to allocate and consume an integral number of physical pages for the PFN database that is to reside within each block of memory, physical memory should have a granularity as described below. The granularity of physical memory is chosen as the the smallest amount of memory that contains an integral number of pages and an integral number of PFN database entries. This is given by the least common multiple of the memory page size and the page frame number database entries, in quad words.

As described above, a creating instance, more specifically, the APMP computer system's initialization program, walks the configuration tree and builds management structures for its associated community's shared memory. In general, four hierarchical access modes provide memory access control. The access modes are, from the most to least privileged: kernel, executive, supervisor and user. Additionally, memory protection is specified at individual page level, where a page may be inaccessible, read only, or read/write for each of the four access modes. Accessible pages can be restricted to have only data or instruction access. Memory management software maintains tables of mapping information (page tables) that keep track of where each virtual page is located in physical memory. A process, through a memory management unit, utilizes this mapping information when it translates virtual addresses to physical addresses. The virtual address space is broken into units of relocation, sharing, and protection pages, which are referred to as pages. An operating system instance controls the virtual-to-physical mapping tables and saves the inactive parts of the virtual memory address space on external storage media.

Memory management employs, illustratively, a quad word page table entry to translate virtual addresses to physical addresses. Each page table entry (PTE) includes a page frame number (PFN) which points to a page boundary and may be concatenated with a byte-within-page indicator of a virtual address to yield a physical address.

Physical address translation is performed by accessing entries in a multi-level page structure. A page table base register (PTBR) contains the physical PFN of the highest level page table. Bits of the virtual address are used to index into the higher level page tables to obtain the physical PFNs of the base lower level page tables and, at the lowest level, to obtain the physical PFN of the page being referenced. This PFN is concatenated with the virtual address byte-within-page indicator to obtain the physical address of the location being accessed.

As noted above, an instance may decide to join the operation of a community at any time, not necessarily at system boot time. When an instance decides to join the APMP system, it calls a routine DB_MAP_initial, which obtains the APMP data base pages from the configuration tree community node and maps the initial piece of the APMP database. If the configuration tree does not contain APMP database pages yet, the instance chooses shared memory pages to be used for the APMP database. The instance calls console code to write to the configuration tree in an asynchronous manner. After mapping the initial piece of the APMP database, it is determined as described above whether the instance is creating or joining the APMP system.

If the instance is the creator of the APMP system, the instance calls a routine, DB_allocate, to allocate the pages for the APMP database and to initialize the mapping information within a MMAP data structure. The MMAP data structure, which is discussed in greater detail below, is used to describe a mapping of shared memory. The routine DB_allocate does not unmap the initial piece of the APMP database. If the instance is a joiner of a APMP system, the instance calls a routine DB_Map_continue to map the APMP database. The routine DB_Map_continue does not unmap the initial piece of the APMP database. Once the APMP database is mapped and the joining instance's code has switched to referencing the newly mapped APMP database, rather than the initial APMP database, the initial APMP database is unmapped by calling a routine, DB_unmap. This routine can also be called to unmap the APMP database when an instance is leaving the APMP system.

The APMP database need not be located at the same virtual location for all instances, as this would prevent instances from joining the APMP system if a given range of virtual addresses were unavailable. This flexibility permits different operating systems having different virtual address space layouts to readily coexist in the new APMP system.

The DB_Map_initial routine maps the initial piece of the APMP database, accepts the length of the initial APMP database and returns the virtual address of the initial APMP database. Additionally, DB_Map_initial will test the mapped pages to ensure that the pages are from shared memory and to mark any bad pages.

The DB_allocate routine accepts the full address of the initial APMP database, the length of the initial APMP database, and the length of the entire APMP database. The routine returns the virtual address of the entire APMP database. The routine allocates sufficient instance address space to map the entire APMP database and remaps the initial piece of the APMP database in the beginning of this space. More APMP database pages are mapped from shared memory, as necessary. These pages may be tested and if a bad page is encountered, it is marked as used. The rest of the APMP database pages are mapped in the appropriate page table entries. Contiguous pages are allocated for the APMP database PFN list. The APMP database PFNs are stored in the PFN list pages, with any unused entries zeroed out. If enough contiguous pages are available for the entire APMP database, no PFN list pages are used. Shared pages are allocated directly from configuration tree and are taken from the page directly after the initial APMP database pages.

The DB_Map_continue routine maps the entire APMP database if a caller is not the creator of the APMP system. The routine accepts the virtual address of the initial APMP database and the length of the initial APMP database. The routine returns the starting virtual address of the entire APMP database and the length of the entire APMP database.

Each operating system instance includes memory configuration information functions which focus on the memory aspects of the configuration tree. A MEM-CONFIG_INFO routine returns basic memory configuration information by reading the configuration tree fields MAX_DESC and MAX_FRAGMENTS and returning the maximum number of memory descriptor nodes and the maximum number of memory fragments per descriptor node. A MEM_CONFIG_PFN routine determines which partition owns a given PFN. This routine accepts a page frame number and returns an indication of what type of page it is, that is, whether the page is shared or private to a particular partition, an input/output (I/O) page, or unowned memory.
Additionally, if the page is private or used to access I/O devices, the routine returns an indication of which partition owns this PFN and, if the page is shared, which community owns the PFN. The SHMEM_CONFIG_DESC routine returns shared memory information about a memory descriptor in the configuration tree. Once a memory descriptor node is found, the routine searches the memory fragments for those fragments that are marked shared and fills in a return buffer with the PFN and page count for each fragment. If there are no memory fragments marked shared, a fragment count is set to zero.

The SHMEM_CONFIG_ALL routine returns information about all memory descriptor nodes that contain shared memory. The routine calls SHMEM_CONFIG_DESC in a loop to obtain all shared memory page ranges. Input arguments include the maximum number of memory descriptor nodes and the maximum number of memory fragments per descriptor node. The routine returns the total number of shared memory fragments from an array of structures that describe the shared memory ranges.

A routine SHMEM_CONFIG_APMP sets up the APMP PFN range in the configuration tree. If the APMP PFN range has already been set up, it returns the information. The routine returns the first PFN to use for the APMP database and number of APMP pages. This routine reads a value within a community node and if the value is zero, it obtains the first contiguous range of shared memory, eight megabytes in the illustrative embodiment, by calling the SHMEM_CONFIG_DESC routine. Then it calls the console dispatch routine to set this range in the community node. If there was a race to set the APMP page range, the range set in the configuration tree will be read and returned to the caller.

A shared memory management data structure in the APMP database SHMEM includes version number, the size of the fixed part of the SHMEM structure, flags that indicate whether the shared memory is valid, whether initialization is in progress, whether debug structure formats are being used, whether all pages within all shared memory common property partitions have been tested, and the maximum number of shared memory common property partitions. Additionally, the data structure includes the total number of valid shared memory common property partitions, the size of one shared memory common property partition structure, offsets from the beginning of the shared memory data structure to the shared memory common property partition array, an offset from the beginning of the shared memory data structure to the shared memory lock structure, a shared memory lock handle, and the maximum number of shared memory regions supported within the APMP system. The data structure also includes the total number of valid shared memory regions and an offset from the beginning of the shared memory data structure to the shared memory region tag array. The size of a shared memory region structure, and the offset from the beginning of the shared memory management data structure to the shared memory region array is also included.

Instance private memory data cells contain information about the shared memory management area in the APMP database. This information includes a pointer to the beginning of the shared memory data structure and the same descriptors as were described in relation to the shared memory data structure: the maximum number of shared memory common property partitions, maximum number of memory fragments in each shared memory common property partition, the size of one shared memory common property partition structure, a pointer to a shared memory common property partition array within the APMP database, a pointer to a shared memory list and a pointer to a shared memory region tag array within the APMP database. Additionally, the maximum number of shared memory regions, the size of one shared memory region structure, a pointer to a shared memory region array within the APMP database, and a pointer to the shared memory descriptor array in private memory are included.

When a shared memory common property partition (CPP) configuration area is initialized, the APMP database pages are excluded. Shared memory common property partitions support hot-swapping and non-uniform memory access by partitioning shared memory into partitions having common properties. Flags and routines are employed to indicate, for example, which non-uniform memory access unit a CPP is in, or which hot swappable unit a CPP is in, along with the range and location of memory pages within the unit. Each instance that is a member of an APMP system maintains data within its own private memory regarding each shared memory CPP that it is connected to. A lock structure is employed to synchronize access to the shared memory common property partition data structure. The lock is held when a partition is connecting to the shared memory CPP, when a partition is disconnecting from a shared memory CPP, when pages are being allocated from the shared memory CPP, or when pages are being deallocated to the shared memory CPP. Each shared memory CPP has a free page list, a bad page list, and an untested page list. Pages can be allocated from the free page and untested page lists and deallocated into the free page list and bad page list. The shared memory CPP page list links are maintained within the PFN database entries for the pages.

The shared memory lock is employed to synchronize the SHM_TAG array and an associated list of valid SHM_REG structures and to synchronize access to the list of free SHM_REG structures. The SHMEM lock must be held while reading or writing the SHM_TAG array, while manipulating a list of valid SHM_REG structures, or while manipulating the free SHM_REG list. Shared memory locks are ranked as follows: the highest order lock is an IPL 8 SMP spinlock, followed by the SHM_CPP lock, the SHM_REG lock and, finally, the SHMEM lock. For example, while holding the SHMEM lock, one can aquire a SHM_REG lock, a SHM_CPP lock and/or a SMP spinlock, in that order. Shared memory management functions can be called from kernel mode to get information about shared memory. The SHMEM lock has a ranking relative to other locks such that no deadlocks occur.

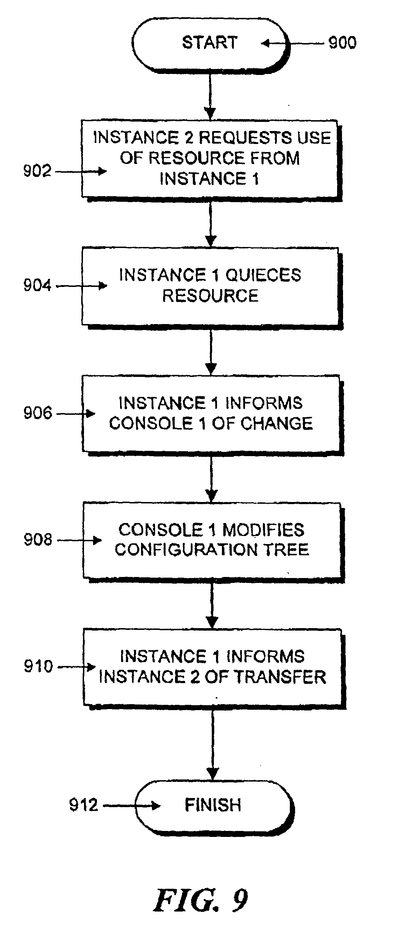

### B. MIGRATING RESOURCES IN A MULTI-PROCESSOR COMPUTER SYSTEM (FIGS. 9-10E)

In accordance with an aspect of the invention, multiple instances of operating systems execute cooperatively in a single multiprocessor computer wherein a single physical machine is subdivided by software into multiple partitions, each with the ability to run a distinct copy, or instance, of an operating system. Each individual instance has the resources it needs to execute independently, but instances cooperate to migrate resources from one partition to another. In accordance with the principles of this aspect of the invention, the migration can be initiated and carried out under control of the operating system instances "on the fly" without intervention of the system administrator. Alternatively, a system administrator can reconfigure the system.
In accordance with one embodiment, resource migration is carried out under a "push" model in which resources are controlled by an owning partition and must be released by that partition before they can be migrated to another partition. In accordance with this model, a first operating system instance which requires a resource first requests the resource from a second instance. In response to this request, the second instance determines whether it can spare the resource, and if so, begins to bring the resource into an idle state. The resource is transferred when the second instance stops using the resource. Also, in accordance with the "push" model, the request for the resource migration may be initiated from an operator running a program on the second instance or from policy management software which initiates the request.

### Runtime Migration of Resources

After an APMP system is running, resources initially allocated to one partition can move, or migrate, to another partition. This migration may take place under control of a system administrator or may be initiated by an operating instance without system administrator participation. Migration is accomplished by causing the owning operating system instance to stop using a resource or by a console program taking action to stop using a resource. The configuration tree is then altered to transfer ownership of the resource to another operating system instance. The new operating system instance then begins using the resource. The action required to cause an operating system instance to stop using a resource is operating system specific.

In general, any resource can migrate unless migration is prevented by additional system constraints. For example, any CPU in the APMP system can be moved from a first partition to a second partition, provided it is not currently a primary CPU in the first partition, and it is not bound by operating system constraints, such as distributed interrupt handling. The policy on when and where a CPU may migrate is strictly up to the operating system code which the CPU is executing.

Memory may also be migrated from a first partition to a second partition. If the memory is privately owned by the first partition, it can be migrated in a straightforward manner. If the memory is shared between two partitions, some additional steps may be necessary to insure that the memory is completely unloaded by all partitions prior to migration.

Preferably, migration is accomplished without rebooting the entire APMP system, although the migration of certain resources may require a reboot of one or both partitions which are participating in the resource migration depending on the type of change and the operating system capabilities. For example, the migration of an input/output processor from one partition to another may require both partitions to reboot. However, changing the memory allocation of one or more memory fragments may be handled by the operating system code without the need for a reboot.

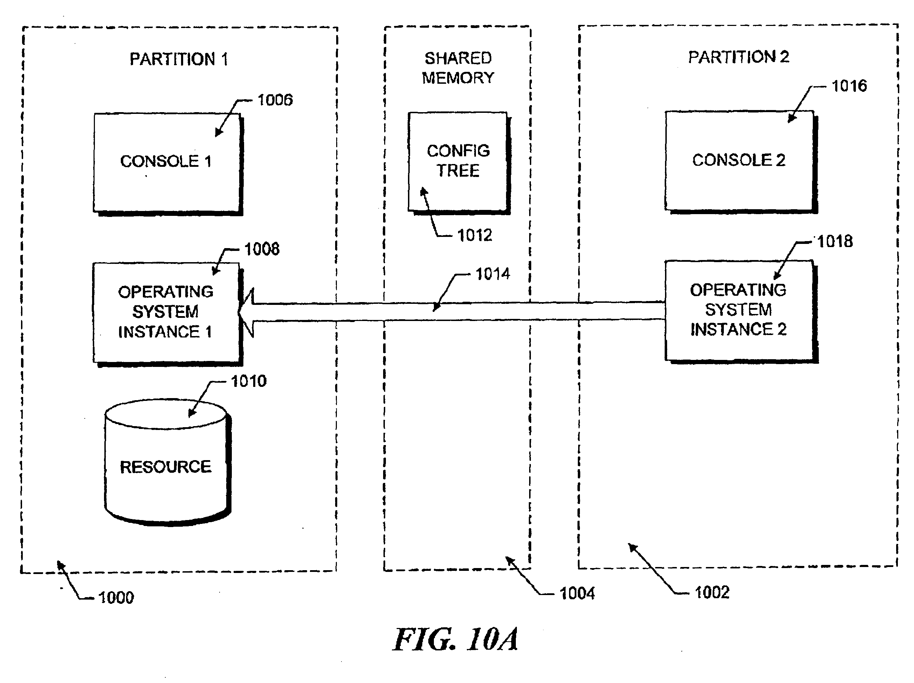

The migration process operates under a "push" model in that the original resource owner must first release the resource before the new owner can begin using the resource. The basic steps in one embodiment of this push migration process are illustrated in the flowchart shown in Figure 9 and schematically in Figures 10A - 10E.

In Figure 9, a resource migration operation commences in step 900 and proceeds to step 902 where an operating system instance (for example, operating instance 2) which is in need of a resource requests use of the resource from another operating system, for example, operating in system instance 1. Interprocessor communication can be carried out by a number of conventional and well-known mechanisms such as interprocess interrupts, common memory or either mechanisms. The same operation step is also illustrated in Figure 10A. Figure 10A shows an illustrative system consisting of two partitions: partition 1 (1000) and partition 2 (1002). Each partition 1000 and 1002 includes a console program schematically illustrated as boxes 1006 and 1016, respectively. Each partition 1000 and 1002 also contains an operating system instance illustrated in operating system instance 1 (1008) and operating system instance 2 (1018). Partition 1 (1000) also includes a resource 1010 which is being used by operating system instance 1 (1008) as indicated schematically by arrow 1011. In the first step of the migration process, operating system instance 2 (1018) makes a request, schematically indicated by arrow 1014, to operating system instance 1 (1008) to use resource 1010.

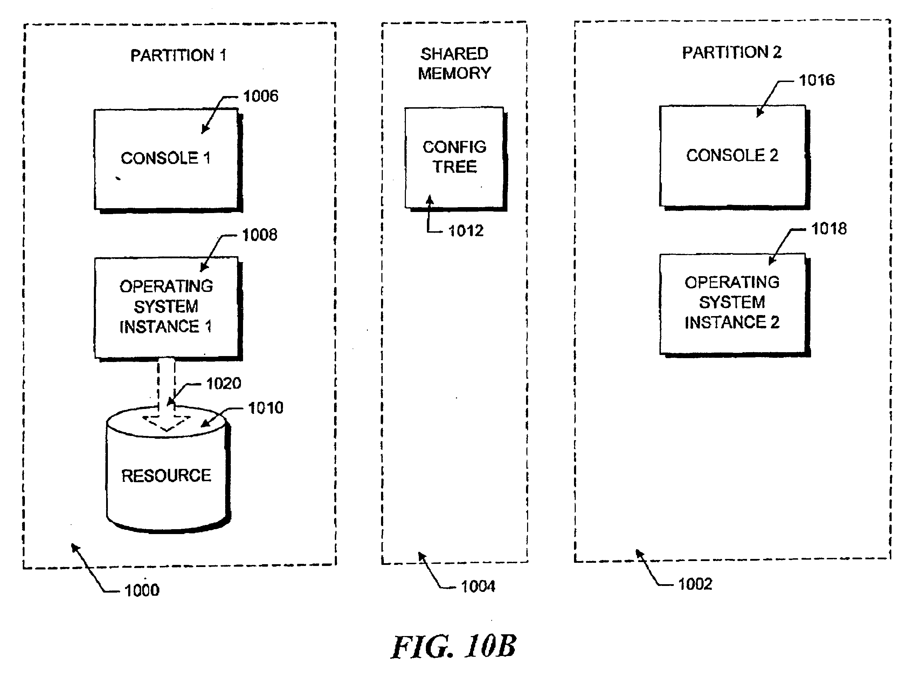

In accordance with the push model used in the present invention, operating system instance 1 (1008) must agree to the transfer of the requested resource 1010 to operating system instance 2 (1018). If operating system instance 1 (1008) agrees, it quiesces the resource as indicated in step 904. The next step in the process is also illustrated schematically in Figure 10B in which the elements common to Figure 10A are indicated with the same numerical designations. For example, partition 1 is labeled 1000 in both Figures 10A and 10B. As shown in Figure 10B, If operating system instance 1 (1008) agrees to migrate the resource, operating system instance 1, 1008 quiesces or stops its use of resource 1010 as indicated schematically by dotted arrow 1020.

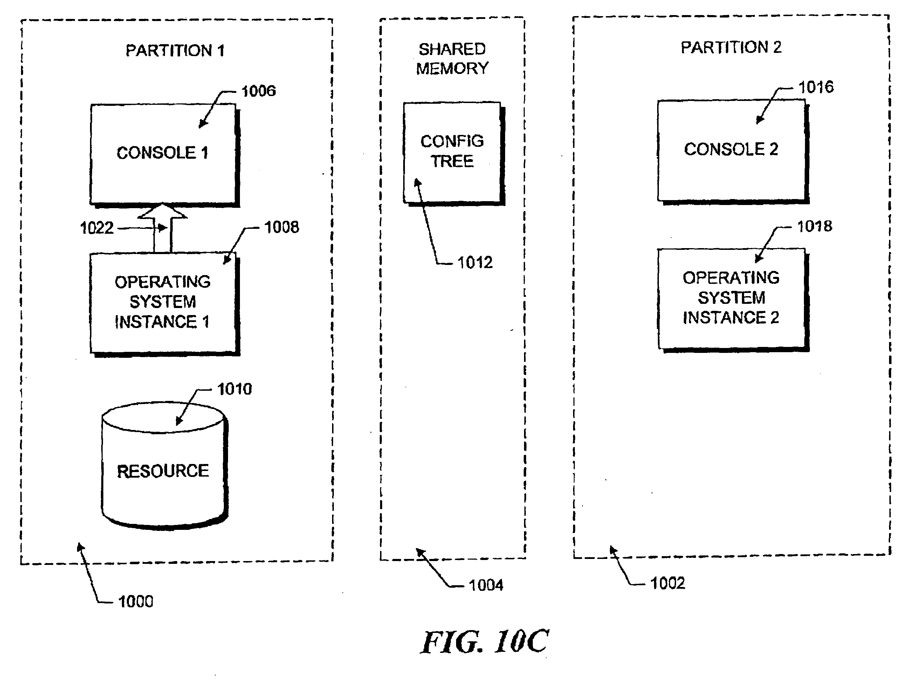

Next, operating system instance 1 (1008) informs console 1 (1006) of the intended change of ownership of the resource as indicated in step 906. This step in the migration process is illustrated in Figure 10C. In this step, operating system instance 1 (1008) informs console 1 (1006) that a transfer of ownership is requested as indicated schematically by arrow 1022. In particular, operating system instance 1 (1008) informs console 1 (1006) to change the owner and current_owner fields for resource 1010 in configuration tree 1012, as described below.

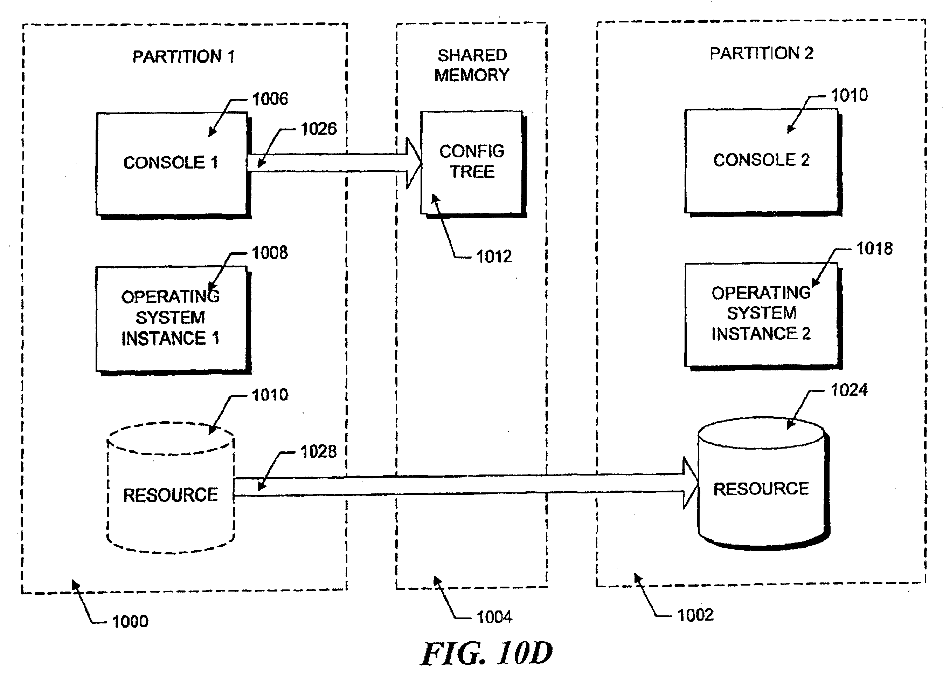

Next, in step 908, console 1 (1006) modifies the configuration tree 1012 to indicate the new owner of the resource. This step is illustrated schematically in Figure 10D where console 1 (1006) modifies configuration tree 1012 as indicated schematically by arrow 1026. This modification effectively moves resource 1010 from partition 1 (1000) to partition 2 (1002) as shown schematically by arrow 1028 so that the resource now appears in partition 2 (1002) as shown schematically by element 1024.

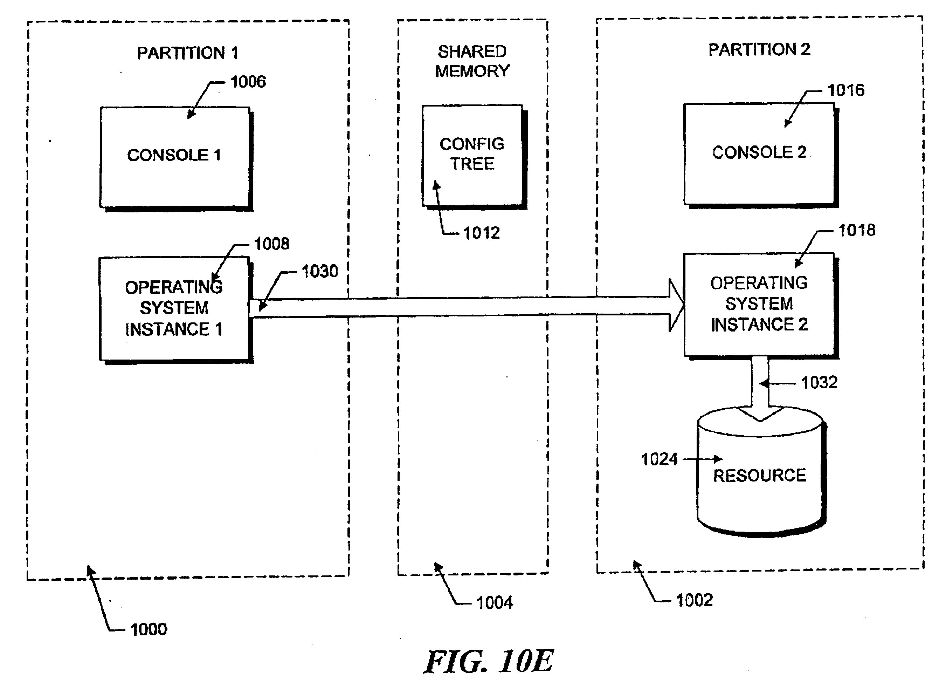

Finally, in step 910, operating system instance 1 (1008) in conjunction with console 1 (1006) informs operating system instance 2 (1018) in conjunction with console 2 (1016) of the transfer so that operating system instance 2 (1018) can begin using the resource. The routine then ends in step 912. This final step in the process is illustrated by Figure 10E in which operating system instance 1 (1008) informs operating system instance 2 (1018) that the resource 1024 is now available. This operation is shown schematically by arrow 1030 and involves known and conventional interprocess communications. Operating system instance 2 (1018) may then use resource 1024 as shown schematically by arrow 1032.

As previously mentioned, owner and current owner fields are provided in each node of the configuration tree to manage the transition of a resource from an owned and active state, to a un-owned and inactive state. Only the owning operating system instance of a resource can de-assign the resource by setting the owner field to zero. Only resources which have null owner and current_owner fields may be assigned to a new partition or community. During a resource migration, the HWRPBs and configuration trees are modified in concert and atomically to prevent any instance from obtaining an incorrect view of the configuration. In a similar fashion, a "hot swap" must also be accompanied by atomic and coordinated modifications to the HWRPBs and configuration trees.

When a resource is de-assigned, the owning operating system may choose to de-assign the owner field, or both the owner and current_owner fields. The decision of which field to de-assign is based on the ability of the owning operating system to discontinue the use of the resource prior to de-assigning ownership. In the case where a reboot is required to relinquish ownership, the owner field is cleared, but the current_owner field is not changed. When the owning operating system instance reboots, the console program in the partition can be designed to clear any current_owner fields for resources that have null owner fields during initialization.

In the case where the resource is shared among operating system instances which are part of a community, the operating system instances must cooperate in order to de-assign the resource. This de-assignment is managed by the instances which are part of the community.

Ownership of a resource is altered by changing the configuration tree. Certain rules must be followed when the configuration tree is altered. They include the following:
1) If the config field of a configuration tree node points to the tree hardware root node, the corresponding resource is capable of being assigned independently to any community or partition.
2) If the config field of that node does not point to the tree hardware root node, when the resource is assigned to a partition, all descendants of the corresponding tree node must be modified so that they are assigned to the same partition and all tree nodes in the parent chain from the tree node being altered to the config node must also have the same Partition, or Community owner. The config node must be an ancestor of the node being changed and reachable by following the parent pointers.

When the ownership of a hardware node is given to a Community, all descendants must either be owned by the community, a partition in the community, or unowned. If the config pointer is not the hardware root, then all nodes in the parent chain from the node being altered to the config node must also have the same Community owner. The config node must be an ancestor of the node being changed and reachable by following the parent pointers.

Hardware components, for example a CPU, may be free to operate independently. In this case, the config pointer specifies the hardware root. However, components may also be made up of other components that cannot operate independently. For example, the I/O Controllers on a PCI bus might not be separable from the PCI bus.

Some hardware components, such as memory may be shared by multiple partitions. This is expressed by the owner field pointing to a community. Partitions in the community, may then share access to the component. The descendants of the hardware component that is shared may specify an owner that is a descendent. For example, a memory subsystem may be owned by the community. In this case, the memory controller, which expresses the hardware aspects of the memory, including error handling, is owned by a partition in the community, and the memory descriptor node may be owned by the community, and its fragments owned by both communities (shared) and by partitions (private).

### Alternative Embodiments.

Other migration scenarios are possible. For example, a system manager could direct the first operating system instance to quiesce a resource and then place the resource into the "unassigned" state. Some time later, a second instance could discover a need for the resource and remove it from the pool of unassigned resources. Alternatively, the system manager could direct the second instance to allocate the resource. Alternatively, system policy might cause a batch job to run at a predetermined time on the first instance that would unilaterally quiesce and transfer some resource to a second instance. In both of these latter examples, there is no explicit communication between the instances regarding the resource, although there is clearly some human intervention or policy that coordinates the overall usage of resources.

In yet another approach, instances would allocate a resource from the unassigned pool when their needs require it. When they are finished with the resource, they return it to the unassigned pool. If the pool is empty, an instance has to operate with its then-existing allocation of the resource. So, we have a common pool, but no request/release protocol is required between instances. Other aspects, such as the specific instructions utilized to achieve a particular function, as well as other modifications to the inventive concept are intended to be covered by the appended claims.

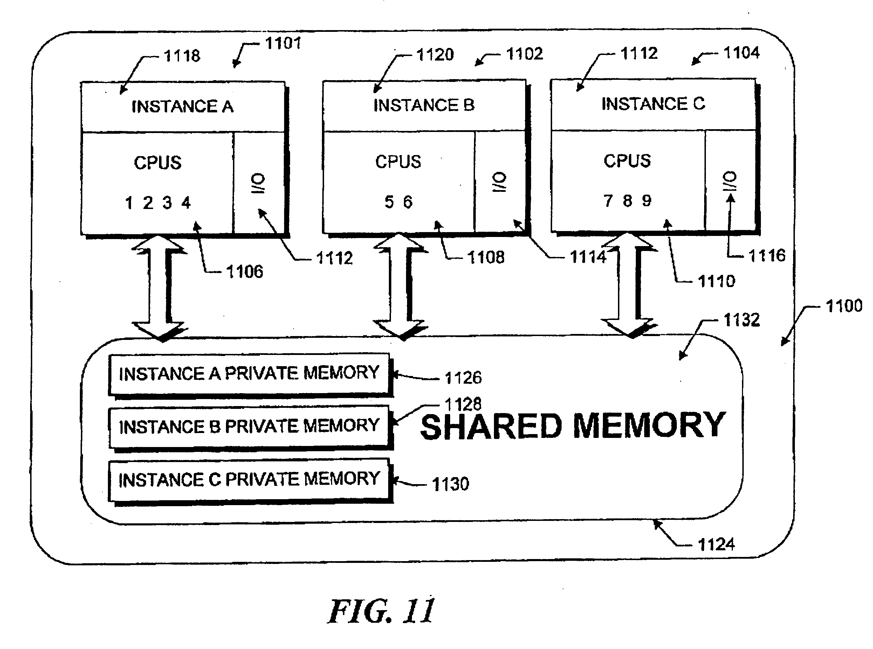

### C. SOFTWARE PARTITIONED MULTI-PROCESSOR SYSTEM WITH FLEXIBLE RESOURCE SHARING LEVELS (FIGS. 11-15)

In accordance with a further aspect of the present invention, multiple instances of operating systems execute cooperatively in a single multiprocessor computer wherein all processors and resources are electrically connected together. The single physical machine with multiple physical processors and resources is subdivided by software into multiple partitions, each with the ability to run a distinct copy, or instance, of an operating system. Each of the partitions has access to its own physical resources plus resources designated as shared. In accordance with one embodiment, the partitioning is performed by assigning resources using a configuration data structure such as a configuration tree.

Since software logically partitions CPUs, memory, and I/O ports by assigning them to a partition, none, some, or all, resources may be designated as shared among multiple partitions. Each individual operating instance will generally be assigned the resources it needs to execute independently and these resources will be designated as "private." Other resources, particularly memory, can be assigned to more than one instance and shared. Shared memory is cache coherent so that instances may be tightly coupled, and may share resources that are normally allocated to a single instance such as distributed lock managers and cluster interconnects.

Newly-added resources, such as CPUs and memory, can be dynamically assigned to different partitions and used by instances of operating systems running within the machine by modifying the configuration.

Using the above-described computer system, various system configurations can be achieved simply by appropriately manipulating the configuration tree. Figure 11 is an overview which shows what the architectural description looks like when the inventive computer system is instantiated on a machine. This example is a nine CPU SM P machi ne 1100 that has been partitioned into three partitions, 1101, 1102 and 1104. Each partition has one or more CPUs (groups 1106, 1108 and 1110) and some private I/O resources (designated as 1112, 1114 and 1116) and is running an instance of an operating system (illustrated schematically as 1118, 1120 and 1122). The operating systems may be three copies of the same operating system or three different operating systems. The memory in this system is cache-coherent shared memory. The common memory 1124 has been partitioned into three segments of private memory, 1126, 1128 and 1130, one for each operating system instance, and the remainder 1132 is shared memory for all three operating system instances to use cooperatively.

A configuration such as that illustrated schematically in Figure 11 can be created by appropriate entries in the configuration tree illustrated in Figures 3 and 4. What has been created is the equivalent of three physically independent computers within a single computer. This construction is the basis for one embodiment of the inventive computer system - multiple independent instances of operating systems executing cooperatively in a single computer. The inventive computer system is a set of coordinated heterogeneous operating systems, in a single computer, communicating via shared memory. An instance of the operating system in such a system can be clustered with other operating system instances within the same computer system or with operating system instances in other computer systems.

Any instance on an operating system in the inventive computer system can be an SMP configuration. The number of CPUs is part of the definition of an instance and is determined by the configuration tree entries. Because an instance in the inventive system is a complete operating system, all applications behave the same as they would on a traditional, single-instance computer. For example, existing single-system applications will run without changes on instances in a the inventive computer system. Existing cluster applications will also run without changes on clustered instances in an operating system within the system. The system is more available than the traditional single-system-view SMP system because multiple instances of operating systems are running in the system. Consequently, if a single instance fails, other instances can continue to run in spite of the hardware or software error that caused the failure.

In such a system, memory 1124 is logically partitioned into private (1126, 1128 and 1130) and shared sections (1132). As a minimum, each operating system instance has its own private memory section. No other instance can map into this physical memory section, except under direction of the owning operating system instance. Some of the shared memory 1124 is available for instances of operating systems (1118, 1120 and 1112) to communicate with one another, and the rest of the shared memory is available for applications.

In the inventive system, the I/O subsystem is also scalable. Because there are multiple "primary" CPUs in the system - one for each instance, there is better load balancing of the I/O workload. In addition, I/O controllers can support distributing I/O to secondary CPUs in an SMP system, further balancing the I/O workload.

Although there are three separate operating system instances in Figure 11, there is an expectation of cooperation between the instances. Such cooperation can be defined in three broad categories or computing models:
1) Shared Nothing - the operating system instances do not share any resources but agree to cooperate by not interfering with each other.
2) Shared Partial (shared something) - the operating system instances agree to cooperate and share some limited resources, such as memory or storage.
3) Shared Everything - the operating system instances agree to cooperate fully and share all resources available, to the point where the operating system instances present a single cohesive entity to the network. For example, the operating system instances may appear to the user as an OpenVMS Cluster.

Even though some operating system instances are sharing resources, one or more operating system instances can execute in total software isolation from all others. An instance that exists without sharing any resources is called an independent instance and does not participate at all in shared memory use. More particularly, neither the base operating system, nor its applications, access shared memory. The inventive computer system could consist solely of independent instances; such a system would resemble traditional mainframe style partitioning.

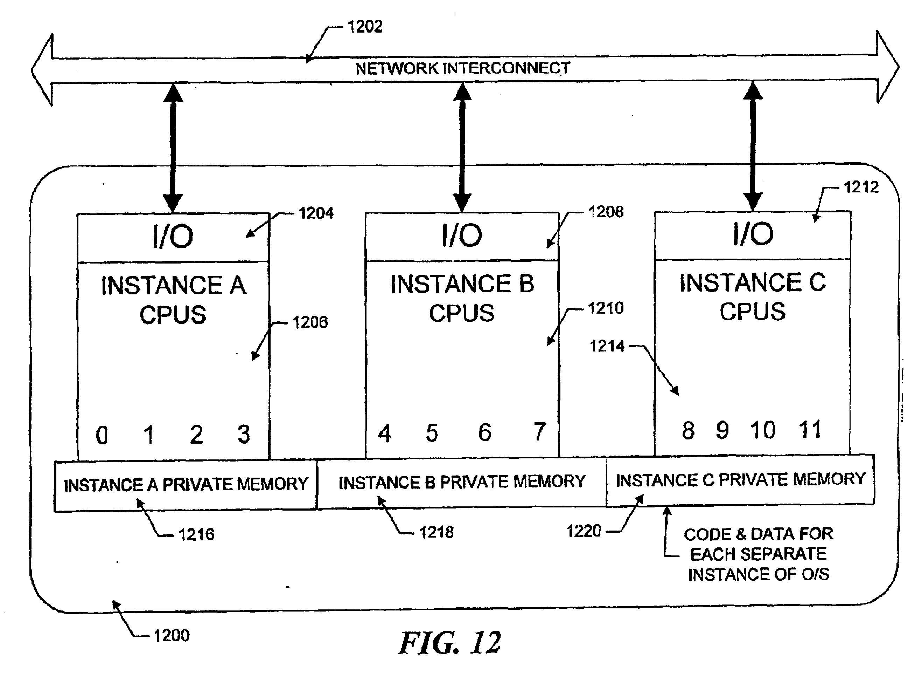

Figure 12 shows how the inventive system can be configured to support a "shared nothing" model of computing. In this example, three partitions, 1206, 1210 and 1214, have been created within a single machine 1200, each running an instance of an operating system. The available twelve CPUs have been split arbitrarily equally between the partitions in this example, 1206, 1210 and 1214, as illustrated. The available memory has been divided into private memory and assigned to the instances. In Figure 12, private memory divisions 1216, 1218 and 1220 are illustrated. Both code and data for each instance is stored in the the private memory assigned to that instance. Although the memory, 1216, 1218 and 1220 has been illustrated in Figure 12 as divided equally, the inventive architecture supports arbitrary division of memory between instances. Thus, if a partition has large memory requirements, and another that has limited memory needs, the system can accommodate both, in order to maximize use of available memory.

Each partition also has private I/O controllers/disks illustrated as I/O portions 1204, 1208 and 1212. Just as memory is arbitrarily divided, the same characteristic is true of I/O circuitry. In the "shared nothing" arrangement illustrated in Figure 12, the available I/O resources are private to each partition, but do not have to be evenly divided. The partitions 1206, 1210 and 1214 can be networked together over a physical link 1202 within the machine, and that link can be extended off the machine to other computers.

What has just been created is the equivalent of three physically separate machines networked together. The difference between a conventional computer system and the inventive system is that, instead of having three physical boxes, there is only one box. Also, the exact configuration of each partition need not be determined until machine deployment. Another unique feature of the inventive system is the ability to dynamically configure the number/size of the partitions after machine deployment.

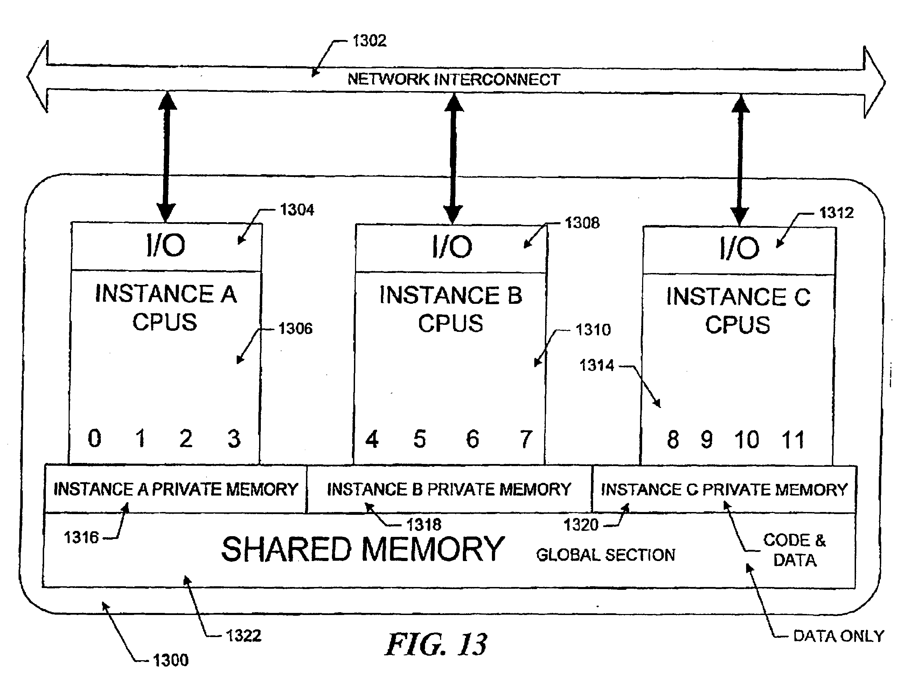

Figure 13 illustrates the inventive system configured as a shared-partial model in which the partitions share memory. In Figure 13, elements which correspond to elements in Figure 12 have been given corresponding numerals. For example, machine 1200 in Figure 12 has been designated as machine 1300 in Figure 13. As before, each partition 1306, 1310 and 1314, has its own private memory section, 1316, 1318 and 1320, respectively, in which code and data for that instance are stored. However, in this configuration, there is also a shared memory section 1322 in which data and/or code accessible by all instances 1306, 1310 and 1314 is stored. The three instances, 1306, 1310 and 1314, are also networked together by interconnect 1302.

The advantage of the configuration illustrated in Figure 13 is that large shared cache memories (for example, databases or file systems) can now be created and used jointly by several instances. The system also has the advantage that an instance of an operating system can deactivate or leave the configuration, and upon rejoining, can re-map into a still active cache memory. As cache memories become larger, this ability to remap into an existing memory is extremely important since it is very time-consuming to load all entries in very large cache memories into a private memory space.

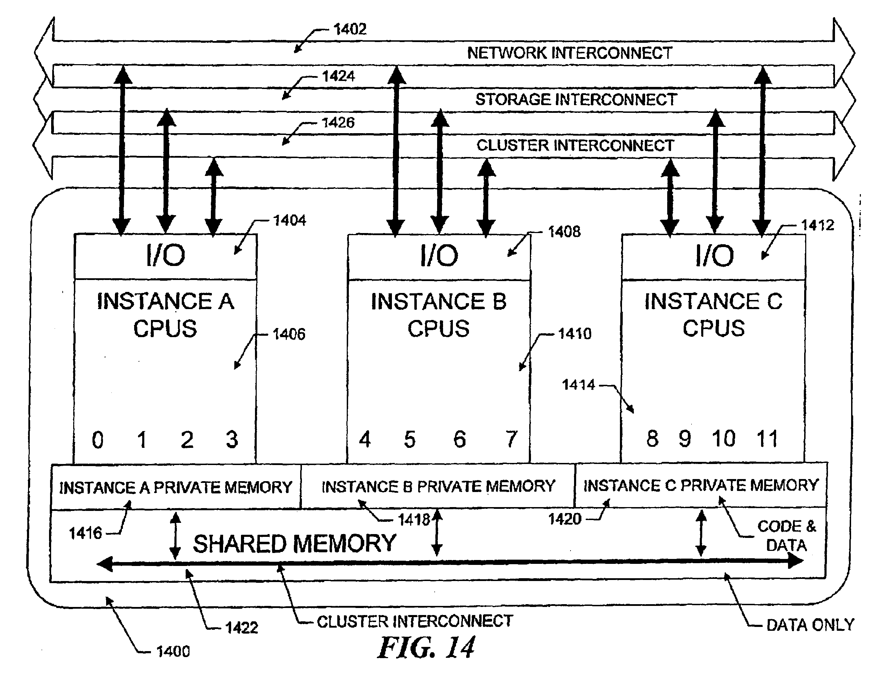

Figure 14 illustrates the inventive system configured to operate as a "shared everything" computer system. As with Figure 13, elements in Figure 14 that correspond to similar elements in Figure 12 and 13 have been given corresponding numerals. Each partition, 1406, 1410 and 1414, still has its own private memory, 1416, 1418 and 1420, respectively, in which code and data for that instance are stored. There is also a shared memory section 1422 in which data is stored. The three instances are networked together by interconnect 1402, but there is also a storage interconnect 1424 and a cluster interconnect 1426. Configuring the system for shared everything computing also brings the following advantages:
1) attributed lock manager (not shown) can use shared memory 1422 to store its lock cache (not shown), thus increasing lock performance.
2) a cluster interconnect 1428 can be placed in shared memory 1422, instead of using independent hardware, thus increasing cluster communication performance if the instances 1406, 1410 and 1414 are clustered.
3) partitions can be created for highly specialized functions. For example, a partition could be created without I/O controllers (not shown), effectively making it a "compute engine".

With the inventive system, it is possible to run all three computing models illustrated in Figures 12, 13 and 14 within a single computer box by appropriate configuration of partitions. That is, some partitions can operate as "shared nothing" computers. A separate group of partitions can operate as a "shared partial" computing system and a still further group of partitions can operate as a "shared everything" computing system. Further, it is possible for a given instance to simultaneously operate in a "shared partial" configuration with one set of instances and operate in a "shared everything" configuration with another (and completely separate) set of instances.

Regardless of the computing model, or combination of models, that are run under the inventive architecture, the ability to dynamically re-allocate resources is possible without affecting the integrity of any of the operating system instances. Specifically, the ability to migrate CPUs and memory between partitions is supported.
Thus, the system offers the possibility of a more linear scaling of system resources because system managers can assign resources to match application requirements as business needs grow or change. When a CPU is added to an inventive computer configuration, it can be assigned to any instance of operating system and reassigned later during system operation so that a "trial and error" method of assigning resources is a viable strategy. In particular, system managers can migrate CPUs among instances of operating systems until the most effective combination of resources is found. All instances of operating systems and their applications continue to run as CPUs are migrated. Finally, the distribution of interrupts across instances provides many l/O configuration possibilities; for example, a system's I/O workload can be partitioned so that certain I/O traffic is done on specific instances.

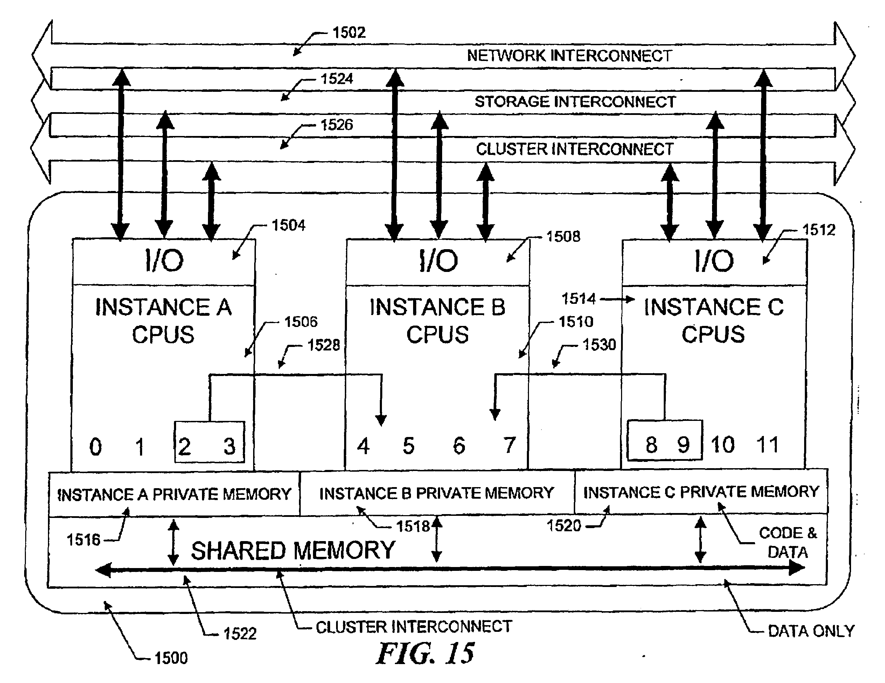

The inventive system can also transfer resources while the system is running. Thus, a component, such as a CPU, can be moved from one instance to another while the system electrical power remains on and the rest of the hardware system continues to run. This is illustrated in Figure 15. As with Figures 13 and 14, elements in Figure 15 that correspond to similar elements in Figures 12, 13 and 14 have been given corresponding numerals. Figure 15 illustrates the migration of CPUs 2 and 3 and CPUs 8 and 9 into instance 1510 as schematically illustrated by arrows 1528 and 1530, respectively. This migration creates an instance 1510 with eight CPUs. With such an arrangement, the instances are not required to operate in a "shared everything" configuration; the instances can be operating in any of the resource sharing levels and still fully support resource migration.

The inventive system allows individual I/O subsystems to be quiesced by nature of the fact that an operating system instance running in a partition can be shut down without impacting the remaining partitions. In general, if the hardware continues to run except for the component being swapped, the software keeps as many of the instances and their applications as possible running. The invention also supports "hot inswapping" which is a hardware feature that allows resources to be added to the system while the system is operating and electrical power is applied. An example of hot inswapping is additional memory. Assuming an operating system instance on a particular partition is capable of dynamically mapping additional memory, the system can absorb hot inswapped memory into the active computing environments running in the machine.

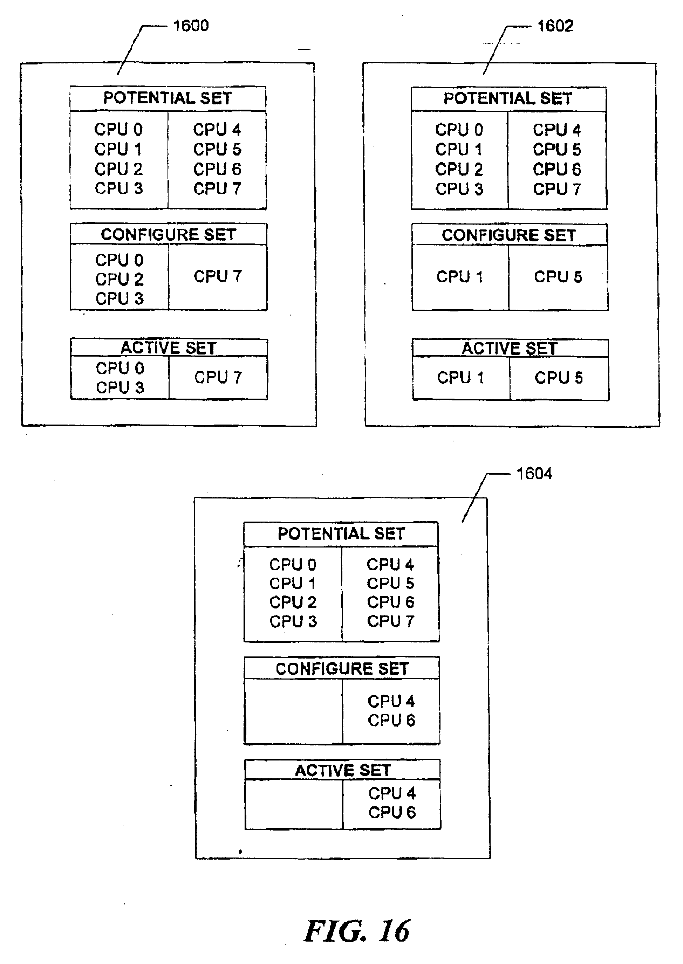

### D. VIRTUAL RESOURCE HANDLING IN A MULTI-PROCESSOR COMPUTER SYSTEM (FIGS. 16-18)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically, and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits both scalability and high performance.

The individual instances each maintain a separate record of all of the processing resources of the system. Each of the instances categorizes the processors based on their respective operational status relative to the instance. In a preferred embodiment, an instance maintains records of whether each CPU is compatible for operation with the instance, whether it is under the control of the instance and whether it is available for SMP operation within the instance. These different operational statuses represent a hierarchical categorization of the CPUs of the system, and the system is adaptable to additional categories. An additional status that may be used indicates whether a processor has been selected to immediately begin processing activities when first joining the instance.

In the preferred embodiment, the membership of the CPUs in any of the different categories of operational status is recorded by each instance maintaining bitvectors for each category, at least one bit of each bitvector corresponding to the membership status of one of the CPUs in that category. Typically, each bitvector has one bit for each of the CPUs such that, for example, a bitvector indicative of CPU control by the instance in question has a first bit set at a first assertion level if a first corresponding CPU is under the control of the instance. If the CPU is not under the control of the instance, the first bit is set to a second assertion level. With a bit representative of each of the CPUs, this bitvector then provides designations for each of the CPUs indicative of which are under control of the instance. Similarly, other bitvectors also provide designations for each of the CPUs, those designations indicating, for example, which CPUs are compatible for operation with the instance, which are available to the instance for SMP operation, and which would be allowed to join SMP processing activities immediately after being initialized. In this way, each of the instances may individually track all of the processing resources and what their operational statuses are relative to the instance.

In an alternative embodiment, designations indicating the operational statuses of processing resources relative to the instances of the system are maintained in a storage area accessible to all the instances. In particular, information regarding the compatibility of a processor with each of the different instances is provided. This allows each instance to identify whether a given processor might be appropriate for transfer to a particular instance.

### Virtual Resource Management

In a preferred embodiment of the invention, the CPU resources for the computer system are arranged in a particular hierarchy relative to each instance. That is, the CPUs of the system are identified by each instance, and each instance categorizes the CPUs according to its own use or potential use of them. This is explained in more detail below.

In the preferred embodiment, each of the instances maintains a record of the CPUs in the system, categorizing them each in one of three sets: the "potential" set; the "configure" set; and the "active" set. From the perspective of a given instance, the potential set covers all of the CPUs which could possibly execute on that instance at any time. This typically includes all CPUs in the system except for those which are of a configuration or revision level which makes them incompatible with the instance and/or the partition on which it is running. Each instance makes a determination of those CPUs in the system that are compatible with it, and includes them in its potential set.

The configure set contains all of the CPUs that, for the given instance, are under that instance's control. That is, the configure set includes all the CPUs that are controlled (or managed) by the instance and which are currently participating, or are capable of future participation, in SMP operation. Once control of a CPU is acquired by the instance (indicated by the setting of the "current_owner" bit of that CPU in the per-CPU bits of the HWRPB for the partition on which the instance is running), there is a period during which it initializes itself to operation with the new instance. During this period, the CPU is not participating in SMP operation, but is nonetheless part of the configure set for that instance. Once the initialization is complete, the CPU makes a request to join SMP operation. Once it has joined, the new CPU is considered part of the active set as well. The active set includes all CPUs that are participating in SMP operation for the instance. A CPU in active mode is capable of pulling instructions from the instruction queue as part of the scheduling model of the instance.

Figure 16 is a schematic representation of several partitions 1600, 1602, 1604, and how the instance for each of the partitions has organized the CPUs into sets. Although this example uses only eight different CPUs, it will be understood by those skilled in the art that any number of CPUs may make up the system. In the Figure 16 example, each of the instances has identified each of CPUs 0-7 as being in its potential set. Thus, either these represent all of the CPUs in the system, or any other CPUs in the system are not compatible with any of the instances. Of course, other examples may exist where a CPU is in the potential set of one instance, but not in that of another, assuming the two instances have different compatibility requirements.

The configure sets for the instances on partitions 1600, 1602, 1604 are different for each instance. This must always be the case, since only one instance can have control of a CPU resource at any given time. As shown, CPU 0, CPU 2, CPU 3 and CPU 7 are in the configure set of the instance running on partition 1600. CPU 1 and CPU 5 are in the configure set of the instance running on partition 1602. Finally, CPU 4 and CPU 6 are in the configure set of the instance running on partition 1604. Thus, these CPUs are controlled, respectively, by these different instances.

The CPUs in the active sets of the three instances running, respectively, on partitions 1600, 1602, 1604 are the same as those in the configure sets for those instances, with the exception of CPU 2, which is in only the configure set of the instance of partition 1600. In this case, it may be assumed that CPU 2 has recently been moved to the control of the instance on partition 1600, and is going through an initialization stage before joining SMP operation. Once it does join the other CPUs of the system in actual processing activities, it will become part of the active set for the instance of partition 1600.

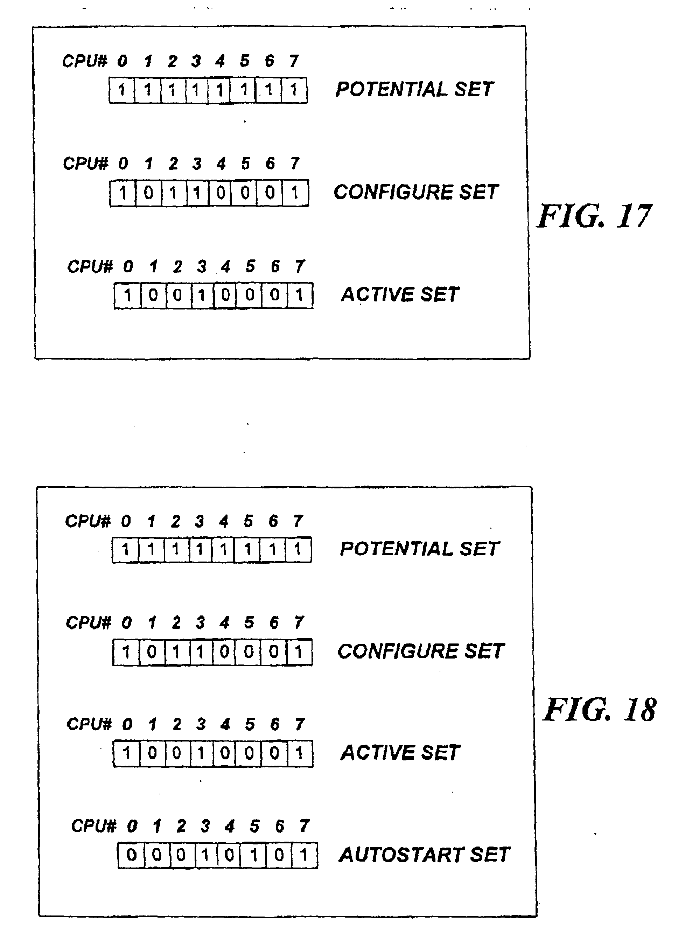

In the preferred embodiment, each of the instances keeps track of the status of its ownership rights in the CPUs via groups of bits, or "bitvectors." The bitvectors of each instance are used for tracking CPU participation in that instance's potential set, configure set and active set, respectively. An example of this is shown schematically in Figure 17, which depicts schematically the bitvectors for each of the potential, configure and active sets of the instance running on partition 1600.

As shown in Figure 17, for each of the groups of bits in question, the assertion level of a bit indicates the relative membership of a CPU represented by that bit in one of the three designated sets recognized by the instance. Each bit in a given bitvector represents the status of one of the CPUs relative to that set. The bitvectors in Figure 17 each correspond to a different set, and the particular CPU identified by a given one of the bits is indicated in the figure by the "CPU#" label above the representation of the bit. Thus, for the instance represented in Figure 17, each of the CPUs is a member of the instance's potential set. This corresponds to the listing of CPUs shown under the "potential set" heading of the instance on partition 1600 (Figure 16). Similarly, since CPUs 0, 2, 3 and 7 are members of the instance's configure set, the bits corresponding to those CPUs in Figure 17 are each set to "1", while the others are "0". Finally, the active set has the bits corresponding, respectively, to CPUs 0, 3 and 7 set to "1", while the remaining bits are "0". This indicates that CPUs 0, 2, 3 and 7 are in the configure set of the instance of partition 1600, while only CPUs 0, 3 and 7 are in its active set.

The bitvectors shown in Figure 17 are limited to representing eight CPUs. However, this is for ease of description only. Those skilled in the art will recognize that the computer system is likely to have many more CPUs and currently, in the preferred embodiment, sixty-four different bits are used for each bit group so as to allow up to sixty-four CPUs, although more may be added. Furthermore, those skilled in the art will recognize that alternative methods exist for tracking the operational status of CPUs relative to the instances of the system and those alternatives are considered to be within the scope of the invention.

The categorization of CPUs as described above provides a hierarchical breakdown of CPU sets for the instances of the system. In this regard, different levels of operation are recognized independently by each instance, and additional levels may be added in the future. The CPUs that are members of the configure set of a given instance correspond to those for which the partition on which that instance is running is indicated as the current_owner in the configuration tree. Those which are members of the active set are not only designated as being currently owned by the instance in question, but are also available to join SMP processing. Thus, the invention expands the information base of each instance by indicating to it not only which processing sources are currently available for its use, but what other processors are in the system as a whole that might be transferable to the instance. This would allow, for example, the instance to selectively request processors from other instances that were known to control them.

In an alternative embodiment of the invention, each instance uses an additional set to categorize the CPU resources of the system. This additional set is referred to as the "autostart" set, and it identifies those processors which an instance allows to immediately start processing activities after entering the configure set. Typically, when a CPU is moved to a new partition, it is halted by the new instance, and must then wait for a specific start instruction from the instance before resuming processing activities. However, a processor in the autostart set would not be halted by the new instance, and would immediately upon initialization request to join SMP processing.

Figure 18 is similar to Figure 17 in that it shows how different CPUs are identified with different sets by the bitvectors of a given instance. Figure 18 also shows a schematic representation of a bitvector used to identify those processors which are in the autostart set. As shown, the autostart set is not a subset to any of the other sets, and therefore may have settings different from either from the configure or the active sets. For example, although CPU 0 is in the active set, and therefore currently participating in SMP processing, it is not a member of the autostart set, and therefore, when it first joined the instance, it was halted, and required a specific start instruction before it was able to join SMP processing. CPU 5, on the other hand, is not presently in either of the configure set or the active set, but is identified as being within the autostart set. Thus, while CPU 5 is currently controlled by another instance on the system, if it were to be migrated into the control of the instance for which the sets of Figure 18 are shown, it would not be halted by the instance, but would undergo any necessary initialization and then attempt to join the ongoing processing activities.

In another alternative embodiment, the information provided by the sets described above, which for each instance is local to that instance, could also be globally available to all of the instances of the system. By locating all of the set information for all of the instances in a central array in shared memory, all of the instances could be given access to information regarding which of the processors were compatible with which instance. Given this information, a push migration of a processor that was not in response to a specific request from a given instance, could be directed to an instance for which that processor was known to be compatible. Thus, a situation in which a processor was migrated to an instance with which it was not compatible would be avoided. Furthermore, if it was desired, an instance requesting an additional resource could do so as a general broadcast request, rather than a targeted request, and could rely on another instance servicing that request to only migrate a resource which it knew to be compatible with the requesting instance. A variation of this embodiment would provide as the global array only the information regarding the potential set of each instance. Each instance would thereby have its own local set information to determine the status of its own resources, and would have access to the global array for compatibility information regarding all of the instances in the system.

### E. DYNAMICALLY SHARING MEMORY IN A MULTIPROCESSOR SYSTEM (FIGS. 1-8B)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically, and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits both scalability and high performance.

The execution environment for a single copy of an operating system, or instance, is referred to as a partition. A community is a grouping of partitions which can share resources. Memory may be private to a particular partition or may be shared by partitions within a community. When an APMP computer system is formed the creating instance reads a configuration tree and builds management structures for the shared resources, including memory, owned by the community. A single system may have one or more communities, each with its own representation within the configuration tree.

Configuration software selects a group of shared memory pages to be the synchronization point for an APMP computer system. These pages contain information used to determine whether other instances are active members of the APMP computer system. An indication of the location of these synchronization pages is stored within the configuration tree. As an instance joins the APMP computer system, it uses the information within the configuration tree to map to the shared pages. From the contents of the shared pages, the instance can determine whether it is joining an active APMP computer system or it is creating a APMP computer system. If the instance is creating a APMP computer system, it can reconfigure the pages used to synchronize the APMP computer system by modifying the configuration tree. In this way, physical memory that was previously used as a synchronization point may be removed from the system.

Shared memory may be organized in groups, referred to as common property partitions, according to the hardware characteristics of the memory. Shared memory may be assigned to regions which can be mapped simultaneously by one or more operating system instances. Shared memory may also be mapped by applications running on one or more operating system instances. Shared memory may be "borrowed" by an operating system instance for use as the instance's private memory. Additionally, non uniform memory access is accommodated, in the case of private memory, by allowing the private memory to be owned by the instance whose CPUs have the fastest access to the memory.

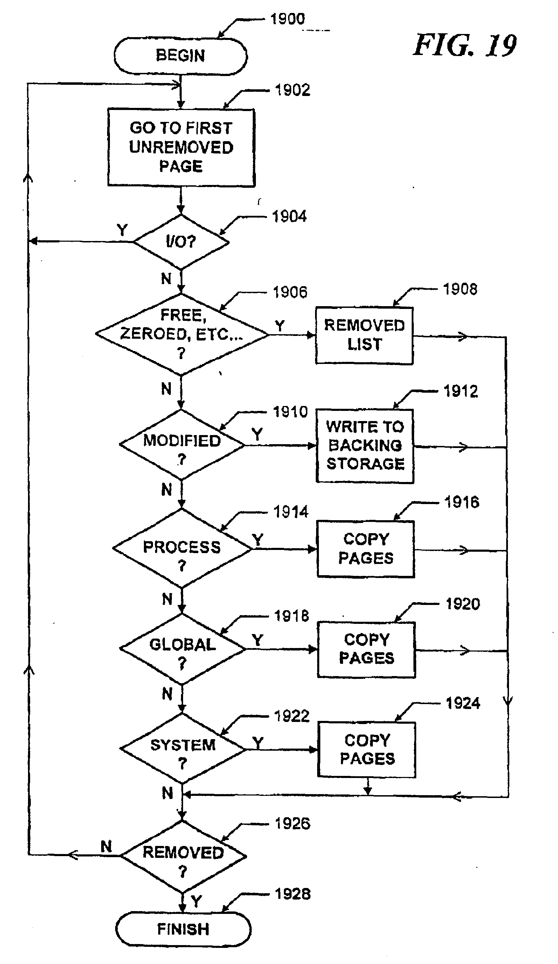

### F. RECONFIGURING MEMORY IN A MULTIPROCESSOR SYSTEM WITH SHARED MEMORY (FIGS. 19-21)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically, and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits scalability, flexibility, and high performance.

Memory may be reconfigured into or out of a partition or community under software control and hardware hot in-swapping or out-swapping are supported. In general, memory may be in one of three states: private, shared, or unowned. Memory is private if it is "owned" by a single system partition. Memory is shared if it is owned by a community. A community is a collection of one or more partitions which may share resources. Otherwise, it is unowned. Memory may be reconfigured between any of three states directly. For example, memory may be reconfigured from private in one partition to private in another partition, or from shared in a community to private in a partition. Memory is placed in the unowned state by an operating system instance and console software, reflected in the system configuration tree, before the memory can be out-swapped or in-swapped. A page fram number database is sized to include all possible memory that can be in-swapped and added memory pages may be employed as page frame number database entry pages. Consequently, new memory can be readily accommodated. As noted above, to out-swap memory, the memory must be in the unowned state. If the memory to be out-swapped is in either the shared or private state, it is placed in the unowned state to permit out-swapping.

### Reconfiguring Memory

The Page Frame Number (PFN) database design allows for memory to be reconfigured into or out of the operating system instance under software control. Private memory may be reconfigured to be shared, shared memory may be reconfigured to be private, and memory which is private to one partition may be reconfigured to be private to another partition. Memory which is private or shared may also be reconfigured to be unowned. Memory reconfiguration can support hardware hot in-swapping, or hot out-swapping. When memory is in an "unowned" state in a configuration tree, it can be reconfigured into an instance's private memory, or as part of shared memory in a community. When new memory is in-swapped into a system, the memory is initially placed in the unowned state. Additionally, before memory can be out-swapped from a system it must be in the unowned state. Therefore, to support memory hot-swapping, the operating system instance and console software must reconfigure memory into and out of the unowned state. When reconfiguring memory, the range of pages is, illustratively, 8 megabyte (MB) aligned (system page size squared divided 8 bytes). The range of pages is a multiple of 8 MB in size and, if pages within the range to be reconfigured out of the system are in use, other restrictions may apply, as described below.

New memory may be added to the system at any time since the PFN database is sized to include all possible memory that can be in-swapped and the new pages can always be used to make up the PFN database entry pages. To remove memory from a system, it is first determined if the range of pages is private, shared, or unowned. If the memory is already marked unowned, it is considered to be removed.

For the removal of private memory, a removed page list of page frame numbers, similar to a free page list, is established to support the removal of memory. If it is determined at any time that the pages cannot be removed on line, the system can be shut-down, the pages configured as unowned with console software, and the operating system instance restarted. If the console is using some or all of the pages in the range, the console relocates itself to a different set of pages. This relocation may be accomplished in a variety of ways. For example, the console may copy its pages to another sort of pages owned by the partition, then start executing on the other set of pages. Alternatively, another console within another partition can dissolve the partition, reassign the range of pages to "unowned", then reform the partition without the memory. Additionally, the entire system could be shut down, the memory removed, and the system restarted. The removal operation can be abandoned at anytime by moving the pages from the removed page list to the free, zeroed, or bad page lists.

If the range of pages to be removed is in private memory, the following steps are repeated until all pages can be removed or the removal operation is abandoned. The process is illustrated in the flowchart of Figure 19. Before entering the process illustrated in the flowchart of Figure 19, it is determined whether there is sufficient memory to allow the removal of the memory. A system parameter, fluid page count, is typically employed to indicate the amount of spare memory readily available. If this fluid page count is too low, that is if there are insufficient fluid pages in the system to accommodate the removal, an error is returned to the user, otherwise, each page in the range to be removed is examined as described in the steps illustrated in Figure 19.

The process begins in step 1900 and proceeds from there to step 1902 where the first unremoved page within a page range to be removed is located. From step 1902, the process proceeds to step 1904, where it is determined whether the page or pages to be removed have outstanding input/output operations and these pages are skipped; once their I/O operations are completed, the pages can be reconsidered for removal. If the pages have outstanding I/O, the operation returns to step 1902 where the first unremoved page is located and from there to step 1904 as described previously. To allow the system to perform other work, a system may want to stall at this point waiting for I/O to complete.

If the current unremoved page has no I/O pending, the process proceeds from step 1904 to step 1906, where it is determined whether the page is on the free, zeroed, untested, or bad page lists. If any of the memory pages are on any of these lists, the page is removed from the list in step 1908 and placed on the removed page list. Free pages are handled first so that copied pages are not copied onto free pages that are also part of the reconfigured range. From step 1908, the process proceeds to step 1926 where it is determined whether all pages have been placed in the removed page list and, if they have, the process proceeds to finish in step 1928. On the other hand, if all pages have not been placed on the removed page list, the process returns to step 1902 and from there as previously described. If desired, an implementation may choose to limit the number of iterations and execute an error recovery mechanism to avoid looping forever.

If there are no pages on the free, zeroed, untested, or bad page lists, the process proceeds from step 1906 to step 1910 where it is determined whether there are any pages on the modified page list. If there are no pages on the modified page list, the process proceeds to step 1914. On the other hand, if there are pages on the modified page list, the process proceeds to step 1912 where the pages are written to backing storage such as a system page file. From step 1912 the process proceeds to step 1926 and from there as previously described. On the other hand, if the process had proceeded to step 1914 from step 1910, in step 1914, it is determined whether any pages are process pages, i.e, pages where an application runs. Since each process may have multiple threads, each process has its own page table apart from other processes. If any pages are process pages, an AST which provides a mechanism for executing within the process' context to gain access to the process page tables, is sent to the process and the AST sets the process single threaded if necessary to synchronize access to the page tables. New page frame numbers are allocated for the pages and the contents of the pages are copied to the new page frame numbers. The old page frame numbers are placed on the instance's removed page list in step 916. From step 1916, the process proceeds to step 1926 and from there as described previously.

If it is determined in step 1914 that none of the pages are process pages, the process proceeds to step 1918 where it is determined whether any of the pages are part of a global section i.e., a set of private pages acesssed by several processes simultaneously. If any of the pages are part of global section, the process proceeds from step 1918 to step 1920. In step 1920, the name of the global section may be displayed to a user so the user can determine which application to shut down in order to free memory. Alternatively, an operating system which can track where pages are mapped, could suspend all processes mapped to the section, copy all pages, modify all process page table entries, and place the old page frame numbers on the removed page list. From step 1920, the process would then proceed to step 1926 and from there as described previously. If in step 1918 it is determined that there are no pages which are part of the global section, the process proceeds to step 1922 where it is determined whether any page is mapped into system address space. If none of the pages is mapped into the system address space, the process proceeds from step 1922 to step 1926 and from there as previously described.

On the other hand, if there are pages mapped into the system address space, the process proceeds to step 1924, where those pages that are read only are copied. Once copied, the page is placed on the removed page list. Read/write pages are copied only while all CPUs within the instance are temporarily blocked from execution such that they do not change the contents of the page. One page is copied at a time and copied pages are placed on the remove page list. After migration in step 1924, the process proceeds to 1926 and from there as previously described.

In order to remove shared memory, a new list of page frame numbers is established within each shared memory common property partition data structure, i.e., within each SHM CPP structure within the APMP data base. The list is called the common property partition removed page list. These lists are temporary holding places for all pages that are ready to be removed. Only when all pages within the 8 MB range are located on the appropriate remove page list, can the pages be removed. At any point in time, if it is determined that the pages cannot be removed while the sharing set (the set of instances which share resources, such as memory) is operational, the sharing set can be dissolved, the pages marked unowned, and the sharing set reformed. The removal operation can be abandoned at any time by moving the pages from the common property partition removed page list to the free page or bad page lists depending on the previous state of the page, i.e., to the free page list if it had been on the free page list and to the bad page list if it had been on the bad page list.

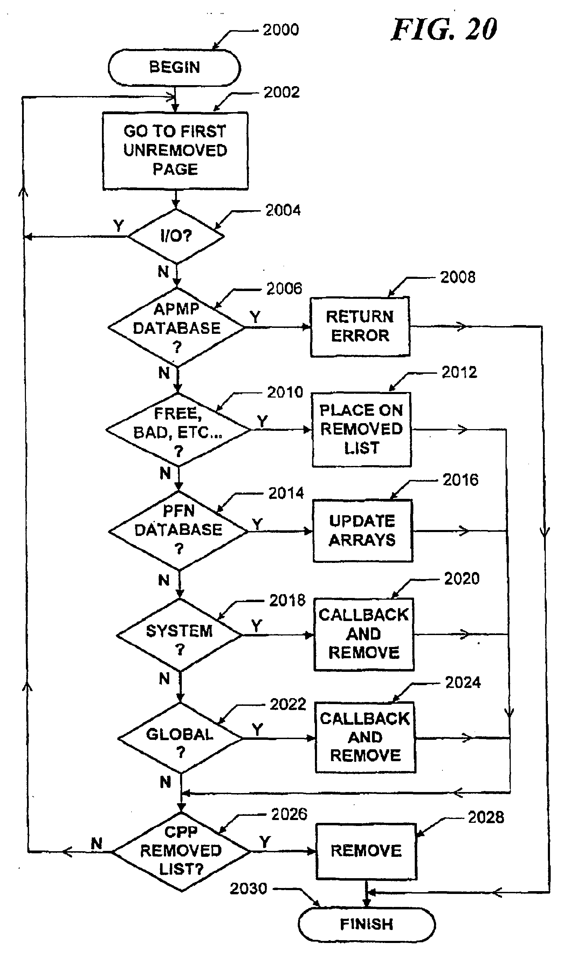

The process of removing shared memory is illustrated in the flowchart of Figure 20 with the process beginning in step 2000 and proceeding from there to step 2002 whereby the first unremoved page in the range of pages to be removed is located. From step 2002 the process proceeds to step 2004 where it is determined whether any pages within the page range to be removed have outstanding I/O. Those pages that have outstanding I/O are skipped and the process returns to step 2002 to locate the first unremoved page, as previously described. To allow the system to perform other work, a system may want to stall at this point waiting for I/O to complete.

If no pages have outstanding I/O, the process proceeds from step 2004 to step 2006 where it is determined whether any pages are part of the APMP database. If any of the pages are a part of the APMP database, an error is returned to the user in step 2008. In such a case, the sharing set must be reformed with the APMP database on different pages. This can be accomplished by dissolving the sharing set, marking the old APMP database pages as unowned, choosing a new set of APMP database pages, then recreating the sharing set. The process proceeds from step 2008 to finish in step 2030.

The page frame number database entry pages describing those pages are unmapped and freed to the common property partition free page list, the PMAP arrays that describe shared memory are updated to reflect the change and the console is called to mark the page unowned. From step 2028, the process then proceeds to finish in step 2030. If, in step 2026, the process had determined that all pages were not on the shared memory common property partition removed page list, the process returns from step 2026 to step 2002 and proceeds from there as described previously. If in step 2006, the process determines that none of the pages are part of the APMP database, the process proceeds to step 2010 where it is determined whether any of the pages are on the free, bad, or untested page lists, and, if so the pages are removed and placed on the common property partition removed page list in step 2012. From step 2012, the process proceeds to step 2026 and from there as previously described.

If it is determined in step 2010 that none of the pages are on the free, bad or untested page lists, the process proceeds to step 2014, where it is determined whether any pages are shared memory page frame number database pages and if so, the process proceeds to step 2016. In step 2016, assuming the range of pages comprise the only pages left within the shared memory common property partition that are not on the common property partition removed page list, the shared memory common property partition is removed from the community. In step 2016, the shared memory common property partition is marked as invalid so no attempts are made to allocate pages from it. The PMAP arrays that describe shared memory are updated to reflect the removal of the memory. Other shared memory APMP database structures are updated to reflect the removal of the shared memory common property partition and the console is called to mark the pages unowned. Alternatively, if the PFN database pages are not the only pages left within the shared memory common property partition not on the removed page list, an error may be returned to the user, in which case, the user could dissolve the sharing set, mark the pages unowned, and recreate the sharing set. To copy these pages, the shared memory common property partition which contains the pages could be marked as temporarily invalid and the mapping of the PFN database pages marked read only. One instance could then copy the pages to a new set of pages allocated from the common property partition. All instances would then modify their mappings from the old page to the new pages and the old pages could then be placed on the common property partition removed page list. The process would then proceed from step 2016 to step 2026 and from there as previously described.

If it is determined in step 2014 that some pages are not shared memory page frame number database pages, the process would proceed to step 2018 where it is determined whether any of the pages are part of a shared memory region that is mapped into systems space and if so the process would proceed to step 2020 where shared memory region callback routines may be called and retain the memory used to be removed. The callback routines can either shut down the application or create a new shared memory region and start using the new region. Alternatively, or in conjunction with the callback routines, the tag of the shared memory region can be displayed through the console. This would allow a user to assist in shutting down the application which is using the shared memory. From step 2020, the process would then proceed to step 2026 and from there as previously described.

If, in step 2018, it is determined that none of the pages are part of a shared memory region that is mapped into system space, the process proceeds to step 2022 where it is determined whether any pages are part of a shared memory global section, i.e., a set of shared page mappings into one or more process' address space so all the processes can have access to the same pages. If there are some pages that are part of a shared memory global section, the process proceeds to step 2024, where a callback routine is called on all instances that have this global section mapped. All processes that are mapped to the global section can be suspended, the code can then copy all data from one set of pages to another, modify all process page table entries, modify the global section data structures and place the old page frame numbers on the common property partition removed page list. Alternatively, each process that maps to the global section can be notified to shut down, or, the names of the global sections can be displayed so the user can determine which application should be shut down to assist in the removal operation. From step 2024, the process would then proceed to step 2026 and from there as previously described.

To ensure, if I/O has been initiated to shared memory, that the memory is not reused for another purpose before we are sure that all I/O in shared memory is completed, an I/O device may interrupt the instance when I/O has completed, the system would then record that the I/O is complete. Alternatively, when all I/O buses within the instance's partition have been reset, I/O has been completed. In the SHM_DESC structure in private memory, there is a field called I/O refcnt, which stands for I/O reference count. There is one SHM_DESC structure per shared memory region.

In the SHM_REG structure in the APMP database, there is a bitmask called the "attached bitmask." There is one SHM_REG structure per shared memory region. The attached bitmask contains one bit for each instance in the APMP system. If a bit in the attached bitmask is set, the corresponding instance is attached to the region.

In the configuration tree structure, maintained by the console, there is an ID field in the partition node that can be set or cleared by calling a console callback routine. During system boot after the partition's I/O buses have been reset this field in the instance's partition node is cleared.

When a sharing set is being created:
1) Loop through all other instance's partition nodes in this community.
2) If the ID field is non-zero and there is no instance running on the partition as indicated within the configuration tree, reset all I/O buses connected to the partition.
3) Set the ID field in this instance's partition node to the ID (a number that increases each time the APMP database is recreated).

When an instance is joining a sharing set:
1) Set the ID field in the instance's partition node to the current ID.

During a sharing set exit:
1) Call a routine which detaches from all shared memory regions.
2) Clear the ID field in the instance's partition node in the config tree.

When an I/O is initiated, the routine shm_reg_incref is called for each page on which I/O will be performed. When the I/O is completed, the routine shm_reg_decref is called for each page.
Routine shm_reg_incref:
Input: Address of PFN database entry for page
Read the shared memory region id from the PFN database entry.
Obtain the SHM_DESC address in private memory for this region.
Increment I/O refcnt.
Routine shm_reg_decref:
Input: Address of PFN database entry for page
Read the shared memory region id from the PFN database entry.
Obtain the SHM_DESC address in private memory for this region.
Decrement I/O refcnt
Routine shm_reg_create:
Inputs: tag
   virtual length
   physical length
   virtual mapping information
   plus additional information
Output: shared memory region id
Search for a SHM_REG structure in shared memory whose tag matches the tag
supplied.
If no such SHM_REG structure is found:
- Allocate a new SHM_REG structure
- Acquire the SHM_REG lock
- Set the "init in progress" bit in the SHM_REG structure
- Allocate shared memory pages for the region
- Clear the "init in progress" bit in the SHM_REG structure
- Release the SHM_REG lock
Set the bit in the SHM_REG attached bitmask for this instance.
Map to the shared memory region using the virtual mapping information supplied.
Routine shm_reg_delete:
Input: shared memory region id
Obtain the SHM_DESC address in private memory for this region.
If the I/O refcnt field is non-zero, return an error.
Unmap the shared memory region.
Obtain the SHM_REG address in shared memory for this region.
Clear the bit in the SHM_REG attached bitmask for this instance.
If the attached bitmask has more bits set, return.
If the SHM_REG attached bitmask has no bits set:
- Acquire the SHM_REG lock
- Set the "delete in progress" bit in the SHM_REG structure
- Deallocate all shared memory pages to the appropriate shared memory free page lists.
- Clear the "delete in progress" bit
- Release the SHM_REG lock
- Clean up the SHM_REG data structure
During system crash:
Reset all I/O buses.
Clear the ID field in the instance's partition node.
Call system code to interrupt another instance to indicate that the instance has crashed. (The interrupt handler on the other instance calls
shmem_APMPDB_recover.)
Initiate crash dump.
During heartbeat monitoring:
If an instance's heart does not beat for an amount of time, the instance is declared dead and is removed from the sharing set.
Acquire the SHM_REG synchronization lock, breaking the lock if necessary. If the lock was held by the dead instance:
If the SHM_REG structure indicates that initialization was in progress or that the region was in the process of being deleted, call shm_reg_delete.
The routine shmem_APMPDB_recover is called on at least one of the other instances. In this case, the ID Field in the instance's partition node is not cleared.
Routine shmem_APMPDB_recover:
Input: Instance ID of the dead node
Loop through all SHM_REG structures in the APMP database.
If the crashing instance was attached to the region:
1) If the ID field in the instance's partition node is non-zero, this might indicate that the instance was halted, not crashed. I/O devices may still be writing to shared memory.
   Loop to the next SHM_REG structure leaving this instance attached and the shared memory region in place. When the instance joins the sharing set again, it will clear the attached bit after having reset the I/O buses. It will delete the shared memory region if it was the last instance attached to the region.
2) If the ID field in the instance's partition node is clear: clear the bit for the instance in the attached bitmask
If the attached bitmask has no bits set:
Call shm_reg_delete
Loop to the next SHM_REG structure
After all SHM_REG structures have been processed, execute more shared memory recovery code.
Routine shmem_sharing _set_join :
Input: Instance ID of this instance.
Map to the APMP database in shared memory.
Execute other shared memory community join code.
Loop through all SHM_REG structures in the APMP database.
If this instance was attached to the region:
- Clear the bit for this instance in the attached bitmask
If the attached bitmask has no more bits set
- Call shm_reg_delete
Loop to the next SHM_REG structure
After all SHM_REG structures have been processed, return.

To choose the initial APMP database pages, the routine shmem_config_APMPDB is called by APMPDB_map_initial to choose the intial set of APMPDB pages.

### Data structures:

The community node in the config tree contains a 64-bit field, called APMPDB_INFO, which is used to store APMPDB page information. The first 32-bits, APMPDB_INFO[31:0], is the low PFNof the APMPDB pages. The second 32-bits, APMPDB_INFO[63:32], is the page count of APMPDB pages.

Each instance keeps an array in private memory called the "shared memory array." Each element in the array contains a shared memory PFN and a page count. The entire array describes all shared memory owned by the community that this instance is a part of.

The configuration tree may contain tested memory bitmaps for shared memory. If the configuration tree does not contain a bitmap for a range of memory, the memory has been tested and it is good. If a bitmap exists for a range of memory, each bit in the bitmap indicates whether a page of shared memory is good or bad.

A value, MAX_APMPDB_PAGES, is set to the maximum number of pages required to initialize a system. This number should be smaller than the granularity of shared memory. MAX_APMPDB_PAGES should be a small number to increase the chances that contiguous good memory can be found for the initialization of the APMP database.

Console callback routine set_APMPDB_info:
Inputs: new_APMPDB_info Bits[31:0] = first APMPDB page frame number
   Bits[63:32] = number of pages specified for the APMP database
   old_APMPDB_info - value read from the GDMB_INFO field in the community node.
Outputs: None.
Status: Error = Value in APMPDB_INFO does not match old_APMPDB_info
   Success = APMPDB_INFO has been updated with new_APMPDB_info

This routine may be more complex if multiple copies of the configuration tree are maintained by a console.
1. Read APMPDB_INFO from the community node
2. If APMPDB_INFO does not equal old_APMPDB_info, return an error
3. Store new_APMPDB_INFO into APMPDB_INFO with an atomic instruction

A routine, SHMEM_config_APMPDB, is used to configure the APMP database. The routine provides the first APMP database page frame number and the number of pages specified for the APMP database. The routine proceeds as follows:
(1) Obtain a pointer to the community node within the configuration tree.
(2)Traverse the configuration tree creating the shared memory array. If there is no shared memory, return an error.
(3) Read the APMPDB_INFO field
(4) If APMPDB_INFO field is non-zero
Set PAGES to APMPDB_INFO
Search the shared memory array to ensure that pages PFN through PFN+PAGES-1 are in shared memory
If these pages are in the shared memory array:

| | | |
|---|---|---|
| | | if a tested memory bitmap exists, check the bitmap to ensure |
| that | | these pages are not marked bad |
| | | if all the pages are good, cal set_APMPDB_INFO to write the |
| PFN | | and PAGES into the APMPDB_INFO field |
| | | if SET_APMPDB_INFO returns an error, return to (2) |
| | | If SET_APMPDB_INFO returns a success, return PFN and |
| PAGES | | to the caller |
| | If any of the pages are not in shared memory or are bad | |
| | | Call SET_APMPDB_INFO to clear the APMPDB_INFO field |
| | | If SET_APMPDB_INFO returns an error, return to (2) |
| | | If SET_APMPDB_INFO returns success, go to (5) to choose |
| new | | APMPDB pages |

(5) Set PAGES to MAX_APMPDB_PAGES
(6) Loop through the shared memory array. For each element in the array:
(6.1) Set PFN to the lowest shared memory PFN in the range.
(6.2) If a tested memory bitmap exists, check the bitmap to ensure that these pages are not marked bad
(6.3) If all the pages are good
   Call SET_APMPDB_INFO to write PFN pages intothe APMPDB field
   If SET_APMPDB_INFO returns an error, return to (2)
   If SET_APMPDB_INFO returns success, return PFN and PAGES to the caller
(6.4) If a bad page is encountered within the range
   Set PFN to the highest numbered bad PFN+1
   If PFN+PAGES-1 is still within the shared memory array element return to (6.2)
   If PFN+PAGES-1 is greater than the range described by this shared memory array element, move to the next shared memory array element
(6.5) If there are no shared memory array elements left, return an error.

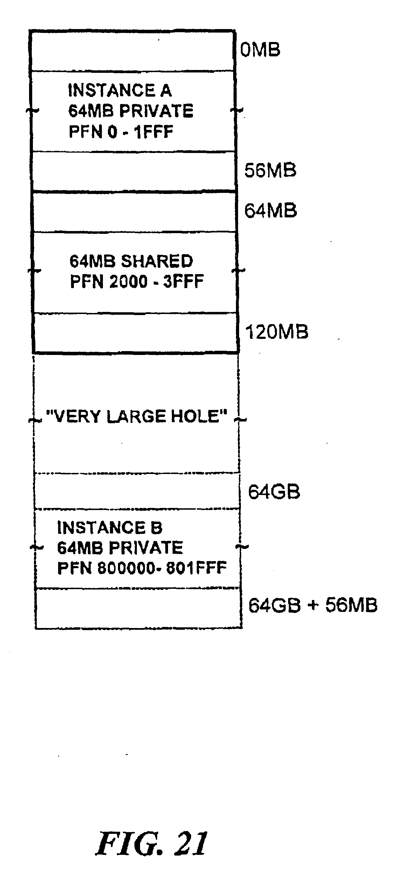

An illustrative page frame number database layout is illustrated by the memory map of Figure 21. In this illustrative example the system includes two instances, A and B, each with 64 megabytes of private memory and 64 megabytes of shared memory. The memory is arranged as eight kilobyte pages, with private memory for instance A extending from page frame number (PFN) 0 through PFN 1BFF (hexadecimal). Sixty four megabytes of shared memory extends from PFN 2000- to PFN 3FFF. Private memory for instance B extends from PFN 800000 through PFN 801FFF. The memory used to hold the PFN database for instance A comes from instance A's private memory (0-1FFF), the memory used to hold the PFN database for instance B comes from instance B's private memory (2000-3FFF), and the memory used to hold the PFN database for shared memory comes from the shared memory (800000-801FFF). Instance A cannot access the PFN database entries for Instance B's memory because, as illustrated, that memory region is not mapped into the system space for instance A. Similarly, Instance B cannot access the PFN database entries for Instance A's memory because that memory region is not mapped into the system space for instance B. Both Instances A and B map the shared pages into the PFN database entries for shared memory. Instances map to the shared pages with private memory page tables because private memory and shared memory PFN database entries may be mapped by the same page table pages. As noted above, the granularity of physical memory may be chosen as the least common multiple of PFN database entry size and memory pages size. In the illustrative example the memory page size is 8 kilobytes and the granularity of physical memory is equal to the page size squared divided by eight (bytes), or 8 MB. Page sizes of 16, 32, and 64 KB yield physical memory granularity of 32, 128, and 512 MB, respectively.

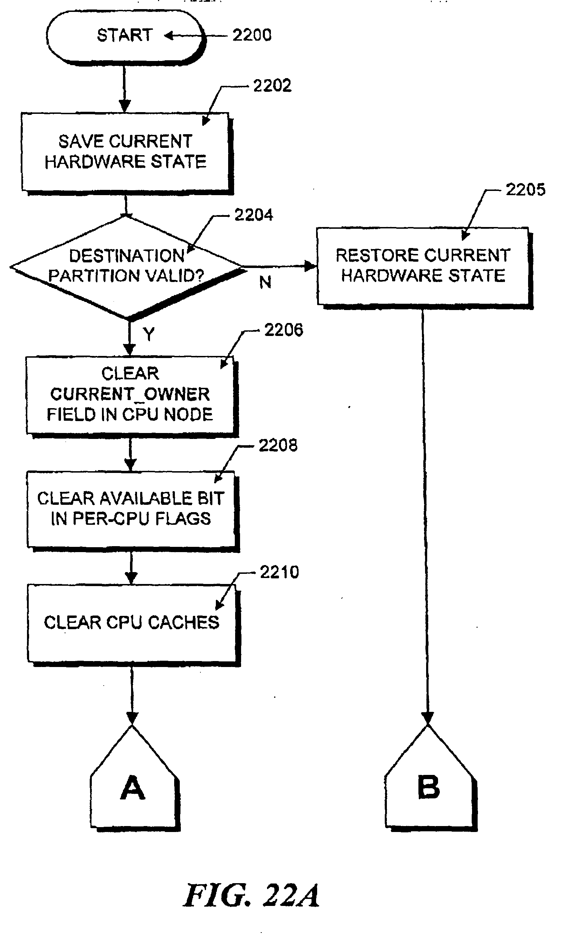

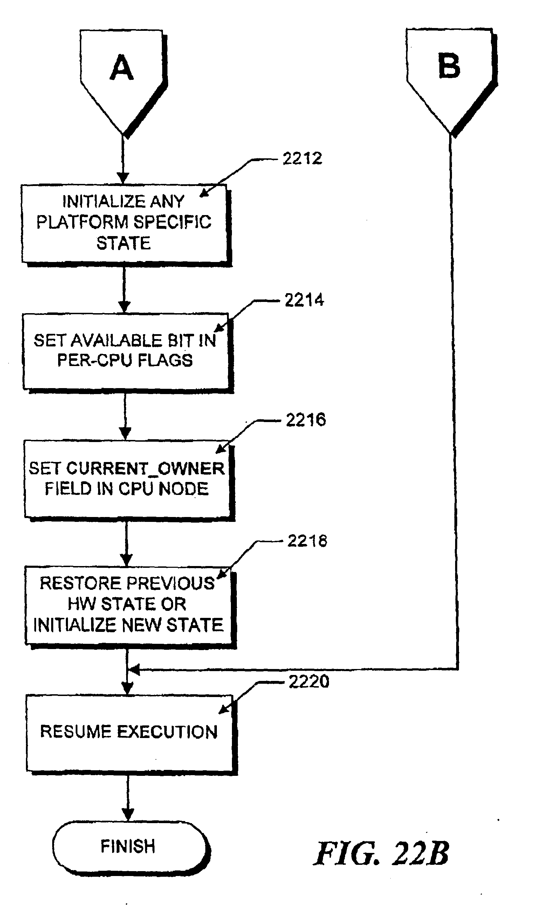

### G. FAILURE RECOVERY IN A MULTI-PROCESSOR COMPUTER SYSTEM (FIGS. 22-32)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically, and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits both scalability and high performance.

In the present invention, the individual instances each maintain a separate record of all of the processing resources of the system. Each of the instances categorizes the processors based on their respective operational status relative to the instance. In a preferred embodiment, an instance maintains records of whether each CPU is compatible for operation with the instance, whether it is under the control of the instance and whether it is available for SMP operation within the instance. These different operational statuses represent a hierarchical categorization of the CPUs of the system, and the system is adaptible to additional categories.

In the preferred embodiment, the membership of the CPUs in any of the different categories of operational status is recorded by maintaining a bitvector for each category, at least one bit of each bitvector corresponding to the membership status of one of the CPUs in that group. Typically, each set has one bit for each of the CPUs such that, for example, a bitvector indicative of CPU control by the instance has a first bit set at a first assertion level if a first corresponding CPU is under control of the instance. If the CPU is not under the control of the instance, the first bit is set to a second assertion level. With a bit representative of each of the CPUs, this bitvector then provides designations for each of the CPUs indicative of which are under control of the instance. Similarly, other bitvectors also provide designations for each of the CPUs, those designations indicating, for example, which CPUs are compatible for operation with the instance or which are available to the instance for SMP operation. In this way, each of the instances may individually track all of the processing resources and what their operational status is relative to the instance.

The invention may also include a means for automatically moving a processor from a first instance to a second instance in an instance failure situation. Such a movement can use the execution of an instruction by the moving processor. When a move is initiated, the migrating processor stores its current hardware state, and is capable of loading a hardware state that it held during a previous execution within the second instance. Thus, the processor resumes operation in the second instance from where it left off previously. If there is no stored hardware state in the instance to where the processor is migrating, it is placed in an initialized state.

In a preferred embodiment of the invention, the system responds to a failure within a first instance by not only shutting down the operating system running on that instance, but by first migrating out processing resources from the first instance to destination instances. That is, the control for a given resource associated with the first instance is transferred to a second instance without operator intervention. The system may have an instance that has no processing duties prior to failure of the first instance, but which serves as a backup to the first instance. Each CPU migrates to the destination instance, and preferably will take over the same functions that it undertook with the first instance. Each instance preferably stores the destination instance IDs in an array organized by CPU ID. Thus, upon the occurrence of a failure within the first instance, each processor under the control of the first instance can look to its associated array element to determine the ID of the instance to which it is to migrate.

The migration of processors from the first instance following a failure involves just secondary processors. The primary processor for that instance ensures that all of the secondaries migrate themselves, or that a separate migration routine is invoked to migrate any processors that may not be fully participating in SMP processing activities. The primary processor then stores all of the data in memory controlled by the first instance to a new memory location, after which it shuts itself down. Once the primary CPU of the first instance is shut down, the console program identifies that fact and sets a flag in shared memory indicating that the primary CPU of the first instance is in "console mode." The console then sends an interrupt to each of the other instances in the system, causing them to become aware of the setting of the flag. Meanwhile, processing is resumed on the backup instance. In certain cases, CPUs migrating from an instance that has experienced a failure may migrate to different destination instances. Allowing different destination instances for the different resources allows for flexibility in redistributing the resources of the system following a failure in one of the instances.

### Runtime Migration of Resources

With the present invention, CPUs may be shared in a serial fashion by multiple partitions. Any CPU in the computer system can be moved from one partition to another, provided it is not a primary CPU in the partition where it is residing at the time, and is not bound by system constraints, such as distributed interrupt handling. The policy on when and where a CPU may migrate is strictly up to the operating system code which the CPU is executing. In the preferred embodiment, CPUs migrate by executing a "PAL MIGRATE" instruction.

The PAL MIGRATE instruction invokes a set of steps which causes a CPU to be moved between instances. This method of migration may be used with other activities that may require CPU migration and, in general, involves a context switch between multiple HWRPBs. When a CPU migrates away from a particular instance, its context is stored in the HWRPB associated with the instance on which the CPU was running. That way, if the CPU migrates back to an instance where it was previously in operation, the context may be restored to allow the CPU to resume execution quickly. The steps in a PAL migration are depicted in FIGS. 22A-22B.

Execution of the PAL MIGRATE instruction by a CPU causes the migration routine to start, as shown in step 2200. The current hardware state of the CPU is saved in step 2202, after which the CPU locates the destination partition, and determines whether it is a valid destination (step 2204). If the validation process fails, the original hardware state is restored in step 2205, and the CPU resumes operation within the original partition. If the CPU successfully validates the destination partition, the current_owner field of the CPU node in the configuration tree is cleared in step 2206, and its available bit is cleared in the per-CPU flags (step 2208). The CPUs caches are then cleared in step 2210.

Any platform specific state for the CPU is initialized in step 2212 (Figure 22B), and the available bit for the CPU is cleared in the per-CPU flags in step 2214. The current_owner field is then set in the CPU node of the configuration tree (step 2216) to reflect the ID of the partition to which the CPU has migrated. The CPU is then provided with a hardware context (step 2218). If a previous hardware state exists for the CPU (i.e. if it has operated previously in that partition), that context is restored. If there is no previous hardware state with that partition (i.e. the CPU has never executed on the partition), or if the previous hardware state is no longer valid, the state of the CPU is initialized. Finally, execution of the CPU is resumed in step 2220. The execution continues at the instruction following the last migration instruction executed by the CPU in that partition or, if being initialized, it starts in the console initialization routine as a secondary processor. As shown in Figure 22B, the process ends after execution is resumed.

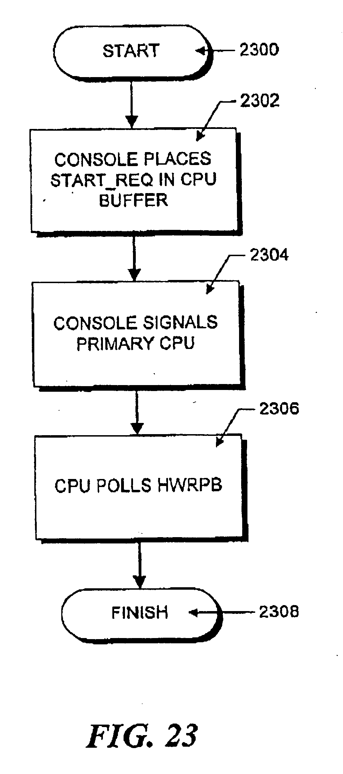

Each time a processor migrates, the console at the destination partition must accommodate the newly-migrated CPU. Figure 23 illustrates the steps taken by the console at a destination partition to complete the migration. The routine begins in step 2300 and proceeds to step 2302, where the console places a STARTREQ message into the migrated CPU's TX buffer in the per-CPU slot, and sets its TXRDY bit in the HWRPB. Next the console signals the primary CPU in the partition by means of an interrupt as set forth in step 2304. The migrated CPU polls the RXRDY bit in the HWRPB waiting for a command, such as START to begin operation as set forth in step 2306. The routine then finishes in step 2308.

### Resource Reallocation Following System Failure

A preferred embodiment of the invention includes a means of failure recovery for a failed instance. Since each partition in the system functions independently of the other partitions, a failure in one partition does not affect the other partitions, but does require recovery for the operating system instance in the affected partition, as well as for the applications running on that instance. However, a failure, even when detected by the instance that suffers it, requires a significant amount of time to correct, as the partition is rebooted and all of its resources are reinitialized. During this time, the processing tasks of the partition would be suspended, and the resources could sit idle while waiting for the instance to recover. Indeed, an instance might not even be able to reboot itself, in which case the resources could sit idle indefinitely.

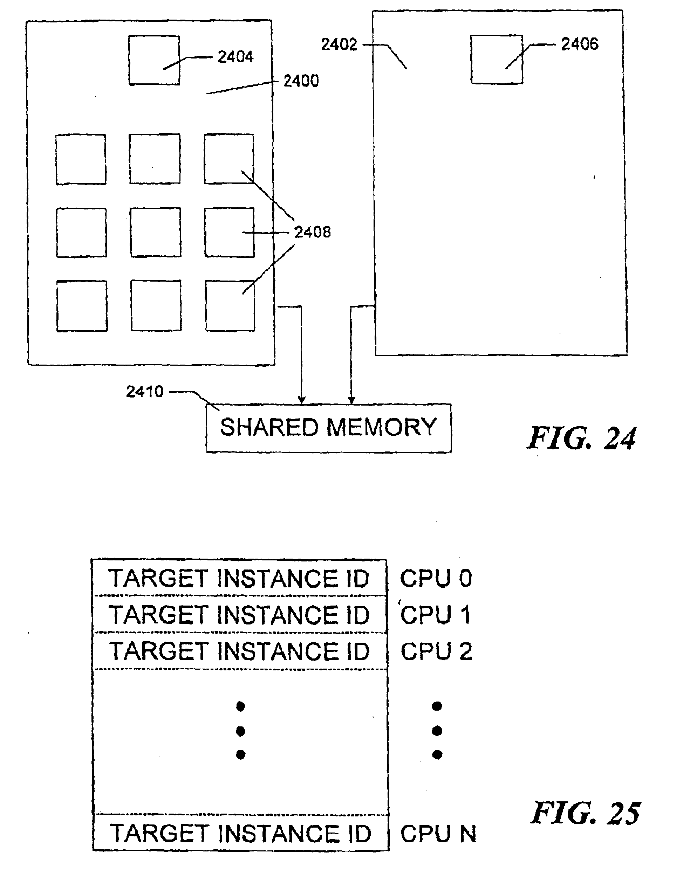

In the preferred embodiment of the invention, the system is structured to help maximize the efficiency of the system in the wake of a failure in one of the instances. For each main partition, a backup partition is created and given the same basic structure as its corresponding main partition. This is demonstrated schematically in Figure 24, in which main partition 2400 is shown with a primary CPU 2404 and a number of secondary CPUs 2408. A backup partition 2402 functions completely independently of the partition 2400, having its own primary CPU 2406 and its own operating system instance. Similarly, partition 2402 has its own HWRPB, copy of the console program, memory, and I/O connections, and it represents an independent node in the configuration tree. However, initially the instance on backup partition 2402 has no processing duties, while the instance of main partition 2400 is actively engaged in the system. Also shown in the figure is a region of shared memory 2410 in which information accessible to all the instances may be stored.

Each of the instances maintains a copy of information used specifically for CPU migration following a failure in one of the instances. This information includes an identification code (ID) that is present for each of the CPUs in the system, each ID identifying a destination instance (or partition) to which the CPU with which it is associated should migrate when its current host instance enters a failure mode. The arrangement of this information is depicted schematically in Figure 25, in which different sections of the ID portion of the memory are shown as each containing a destination ID. The adjacent CPU identifications associate each of the destination IDs with the appropriate CPU. Thus, when a failure is detected, the appropriate memory location may be examined to determine the target instance for a given CPU, and this information may be used to undergo a controlled migration to the new instance. For example, with the arrangement of partitions shown in Figure 24, many if not all of the secondary CPUs of partition 2400 could have the backup partition (partition 2402) designated as their target. Thus, if the instance on partition 2400 was to undergo a failure, these CPUs would migrate from partition 2400 to partition 2402. However, those skilled in the art will recognize that, in certain circumstances, it might be desirable to send one or more of the CPUs of partition 2400 to a different partition altogether. Furthermore, with the virtual resource functions of the instance, the newly acquired CPU can be brought into the active set automatically, for example, by making use of the autostart set described above.

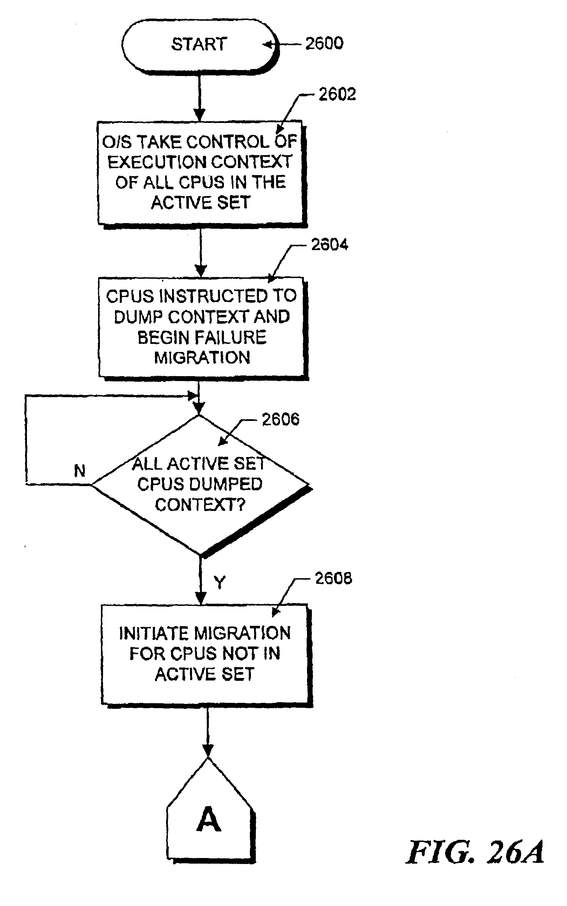

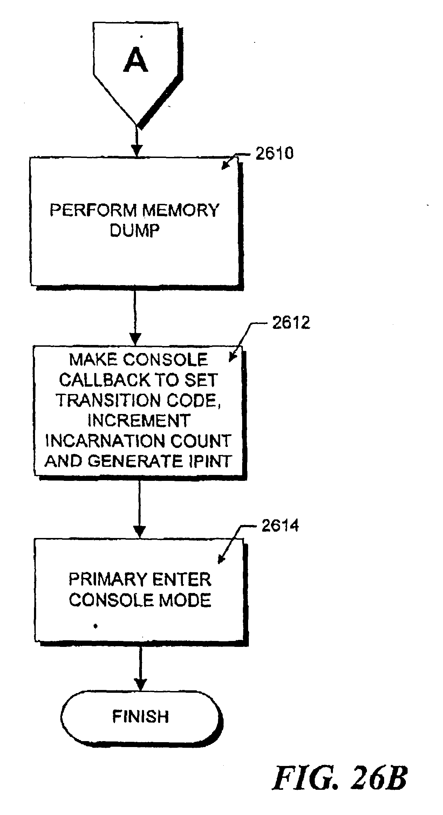

During a failure of an instance, the system follows a series of steps designed to minimize the loss of usage of the resources of the failed instance and, in some cases, to attempt to transfer all of the operations being undertaken with the instance on the failed partition to a new instance and partition as quickly as possible. These steps are generally described in the flowchart of Figures 26A and 26B.

The sequence of events following a detected failure begins at starting step 2600 shown in Figure 26A. After the failure is detected, the operating system instance where the failure occurred takes control of the execution context of all the CPUs in its active set (step 2602). The remaining system shutdown procedures are pursued by the primary CPU of the partition, while the secondary CPUs undertake any procedures necessary for their migration. In step 2604, the primary CPU instructs the active secondary CPUs of the failed instance to each dump its processing context into a selected region of the system shared memory, after which they are instructed to begin the migration process. Once all of the active secondary CPUs have dumped their processing contexts, the primary CPU proceeds to the next action (step 2606). Since some of the secondary CPUs might not be in active mode, the primary CPU must confirm that each of the secondaries is proceeding with the failure recovery process. If there are any of the secondary CPUs which are in the configure set but not in the active set of the instance in question, the primary CPU will invoke a separate migration function in step 2608 for moving the stopped CPUs to any identified destination partition.

The failure recovery process is continued in Figure 26B, the continuity between Figure 26A and 26B being indicated by connector node "A". In step 2610, the primary performs a dump of the data stored in the memory controlled by the failing instance, copying it to a new location. As shown in step 2612 of Figure 26B, the primary CPU of the failed instance then sends a console "callback" instruction which indicates that it has entered console mode, and causes the console program to perform several different tasks. One of these tasks is to increment the system incarnation count, which is changed every time there is a change in the configuration tree. The console also initiates the generation of an interprocessor interrupt (IPINT), which causes all of the other instances to look at the incarnation count, notice it has changed, and examine the configuration tree, identifying the change in the state of the failing instance in the process. Furthermore, the console will set an appropriate state code in the per-CPU data bits for the primary CPU once it sees the primary shut down (i.e. enter console mode) without the possibility of returning to functioning on the present instance. The primary CPU entering console mode, and causing the console to set the aforementioned state code is shown in step 2614. At that point, the partition is completely disabled, and the failure steps are complete.

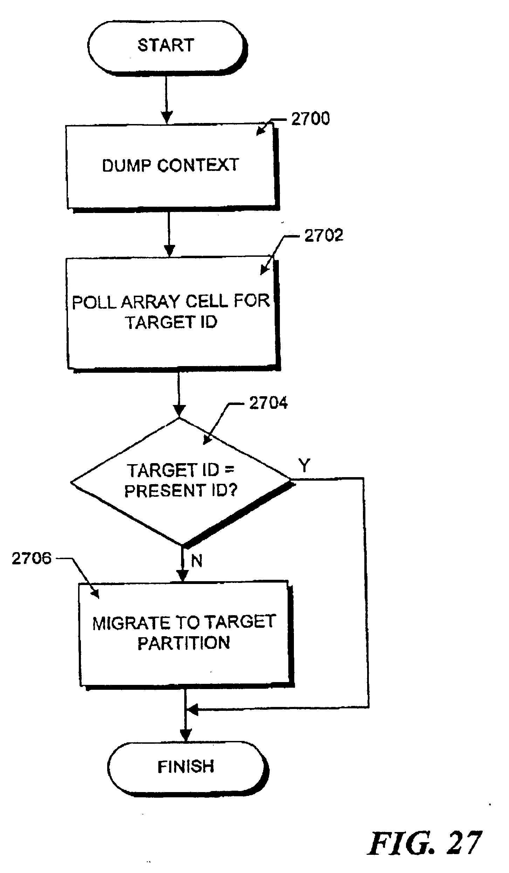

Once a secondary CPU (in the active set) is instructed by the primary CPU to begin a failure migrate, it undergoes a sequence of steps generally outlined in Figure 27. First, the secondary CPU dumps its processing context (step 2700), as instructed by the primary CPU. It then polls the appropriate portion of the memory array containing the failover IDs to determine where it is to migrate, if at all (step 2702). Once the target ID is retrieved, the processor compares it to the ID of the present partition (step 2704). In certain cases, it may be desirable not to migrate a CPU in the case of a failure on that partition. In such a case, the target ID loaded for the CPU in question will be the ID of the present partition. Thus, if the CPU determines in step 2704 that the target ID and the ID of the present partition are the same, it simply enters console mode, and the process terminates. However, if the target ID is different that the present ID, the CPU will undergo a migration to the new partition, using one of the provided methods of migration, after which the process is complete.

In one variation of the above embodiment, the interrupt handler may also be charged with notifying specific applications of the failure. In this alternative embodiment, the IPINT handler provides a registration process by which specific applications may "register" for notification of a particular event. Using this mechanism, any application could be notified of the change in the configuration tree, and could determine that a failure had occurred. If the application was a copy of an application that was running on the failed instance, this would provide a trigger to the application on the backup instance to begin processing activities in place of the application that was running on the failed instance.

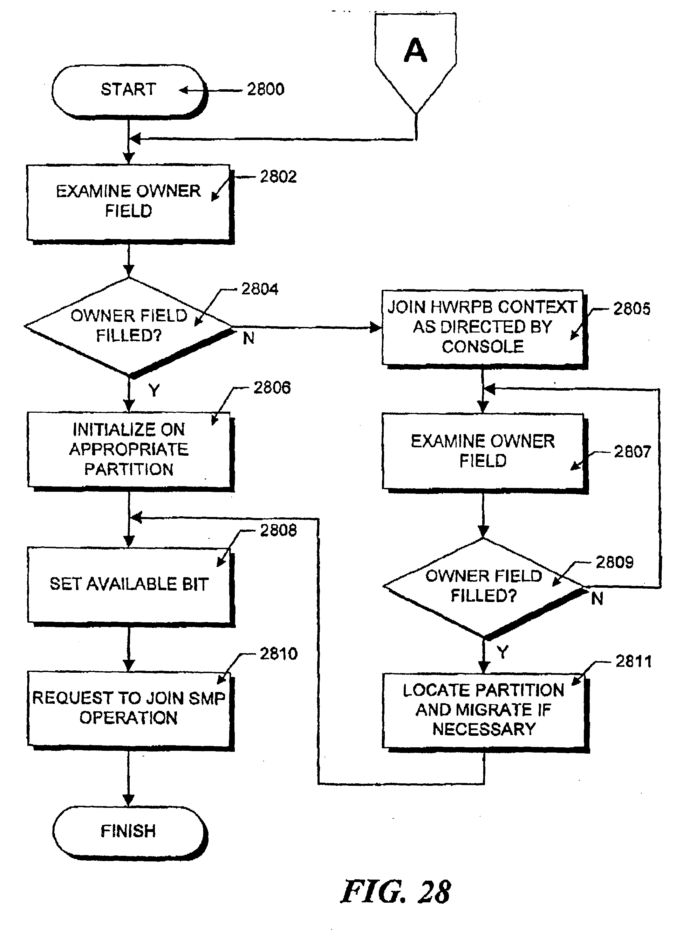

### 36. PERMANENT OWNERSHIP ASSIGNMENT OF RESOURCES IN A MULTI- PROCESSOR COMPUTER SYSTEM (FIGS. 28-29)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically, and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits both scalability and high performance.

The invention can include a means for moving a processor from a first partition to a second partition. Such a movement requires the execution of an instruction by the moving processor, so that its acquiescence to the move (and that of the operating system instance on which it is running) is ensured. When a move is initiated, the migrating processor stores its current hardware state, and loads a hardware state that it held during a previous execution within the second partition. Thus, the processor resumes operation in the second partition from where it left off previously. If there is no stored hardware state in the partition to where the processor is migrating, it is placed in an initialized state.

The present system has interaction between the partitions that allows a processor to migrate from one partition to the other without requiring a reboot of the entire system. Software running on its current partition, or a primary processor in its partition, can provide the processor to be moved with a request that it initiate a migration operation. Such a migration may occur with or without interruption of the operating system in which it resides. That is, the processor may simply be quiesced and reassigned while the rest of the system continues to operate, or the resources in its partition may be halted a console program is invoked to coordinate the move.

To keep track of the processors in the system, each partition has a set of hardware flags which includes flags that identify the partition with which each of the processors is associated, respectively. The hardware flags also indicate when a given processor is available to be used in SMP operation. By updating these flags each time a processor is migrated, the present status of each processor is known and retained within the hardware flags for use in any necessary reboots of the system.

In the preferred embodiment, the CPUs are also given a permanent ownership assignment that ties them to a particular one of the partitions. This allows the CPUs to each be associated with a respective partition during system initialization. The ownership assignment for a given CPU is indicated by the contents of a particular memory location in non-volatile memory. When the system is being initialized, any CPU without a valid owner partition indicated in its owner field is assigned to an arbitrary partition until a reassignment is performed. The permanent ownership of a CPU may also be changed if the CPU receives an instruction of reassignment. Once the system is initialized, a migration of the CPU may occur through a change in the contents of a second memory location, which indicates the partition having temporary ownership of the CPU, and which is located in volatile memory.

### Permanent Assignment of Resources

With the present invention, CPUs may be shared in a serial fashion by multiple partitions. Any CPU in the computer system can be moved from one partition to another, provided it is not a primary CPU in the partition where it is residing at the time, and is not bound by system constraints, such as distributed interrupt handling. However, while the "current owner" of a given CPU may be changed on the fly, a "permanent owner" is also established which identifies a CPU with a particular partition, although even this permanent ownership may be changed within the system.

The ownership of the CPUs in the system is established by the configuration tree, which associates a CPU node structure with a partition node structure. When a primary CPU initializes operation, it creates the configuration tree from the current hardware configuration and stored software configuration information. Each CPU is either assigned to a partition (i.e., owned), or is unassigned (i.e., unowned). The ownership information regarding a CPU is based on the content of the owner field of its CPU node in the configuration tree. The details regarding the initial assignment of a CPU in the system is illustrated in Figure 28.

The system is initialized and the process starts in step 2800. As the configuration tree is being constructed, the owner field of the appropriate CPU node is examined (step 2802). If the owner field is filled with a code indicating an particular partition (as shown tested in step 2804), the CPU is then initialized on that partition (step 2806). Afterwards, the CPU itself sets its available bit (step 2808), and requests to join SMP operation on the partition (step 2810). The assignment process is then complete.

If, in step 2804, it is determined that there is no valid code indicating ownership of the CPU by any given partition, the CPU joins an HWRPB context as directed by the console (step 2805). That is, it is directed by the console to join an arbitrary partition. However, the CPU does not set its available bit and, as a result, it will not be expected to join SMP operation. It then enters a waiting state, during which it continuously polls its owner field (steps 2807 and 2809). When the owner field is filled with the code for a valid partition, the CPU locates that partition and, if necessary, migrates to it (step 2811). It then sets its available bit (step 2808) and requests to join SMP operation on the new partition (step 2810). This partition remains the "permanent owner" of this CPU until a change is made in its owner field.

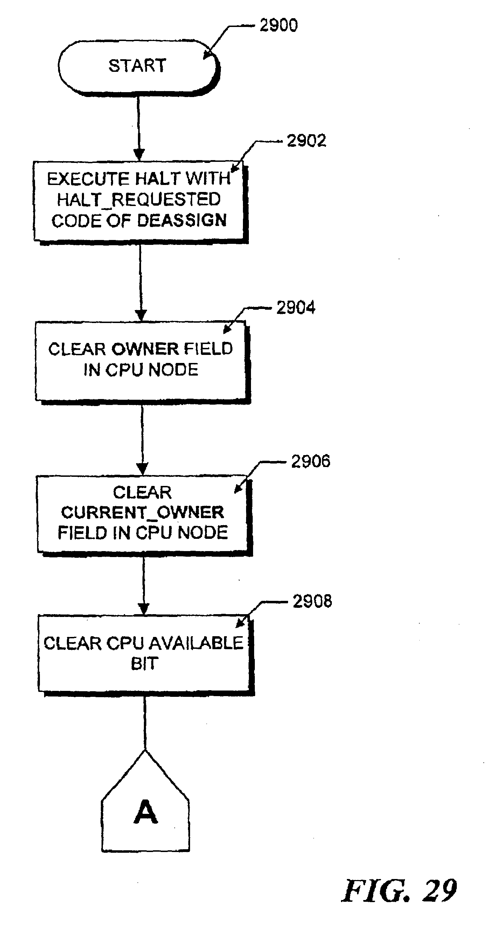

The permanent ownership of a CPU may be changed with interaction by the console. This process is demonstrated in the flowchart of Figure 29, beginning in step 2900. In step 2902, the operating system instance of the partition on which the CPU in question is running executes a HALT instruction with a HALT_REQUESTED code of DEASSIGN. That is, a halt code is loaded into the HALT_REQUESTED bits of the per-CPU STATE_FLAGS field that indicates that the CPU is to be deassigned. The CPU responds to this code in several ways. It clears its owner field (step 2904) and its current_owner field (step 2906) in the CPU node. It also clears its available bit (step 2908). The CPU then begins examining its owner field waiting for a valid partition code to be placed in it. That is, the CPU proceeds to step 2802 of Figure 28, and undergoes the assignment process described above. This is demonstrated by connector "A" shown on both Figures 28 and 29.

When a secondary CPU is in console I/O mode, its deassignment may also be initiated by the primary CPU of the partition sending a DEASSIGN message to the secondary CPU's RX buffer. This causes the CPU to initiate the set of steps shown in Figure 29.

The permanent ownership characteristic of a CPU provides important information that is particularly useful for initial powering of the system. As the configuration tree is constructed, the permanent ownership of each CPU is used to construct the partitions. Later, the current_owner field (which designates the partition that controls a given CPU) is used to keep track of where each CPU is executing at any given time. However, the permanent ownership information is retained to allow for future use in reorganizing the system, or for future reinitializations of the system. Accordingly, the permanent ownership data is stored in nvRAM (i.e., non-volatile memory) while the temporary ownership data is stored in volatile memory.

### I. MIGRATING PROCESSORS IN A MULTI-PROCESSOR COMPUTER SYSTEM (FIGS. 22A-27)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically, and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits both scalability and high performance.

The invention can include a means for moving a processor from a first partition to a second partition. Such a movement requires the execution of an instruction by the moving processor, so that its acquiescence to the move (and that of the operating system instance on which it is running) is ensured. When a move is initiated, the migrating processor stores its current hardware state, and loads a hardware state that it held during a previous execution within the second partition. Thus, the processor resumes operation in the second partition from where it left off previously. If there is no stored hardware state in the partition to where the processor is migrating, it is placed in an initialized state.

The present system has interaction between the partitions that allows a processor to migrate from one partition to the other without requiring a reboot of the entire system. Software running on its current partition, or a primary processor in its partition, can provide the processor to be moved with a request that it initiate a migration operation. Such a migration may occur with or without interruption of the operating system in which it resides. That is, the processor may simply be quiesced and reassigned while the rest of the system continues to operate, or the resources in its partition may be halted a console program is invoked to coordinate the move.

To keep track of the processors in the system, each partition has a set of hardware flags which includes flags that identify the partition with which each of the processors is associated, respectively. The hardware flags also indicate when a given processor is available to be used in SMP operation. By updating these flags each time a processor is migrated, the present status of each processor is known and retained within the hardware flags for use in any necessary reboots of the system.

### Runtime Migration of Resources

When an operating system instance crashes, the CPUs that are active in the partition will continue to be a part of the same instance at reboot. The CPUs do not migrate automatically to their nominal "owners". Nor do CPUs which are "owned" by a partition migrate back to an operating system instance which is crashing or rebooting. The available bit in the per-CPU flags in the HWRPB indicates the current ownership. This is also reflected in the current_owner field of the CPU node in the configuration tree.

The operating system may implement an automatic migration of secondary CPUs as part of its crash logic. That is, when a secondary CPU reaches the end of its crash logic, and would typically enter a waiting state, the operating system can implement a policy to cause the CPUs to instead migrate to a pre-defined partition. This would allow implementation of directed warm failover systems where the CPUs immediately are available at the warm backup partition when the primary application partition fails.

### J. PROCESSOR MIGRATION FROM DIFFERENT PROCESSOR STATES IN A MULTI-PROCESSOR

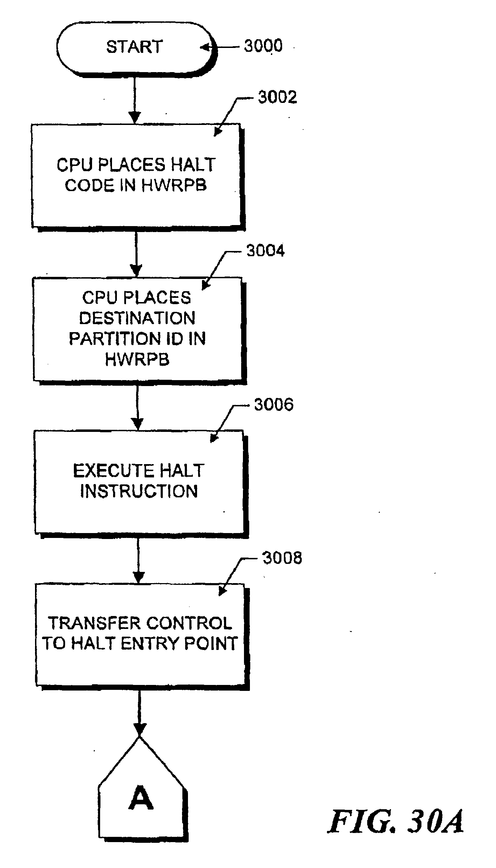

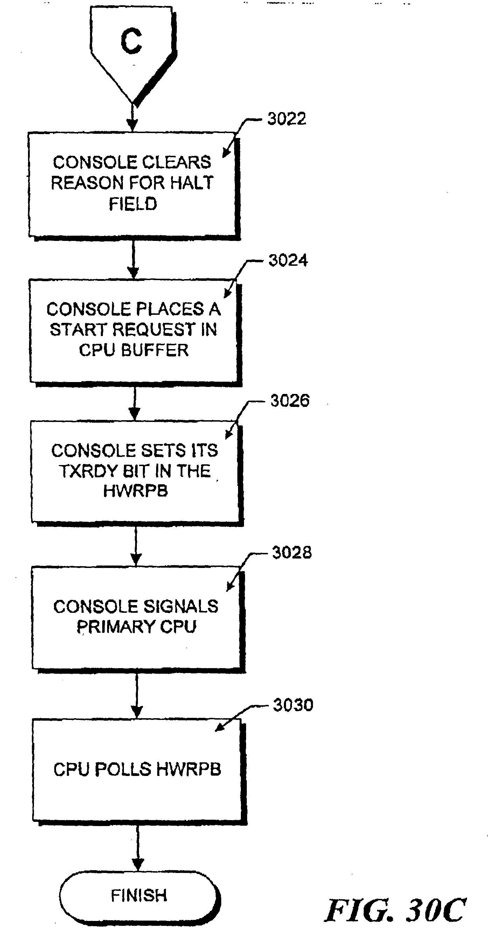

### COMPUTER SYSTEM (FIGS. 30A-32B)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically, and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits both scalability and high performance.

The invention can include a means for moving a processor from a first partition to a second partition. Such a movement requires the execution of an instruction by the moving processor, so that its acquiescence to the move (and that of the operating system instance on which it is running) is ensured. When a move is initiated, the migrating processor stores its current hardware state, and loads a hardware state that it held during a previous execution within the second partition. Thus, the processor resumes operation in the second partition from where it left off previously. If there is no stored hardware state in the partition to where the processor is migrating, it is placed in an initialized state.

The present system has interaction between the partitions that allows a processor to migrate from one partition to the other without requiring a reboot of the entire system. Software running on its current partition, or a primary processor in its partition, can provide the processor to be moved with a request that it initiate a migration operation. Such a migration may occur when a processor is executing under the control of an operating system instance at its current partition, or when it is in a stopped state, and executing under the control of a system console program. The processor may also be deassigned, that is, given no assigned partition, indefinitely before reassigning it to a new partition.

### Runtime Migration of Resources

A CPU migration may consist of a different set of steps depending on the status of the CPU when the migration is sought, and the manner in which the migration is undertaken. The preferred methods of CPU migration are described in more detail below. These methods cover: 1) the direct migration of a CPU that is executing under the operating system instance of its partition; 2) the direct migration of a CPU that is currently executing in console mode; and 3) the migration of a CPU by transitioning it through an unassigned state.

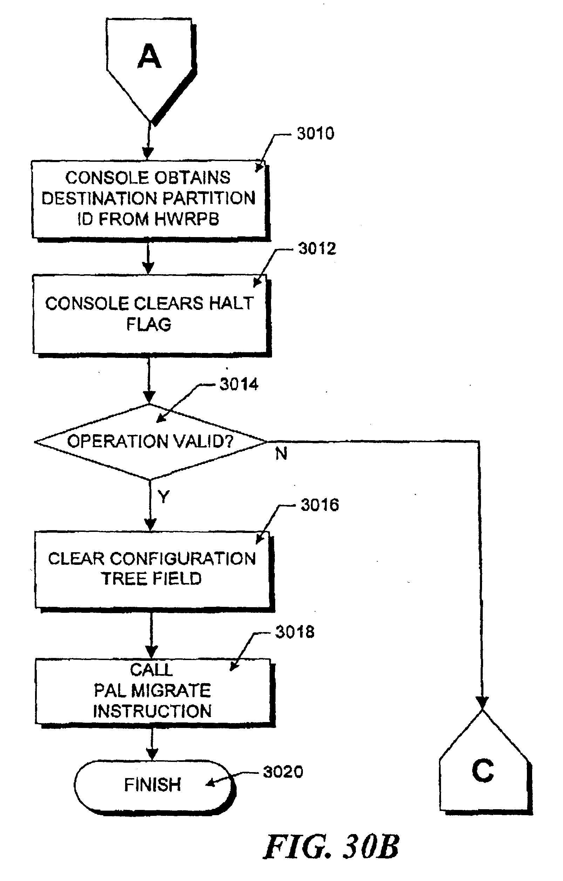

When a CPU is executing under the direction of the operating system, the migration process is referred to as "halt" migration, because the CPU must be halted prior to being reassigned via the PAL_MIGRATE instruction. The steps necessary for halt migration are shown in Figures 30A and 30B.

Beginning in step 3000, the migration routine proceeds to step 3002 where the migrating CPU, in response to an instruction from the primary CPU to migrate, places a special HALT_MIGRATE code in the REASON_FOR_HALT per-CPU field of the HWRPB. Next, in step 3004, the CPU places the destination partition ID into the REASON_FOR_HALT field. The CPU then executes a HALT instruction (step 3006). The operating system is responsible for quiescing operation of the CPU, and ceasing SMP participation of the CPU prior to executing the HALT. The actual performance of these substeps is operating system specific and conventional.

When a CPU executes a HALT with a HALT_MIGRATE code in the REASON _FOR_HALT per-CPU field, control is transferred to the console HALT entry point as indicated in step 3008. The console then obtains the partition ID of the destination from the REASON_FOR_HALT per-CPU field (step 3010) and clears the REASON_FOR_HALT field as illustrated in step 3012. The console next determines whether the HALT_MIGRATE operation is valid in step 3014. If it is valid, the console clears the current_owner field in the CPU node of the configuration tree in step 3016, and executes a PAL_MIGRATE instruction in step 3018, after which the routine ends in step 3020. If, in step 3014, the console determines that the HALT_MIGRATE operation is not valid (for example, an invalid partition ID is specified), the console performs the steps in Figure 30C.

As shown in Figure 30C, a determination by the console that a HALT_MIGRATE operation is invalid results in its first clearing the REASON_FOR_HALT per-CPU field (step 3022) and remaining in a HALT state in the current partition. In step 3024, the console places a STARTREQ message into the CPU's TX buffer in the per-CPU slot and, in step 3026, sets its TXRDY bit in the HWRPB. Next, the console signals the primary CPU in the partition by means of an interrupt as set forth in step 3028. The console then polls the RXRDY bit in the HWRPB waiting for a command, such as START, DEASSIGN or MIGRATE to begin operation as set forth in step 3030. The routine then ends. When the HALT_MIGRATE operation is not validated, the console does not clear the available bit in the per-CPU flags and does not clear the current_owner field in the CPU node in the configuration tree.

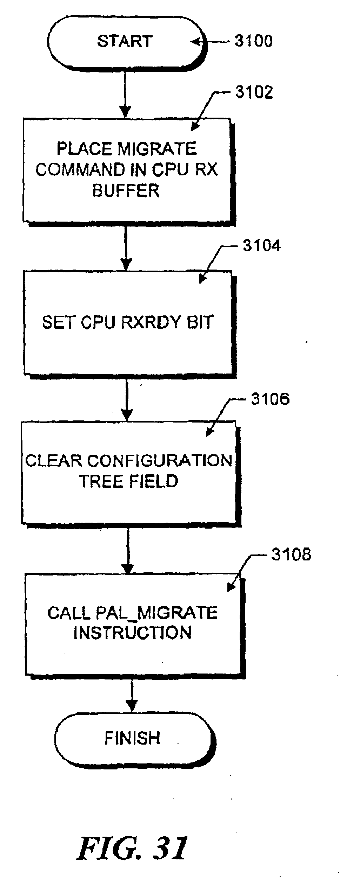

When a CPU is already in console mode, the steps for migrating it are slightly different than those described above. A CPU which is in console lO mode, with the available bit set, and current_owner field in the configuration tree set will poll the per-CPU RX buffer waiting for a command from the primary CPU running the operating system. The steps followed to migrate this CPU are shown in Figure 31.

The method shown begins in step 3100 and proceeds to step 3102, in which the primary places a MIGRATE command in the RX buffer of the CPU to be migrated. The primary then sets the CPU's RXRDY bit to alert it to the presence of the migration instruction (step 3104). The current_owner field of the migrating CPU is then cleared by the console, in preparation for it reassignment (step 3106). The PAL_MIGRATE instruction (Figure 22A-22B) is then called (step 3108), after which the process ends in step 3020.

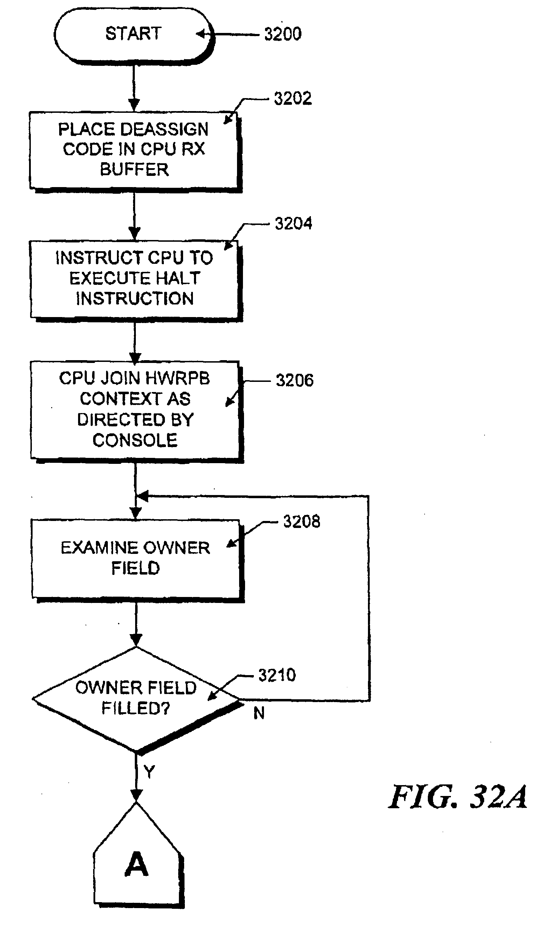

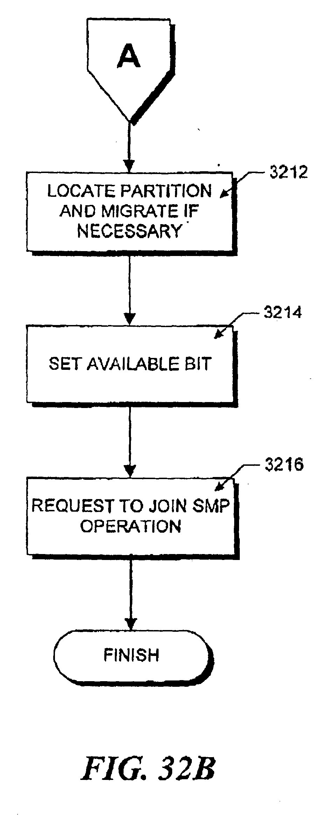

When a CPU is executing under its operating system instance, a method of migrating it which doesn't require immediate designation of the destination partition (as in the halt migration discussed above) is to first deassign the CPU, and to subsequently reasssign it to a different partition. This method is demonstrated in Figures 32A and 32B.

The method starts in Figure 32A at step 3200, and proceeds to step 3202, in which the primary CPU in the partition in which the migrating CPU resides places a DEASSIGN code in the RX buffer of the migrating CPU. The CPU is then instructed by the primary to execute a HALT instruction, which it does (step 3204). The presence of the DEASSIGN code when the HALT is executed causes the CPU to clear the owner field in the configuration tree, as well as the AVAILABLE bit and the current_owner field. The CPU then executes in console IO mode, joining the HWRPB context as directed by the console.

Being unassigned, the CPU continuously polls its owner field (steps 3208 and 3210). When the owner field is filled with the code for a valid partition, the CPU locates that partition and, if necessary, migrates to it (step 3212 - Figure 32B). It then sets its available bit (step 3214) and requests to join SMP operation on the new partition (step 3216). This partition remains the "permanent owner" of this CPU until a change is made in its owner field.

When an operating system instance crashes, the CPUs that are active in the partition will continue to be a part of the same instance at reboot. The CPUs do not migrate automatically to their nominal "owners". Nor do CPUs which are "owned" by a partition migrate back to an operating system instance which is crashing or rebooting. The available bit in the per-CPU flags in the HWRPB indicates the current ownership. This is also reflected in the current_owner field of the CPU node in the configuration tree.

The operating system may implement an automatic migration of secondary CPUs as part of its crash logic. That is, when a secondary CPU reaches the end of its crash logic, and would typically enter a waiting state, the operating system can implement a policy to cause the CPUs to instead migrate to a pre-defined partition. This would allow implementation of directed warm failover systems where the CPUs immediately are available at the warm backup partition when the primary application partition fails.

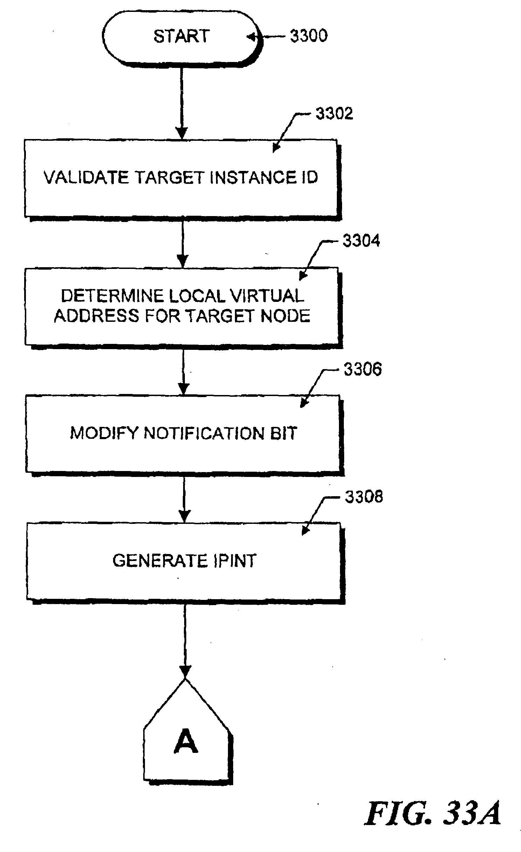

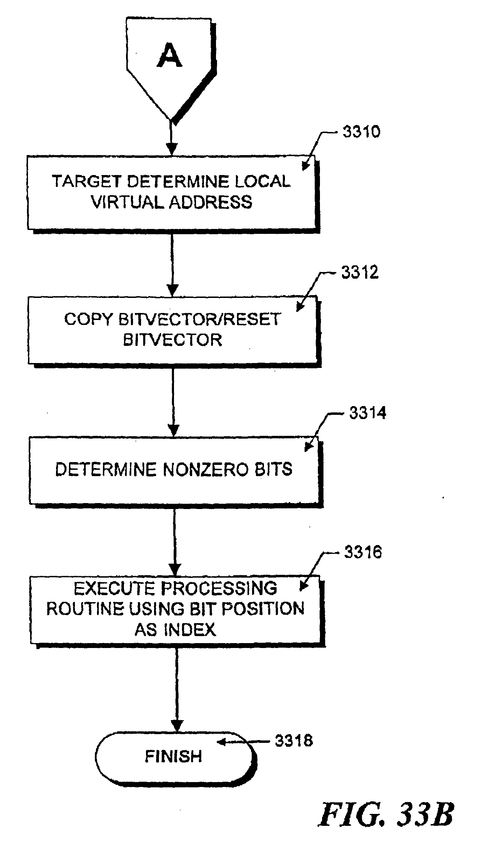

### K. COMMUNICATION IN A MULTIPROCESSOR SYSTEM (Figs.33a-34b)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits both scalability and high performance.

In the present aspect of the invention, the individual instances are capable of inter-instance communication. That is, a first instance running on a first partition can communicate with a second instance running on a second partition. This communication makes use of the shared memory of the system, and allows one instance to actively signal another instance running elsewhere in the system. The two preferred methods of communication are through single-bit notification and through packetized data transfer.

Single-bit notification makes use of the fact that a number of predetermined events are known to all instances of the system, and can therefore be represented by one bit per event. Thus, each instance has associated with it in shared memory its own notification bitvector, which is a set of bits each of which indicates a different one of the predetermined events. A first instance can then notify a second instance of the occurrence of one of the predetermined events by accessing the bitvector of the second partition in shared memory, and changing the value of the bit corresponding to that event. The first instance then signals the second instance with an interrupt, causing it to examine its bitvector. When it finds a modified bit, it uses the position of that bit in the bitvector as an index to locate in memory a routine call instruction that initiates a processing routine appropriate for the event represented by that bit.

Packetized data passing also makes use of shared memory, but involves the first instance first determining the amount of memory necessary and then allocating that space in the shared memory. Also located in shared memory is the listhead of a packet processing queue for each of the instances. After the first instance stores the packetized data in shared memory, it locates the packet processing queue listhead for the second instance, and puts the necessary information regarding the packetized data in the listhead. The first instance then uses a single-bit notification like that described above to signal the second instance that the packetized data is ready to be retrieved. In other words, the first instance sets a bit in the second instance notification bitvector that corresponds to the event of packetized data being ready for processing by the second instance. It then alerts the second instance by interrupt so that it checks the bitvector, and recognizes the event. The second instance then processes its packet processing queue, and retrieves the packetized data. Preferably, a component ID within the packet data may be used by the second instance as an index to a memory location where the call function for an appropriate processing routine (i.e., one which uses the correct data format) may be found.

### Reconfiguring Memory

The Page Frame Number (PFN) database design allows for memory to be reconfigured into or out of the operating system instance under software control. Private memory may be reconfigured to be shared, shared memory may be reconfigured to be private, and memory which is private to one partition may be reconfigured to be private to another partition. Memory which is private or shared may also be reconfigured to be unowned. Memory reconfiguration can support hardware hot in-swapping, or hot out-swapping. When memory is in an "unowned" state in a configuration tree, it can be reconfigured into an instance's private memory, or as part of shared memory in a community. When new memory is in-swapped into a system, the memory is initially placed in the unowned state. Additionally, before memory can be out-swapped from a system it must be in the unowned state. Therefore, to support memory hot-swapping, the operating system instance and console software must reconfigure memory into and out of the unowned state. When reconfiguring memory, the range of pages is, illustratively, 8 megabyte (MB) aligned (system page size squared divided 8 bytes). The range of pages is a multiple of 8 MB in size and, if pages within the range to be reconfigured out of the system are in use, other restrictions may apply, as described below.

New memory may be added to the system at any time since the PFN database is sized to include all possible memory that can be in-swapped and the new pages can always be used to make up the PFN database entry pages. To remove memory from a system, it is first determined if the range of pages is private, shared, or unowned. If the memory is already marked unowned, it is considered to be removed.

For the removal of private memory, a removed page list of page frame numbers, similar to a free page list, is established to support the removal of memory. If it is determined at any time that the pages cannot be removed on line, the system can be shut-down, the pages configured as unowned with console software, and the operating system instance restarted. If the console is using some or all of the pages in the range, the console relocates itself to a different set of pages. This relocation may be accomplished in a variety of ways. For example, the console may copy its pages to another sort of pages owned by the partition, then start executing on the other set of pages. Alternatively, another console within another partition can dissolve the partition, reassign the range of pages to "unowned", then reform the partition without the memory. Additionally, the entire system could be shut down, the memory removed, and the system restarted. The removal operation can be abandoned at anytime by moving the pages from the removed page list to the free, zeroed, or bad page lists.

If the range of pages to be removed is in private memory, the following steps are repeated until all pages can be removed or the removal operation is abandoned. The process is illustrated in the flowchart of Figure 33A-33B. Before entering the process illustrated in the flowchart of Figure 33A-33B, it is determined whether there is sufficient memory to allow the removal of the memory. A system parameter, fluid page count, is typically employed to indicate the amount of spare memory readily available. If this fluid page count is too low, that is if there are insufficient fluid pages in the system to accommodate the removal, an error is returned to the user, Otherwise, each page in the range to be removed is examined as described in the steps illustrated in Figure 33A-33B.

The process begins in step 3300 and proceeds from there to step 3302 where the first unremoved page within a page range to be removed is located. From step 3302, the process proceeds to step 904, where it is determined whether the page or pages to be removed have outstanding input/output operations and these pages are skipped; once their I/O operations are completed, the pages can be reconsidered for removal. If the pages have outstanding I/O, the operation returns to step 3302 where the first unremoved page is located and from there to step 3304 as described previously. To allow the system to perform other work, a system may want to stall at this point waiting for I/O to complete.

If the current unremoved page has no I/O pending, the process proceeds from step 3304 to step 3306, where it is determined whether the page is on the free, zeroed, untested, or bad page lists. If any of the memory pages are on any of these lists, the page is removed from the list in step 3308 and placed on the removed page list. Free pages are handled first so that copied pages are not copied onto free pages that are also part of the reconfigured range. From step 3308, the process proceeds to step 3326 where it is determined whether all pages have been placed in the removed page list and, if they have, the process proceeds to finish in step 3328. On the other hand, if all pages have not been placed on the removed page list, the process returns to step 3302 and from there as previously described. If desired, an implementation may choose to limit the number of iterations and execute an error recovery mechanism to avoid looping forever.

If there are no pages on the free, zeroed, untested, or bad page lists, the process proceeds from step 3306 to step 3310 where it is determined whether there are any pages on the modified page list. If there are no pages on the modified page list, the process proceeds to step 3314. On the other hand, if there are pages on the modified page list, the process proceeds to step 3312 where the pages are written to backing storage such as a system page file. From step 3312 the process proceeds to step 3326 and from there as previously described. On the other hand, if the process had proceeded to step 3314 from step 3310, in step 3314, it is determined whether any pages are process pages, i.e, pages where an application runs. Since each process may have multiple threads, each process has its own page table apart from other processes. If any pages are process pages, an AST which provides a mechanism for executing within the process' context to gain access to the process page tables, is sent to the process and the AST sets the process single threaded if necessary to synchronize access to the page tables. New page frame numbers are allocated for the pages and the contents of the pages are copied to the new page frame numbers. The old page frame numbers are placed on the instance's removed page list in step 3316. From step 3316, the process proceeds to step 3326 and from there as described previously.

If it is determined in step 3314 that none of the pages are process pages, the process proceeds to step 3318 where it is determined whether any of the pages are part of a global section i.e., a set of private pages acesssed by several processes simultaneously. If any of the pages are part of global section, the process proceeds from step 3318 to step 3320. In step 3320, the name of the global section may be displayed to a user so the user can determine which application to shut down in order to free memory. Alternatively, an operating system which can track where pages are mapped, could suspend all processes mapped to the section, copy all pages, modify all process page table entries, and place the old page frame numbers on the removed page list. From step 3320, the process would then proceed to step 3326 and from there as described previously. If in step 3318 it is determined that there are no pages which are part of the global section, the process proceeds to step 3322 where it is determined whether any page is mapped into system address space. If none of the pages is mapped into the system address space, the process proceeds from step 3322 to step 3326 and from there as previously described.

On the other hand, if there are pages mapped into the system address space, the process proceeds to step 3324, where those pages that are read only are copied. Once copied, the page is placed on the removed page list. Read/write pages are copied only while all CPUs within the instance are temporarily blocked from execution such that they do not change the contents of the page. One page is copied at a time and copied pages are placed on the remove page list. After migration in step 3324, the process proceeds to 3326 and from there as previously described.

In order to remove shared memory, a new list of page frame numbers is established within each shared memory common property partition data structure, i.e., within each SHM CPP structure within the APMP data base. The list is called the common property partition removed page list. These lists are temporary holding places for all pages that are ready to be removed. Only when all pages within the 8 MB range are located on the appropriate remove page list, can the pages be removed. At any point in time, if it is determined that the pages cannot be removed while the sharing set (the set of instances which share resources, such as memory) is operational, the sharing set can be dissolved, the pages marked unowned, and the sharing set reformed. The removal operation can be abandoned at any time by moving the pages from the common property partition removed page list to the free page or bad page lists depending on the previous state of the page, i.e., to the free page list if it had been on the free page list and to the bad page list if it had been on the bad page list.

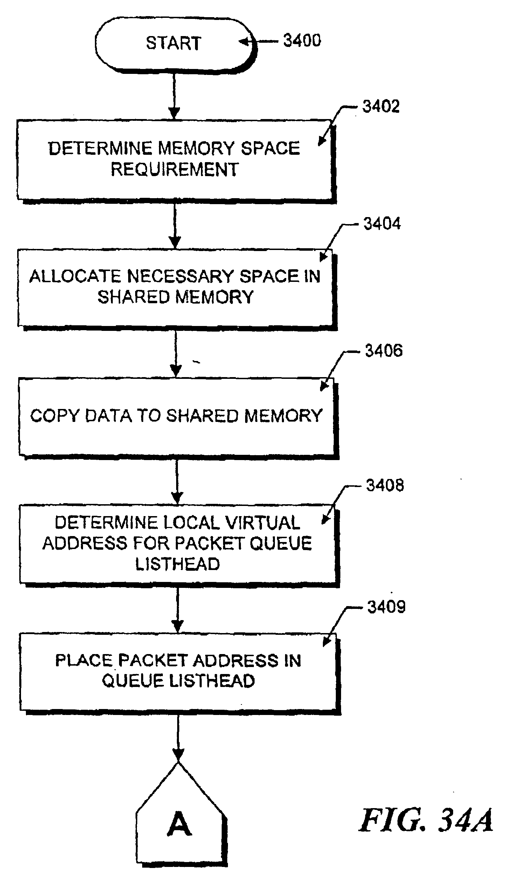

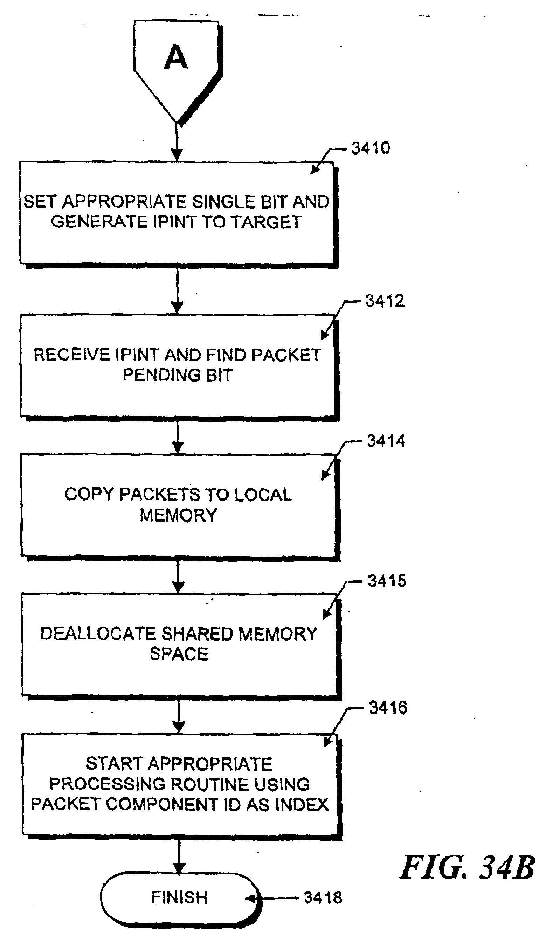

The process of removing shared memory is illustrated in the flowchart of Figure 34A-34B with the process beginning in step 3400 and proceeding from there to step 3402 whereby the first unremoved page in the range of pages to be removed is located. From step 3402 the process proceeds to step 3404 where it is determined whether any pages within the page range to be removed have outstanding I/O. Those pages that have outstanding I/O are skipped and the process returns to step 3402 to locate the first unremoved page, as previously described. To allow the system to perform other work, a system may want to stall at this point waiting for I/O to complete.

If no pages have outstanding I/O, the process proceeds from step 3404 to step 3406 where it is determined whether any pages are part of the APMP database. If any of the pages are a part of the APMP database, an error is returned to the user in step 3408. In such a case, the sharing set must be reformed with the APMP database on different pages. This can be accomplished by dissolving the sharing set, marking the old APMP database pages as unowned, choosing a new set of APMP database pages, then recreating the sharing set. The process proceeds from step 3408 to finish in step 3430.

The page frame number database entry pages describing those pages are unmapped and freed to the common property partition free page list, the PMAP arrays that describe shared memory are updated to reflect the change and the console is called to mark the page unowned. From step 3428, the process then proceeds to finish in step 3430. If, in step 3426, the process had determined that all pages were not on the shared memory common property partition removed page list, the process returns from step 3426 to step 3402 and proceeds from there as described previously. If in step 3406, the process determines that none of the pages are part of the APMP database, the process proceeds to step 3410 where it is determined whether any of the pages are on the free, bad, or untested page lists, and, if so the pages are removed and placed on the common property partition removed page list in step 3412. From step 3412, the process proceeds to step 3426 and from there as previously described.

If it is determined in step 3410 that none of the pages are on the free, bad or untested page lists, the process proceeds to step 3414, where it is determined whether any pages are shared memory page frame number database pages and if so, the process proceeds to step 3416. In step 3416, assuming the range of pages comprise the only pages left within the shared memory common property partition that are not on the common property partition removed page list, the shared memory common property partition is removed from the community. In step 3416, the shared memory common property partition is marked as invalid so no attempts are made to allocate pages from it. The PMAP arrays that describe shared memory are updated to reflect the removal of the memory. Other shared memory APMP database structures are updated to reflect the removal of the shared memory common property partition and the console is called to mark the pages unowned. Alternatively, if the PFN database pages are not the only pages left within the shared memory common property partition not on the removed page list, an error may be returned to the user, in which case, the user could dissolve the sharing set, mark the pages unowned, and recreate the sharing set. To copy these pages, the shared memory common property partition which contains the pages could be marked as temporarily invalid and the mapping of the PFN database pages marked read only. One instance could then copy the pages to a new set of pages allocated from the common property partition. All instances would then modify their mappings from the old page to the new pages and the old pages could then be placed on the common property partition removed page list. The process would then proceed from step 3416 to step 3426 and from there as previously described.

If it is determined in step 3414 that some pages are not shared memory page frame number database pages, the process would proceed to step 3418 where it is determined whether any of the pages are part of a shared memory region that is mapped into systems space and if so the process would proceed to step 3420 where shared memory region callback routines may be called and retain the memory used to be removed. The callback routines can either shut down the application or create a new shared memory region and start using the new region. Alternatively, or in conjunction with the callback routines, the tag of the shared memory region can be displayed through the console. This would allow a user to assist in shutting down the application which is using the shared memory. From step 3420, the process would then proceed to step 3426 and from there as previously described.

If, in step 3418, it is determined that none of the pages are part of a shared memory region that is mapped into system space, the process proceeds to step 3422 where it is determined whether any pages are part of a shared memory global section, i.e., a set of shared page mappings into one or more process' address space so all the processes can have access to the same pages. If there are some pages that are part of a shared memory global section, the process proceeds to step 3424, where a callback routine is called on all instances that have this global section mapped. All processes that are mapped to the global section can be suspended, the code can then copy all data from one set of pages to another, modify all process page table entries, modify the global section data structures and place the old page frame numbers on the common property partition removed page list. Alternatively, each process that maps to the global section can be notified to shut down, or, the names of the global sections can be displayed so the user can determine which application should be shut down to assist in the removal operation. From step 3424, the process would then proceed to step 3426 and from there as previously described.

To ensure, if I/O has been initiated to shared memory, that the memory is not reused for another purpose before we are sure that all I/O in shared memory is completed, an I/O device may interrupt the instance when I/O has completed, the system would then record that the I/O is complete. Alternatively, when all I/O buses within the instance's partition have been reset, I/O has been completed. In the SHM_DESC structure in private memory, there is a field called I/O refcnt, which stands for I/O reference count. There is one SHM_DESC structure per shared memory region.

In the SHM_REG structure in the APMP database, there is a bitmask called the "attached bitmask." There is one SHM_REG structure per shared memory region. The attached bitmask contains one bit for each instance in the APMP system. If a bit in the attached bitmask is set, the corresponding instance is attached to the region.

In the configuration tree structure, maintained by the console, there is an ID field in the partition node that can be set or cleared by calling a console callback routine. During system boot after the partition's I/O buses have been reset this field in the instance's partition node is cleared.

When a sharing set is being created:
1) Loop through all other instance's partition nodes in this community.
2) If the ID field is non-zero and there is no instance running on the partition as indicated within the configuration tree, reset all I/O buses connected to the partition.
3) Set the ID field in this instance's partition node to the ID (a number that increases each time the APMP database is recreated).

When an instance is joining a sharing set:
1) Set the ID field in the instance's partition node to the current ID.

During a sharing set exit:
1) Call a routine which detaches from all shared memory regions.
2) Clear the ID field in the instance's partition node in the config tree.

When an I/O is initiated, the routine shm_reg_incref is called for each page on which I/O will be performed. When the I/O is completed, the routine shm_reg_decref is called for each page.
Routine shm_reg_incref:
Input: Address of PFN database entry for page
Read the shared memory region id from the PFN database entry.
Obtain the SHM_DESC address in private memory for this region.
Increment I/O refcnt.
Routine shm_reg_decref:
Input: Address of PFN database entry for page
Read the shared memory region id from the PFN database entry.
Obtain the SHM_DESC address in private memory for this region.
Decrement I/O refcnt
Routine shm_reg_create:
Inputs: tag
   virtual length
   physical length
   virtual mapping information
   plus additional information
Output: shared memory region id
Search for a SHM_REG structure in shared memory whose tag matches the tag
supplied.
If no such SHM_REG structure is found:
- Allocate a new SHM_REG structure
- Acquire the SHM_REG lock
- Set the "init in progress" bit in the SHM_REG structure
- Allocate shared memory pages for the region
- Clear the "init in progress" bit in the SHM_REG structure
- Release the SHM_REG lock
Set the bit in the SHM_RFG attached bitmask for this instance.
Map to the shared memory region using the virtual mapping information supplied.
Routine shm_reg_delete:
Input: shared memory region id
Obtain the SHM_DESC address in private memory for this region.
If the I/O refcnt field is non-zero, return an error.
Unmap the shared memory region.
Obtain the SHM_REG address in shared memory for this region.
Clear the bit in the SHM_REG attached bitmask for this instance.
If the attached bitmask has more bits set, return.
If the SHM_REG attached bitmask has no bits set:
- Acquire the SHM_REG lock
- Set the "delete in progress" bit in the SHM_REG structure
- Deallocate all shared memory pages to the appropriate shared memory free page lists.
- Clear the "delete in progress" bit
- Release the SHM_REG lock
- Clean up the SHM_REG data structure
During system crash:
Reset all I/O buses.
Clear the ID field in the instance's partition node.
Call system code to interrupt another instance to indicate that the instance has crashed. (The interrupt handler on the other instance calls
shmem_APMPDB_recover.)
Initiate crash dump.
During heartbeat monitoring:
If an instance's heart does not beat for an amount of time, the instance is declared dead and is removed from the sharing set.
Acquire the SHM_REG synchronization lock, breaking the lock if necessary. If the lock was held by the dead instance:
If the SHM_REG structure indicates that initialization was in progress or that the region was in the process of being deleted, call shm_reg_delete.
The routine shmem_APMPDB_recover is called on at least one of the other instances. In this case, the ID Field in the instance's partition node is not cleared.
Routine shmem_APMPDB_recover:
Input: Instance ID of the dead node
Loop through all SHM_REG structures in the APMP database.
If the crashing instance was attached to the region:
1) If the ID field in the instance's partition node is non-zero, this might indicate that the instance was halted, not crashed. I/O devices may still be writing to shared memory.
   Loop to the next SHM_REG structure leaving this instance attached and the shared memory region in place. When the instance joins the sharing set again, it will clear the attached bit after having reset the I/O buses. It will delete the shared memory region if it was the last instance attached to the region.
2) If the ID field in the instance's partition node is clear:
   clear the bit for the instance in the attached bitmask If the attached bitmask has no bits set:
      Call shm_reg_delete
Loop to the next SHM_REG structure
After all SHM_REG structures have been processed, execute more shared memory recovery code.
Routine shmem_sharing_set_join:
Input: Instance ID of this instance.
Map to the APMP database in shared memory.
Execute other shared memory community join code.
Loop through all SHM_REG structures in the APMP database.
If this instance was attached to the region:
- Clear the bit for this instance in the attached bitmask
If the attached bitmask has no more bits set
- Call shm_reg_delete
Loop to the next SHM_REG structure
After all SHM_REG structures have been processed, return.

To choose the initial APMP database pages, the routine shmem_config_APMPDB is called by APMPDB_map_initial to choose the intial set of APMPDB pages.

### Data structures:

The community node in the config tree contains a 64-bit field, called APMPDB_INFO, which is used to store APMPDB page information. The first 32-bits, APMPDB_INFO[31:0], is the low PFNof the APMPDB pages. The second 32-bits, APMPDB_INFO[63:32], is the page count of APMPDB pages.

Each instance keeps an array in private memory called the "shared memory array." Each element in the array contains a shared memory PFN and a page count. The entire array describes all shared memory owned by the community that this instance is a part of.

The configuration tree may contain tested memory bitmaps for shared memory. If the configuration tree does not contain a bitmap for a range of memory, the memory has been tested and it is good. If a bitmap exists for a range of memory, each bit in the bitmap indicates whether a page of shared memory is good or bad.

A value, MAX_APMPDB_PAGES, is set to the maximum number of pages required to initialize a system. This number should be smaller than the granularity of shared memory. MAX_APMPDB_PAGES should be a small number to increase the chances that contiguous good memory can be found for the initialization of the APMP database.

Console callback routine set APMPDB info:
Inputs: new_APMPDB_info Bits[31:0] = first APMPDB page frame number
   Bits[63:32] = number of pages specified for the APMP database
   old_APMPDB_info - value read from the GDMB_INFO field in the community node.
Outputs: None.
Status: Error = Value in APMPDB_INFO does not match old_APMPDB_info
   Success = APMPDB_INFO has been updated with new_APMPDB_info

This routine may be more complex if multiple copies of the configuration tree are maintained by a console.
1. Read APMPDB_INFO from the community node
2. If APMPDB_INFO does not equal old_APMPDB_info, return an error
3. Store new_APMPDB_INFO into APMPDB_INFO with an atomic instruction

A routine, SHMEM_config_APMPDB, is used to configure the APMP database. The routine provides the first APMP database page frame number and the number of pages specified for the APMP database. The routine proceeds as follows:
(1) Obtain a pointer to the community node within the configuration tree.
(2)Traverse the configuration tree creating the shared memory array. If there is no shared memory, return an error.
(3) Read the APMPDB_INFO field
(4) If APMPDB_INFO field is non-zero
   Set PAGES to APMPDB_INFO
   Search the shared memory array to ensure that pages PFN through
   PFN+PAGES-1 are in shared memory
      If these pages are in the shared memory array:
      if a tested memory bitmap exists, check the bitmap to ensure that these pages are not marked bad
      if all the pages are good, cal set APMPDB INFO to write the PFN and PAGES into the APMPDB_INFO field
      if SET_APMPDB_INFO returns an error, return to (2)
      If SET_APMPDB_INFO returns a success, return PFN and PAGES to the caller
   If any of the pages are not in shared memory or are bad
      Call SET_APMPDB_INFO to clear the APMPDB_INFO field
      If SET_APMPDB_INFO returns an error, return to (2)
      If SET_APMPDB_INFO returns success, go to (5) to choose new APMPDB pages
(5) Set PAGES to MAX_APMPDB_PAGES
(6) Loop through the shared memory array. For each element in the array:
   (6.1) Set PFN to the lowest shared memory PFN in the range.
   (6.2) If a tested memory bitmap exists, check the bitmap to ensure that these pages are not marked bad
   (6.3) If all the pages are good
      Call SET_APMPDB_INFO to write PFN pages intothe APMPDB field
      If SET_APMPDB_INFO returns an error, return to (2)
      If SET_APMPDB_INFO returns success, return PFN and PAGES to the caller
   (6.4) If a bad page is encountered within the range
      Set PFN to the highest numbered bad PFN+1
      If PFN+PAGES-1 is still within the shared memory array element return to (6.2)
      If PFN+PAGES-1 is greater than the range described by this shared memory array element, move to the next shared memory array element
   (6.5) If there are no shared memory array elements left, return an error.

An illustrative page frame number database layout is illustrated by the memory map of Figure 11. In this illustrative example the system includes two instances, A and B, each with 64 megabytes of private memory and 64 megabytes of shared memory. The memory is arranged as eight kilobyte pages, with private memory for instance A extending from page frame number (PFN) 0 through PFN 1BFF (hexadecimal). Sixty four megabytes of shared memory extends from PFN 2000- to PFN 3FFF. Private memory for instance B extends from PFN 800000 through PFN 801FFF. The memory used to hold the PFN database for instance A comes from instance A's private memory (0-1FFF), the memory used to hold the PFN database for instance B comes from instance B's private memory (2000-3FFF), and the memory used to hold the PFN database for shared memory comes from the shared memory (800000-801FFF). Instance A cannot access the PFN database entries for Instance B's memory because, as illustrated, that memory region is not mapped into the system space for instance A. Similarly, Instance B cannot access the PFN database entries for Instance A's memory because that memory region is not mapped into the system space for instance B. Both Instances A and B map the shared pages into the PFN database entries for shared memory. Instances map to the shared pages with private memory page tables because private memory and shared memory PFN database entries may be mapped by the same page table pages. As noted above, the granularity of physical memory may be chosen as the least common multiple of PFN database entry size and memory pages size. In the illustrative example the memory page size is 8 kilobytes and the granularity of physical memory is equal to the page size squared divided by eight (bytes), or 8 MB. Page sizes of 16, 32, and 64 KB yield physical memory granularity of 32, 128, and 512 MB, respectively.

### L. RECOVERING SHARED MEMORY REGIONS IN A MULTI-PROCESSOR SYSTEM (FIGS. 19-21)

In accordance with a further aspect of the present invention, multiple instances of operating systems execute cooperatively in a single multiprocessor computer wherein all processors and resources are electrically connected together. The single physical machine with multiple physical processors and resources is adaptively subdivided by software into multiple partitions, each with the ability to run a distinct copy, or instance, of an operating system. Each of the partitions has access to its own physical resources plus resources designated as shared. In accordance with one embodiment, the partitioning of resources is performed by assigning resources within a configuration.

More particularly, software logically, and adaptively, partitions CPUs, memory, and I/O ports by assigning them together. An instance of an operating system may then be loaded on a partition. At different times, different operating system instances may be loaded on a given partition. This partitioning, which a system manager directs, is a software function; no hardware boundaries are required. Each individual instance has the resources it needs to execute independently. Resources, such as CPUs and memory, can be dynamically assigned to different partitions and used by instances of operating systems running within the machine by modifying the configuration. The partitions themselves can also be changed without rebooting the system by modifying the configuration tree. The resulting adaptively-partitioned, multi-processing (APMP) system exhibits scalability, flexibility, and high performance.

Memory may be reconfigured into or out of a partition or community under software control and hardware hot in-swapping or out-swapping are supported. In general, memory may be in one of three states: private, shared, or unowned. Memory is private if it is "owned" by a single system partition. Memory is shared if it is owned by a community. A community, or sharing set, is a collection of one or more partitions which may share resources. Otherwise, it is unowned. Memory may be reconfigured between any of three states directly. For example, memory may be reconfigured from private in one partition to private in another partition, or from shared in a community to private in a partition. Memory is placed in the unowned state by an operating system instance and console software, reflected in the system configuration tree, before the memory can be out-swapped or in-swapped. A page frame number database is sized to include all possible memory that can be in-swapped and added memory pages may be employed as page frame number database entry pages. Consequently, new memory can be readily accommodated. As noted above, to out-swap memory, the memory must be in the unowned state. If the memory to be out-swapped is in either the shared or private state, it is placed in the unowned state to permit out-swapping.

An instance may create a region of shared memory by assigning the region the characteristic of being shared memory. The shared memory region may be attached to any instance within the same sharing set as the creating instance. If an instance is attached to a shared memory region and fails, the memory is recovered in order to ensure that the shared memory pages are available for subsequent system use. An instance failure may, illustratively, be evidenced by the instance's halting of operation for an extended period of time, by the instance crashing, or by the instance otherwise becoming unresponsive. If an instance is attached to a shared memory region and fails, another instance in the sharing set recovers the shared memory region by indicating that the failed instance is no longer attached to the shared memory region. If the failing instance was holding the shared memory region synchronization lock and was either initializing or deleting the shared memory region, the shared memory region is recovered by freeing the shared memory pages within the region. Similarly, if the failing instance is the only instance attached to the shared memory region, the shared memory is recovered by freeing the shared memory pages within the region. If there are no other instances within the sharing set when the instance fails, the shared memory pages are recovered automatically when the sharing set is recreated at a later time. If input/output (I/O) may have been in progress to any page within the shared memory region during the instance failure, the shared memory recovery mechanism prevents the corruption of shared memory by ensuring that shared memory pages within the affected shared memory region are not freed and reused by another shared memory region until it is safe to do so.

A software implementation of the above-described embodiment may comprise a series of computer instructions either fixed on a tangible medium, such as a computer readable media, e.g. diskette 142, CD-ROM 147, ROM 115, or fixed disk 152 of Figure 1, or transmissible to a computer system, via a modem or other interface device, such as communications adapter 190 connected to the network 195 over a medium 191. Medium 191 can be either a tangible medium, including but not limited to optical or analog communications lines, or may be implemented with wireless techniques, including but not limited to microwave, infrared or other transmission techniques. It may also be the Internet. The series of computer instructions embodies all or part of the functionality previously described herein with respect to the invention. Those skilled in the art will appreciate that such computer instructions can be written in a number of programming languages for use with many computer architectures or operating systems. Further, such instructions may be stored using any memory technology, present or future, including, but not limited to, semiconductor, magnetic, optical or other memory devices, or transmitted using any communications technology, present or future, including but not limited to optical, infrared, microwave, or other transmission technologies. It is contemplated that such a computer program product may be distributed as a removable media with accompanying printed or electronic documentation, e.g., shrink wrapped software, pre-loaded with a computer system, e.g., on system ROM or fixed disk, or distributed from a server or electronic bulletin board over a network, e.g., the Internet or World Wide Web.

## Claims

1. A computer system (200) having a plurality of assignable system resources, including processors (108-114), memory (120) and I/O circuitry (118), the computer system comprising:
an interconnection mechanism (122) for electrically interconnecting the processors, memory and I/O circuitry so that each processor has electrical access to all of the memory and at least some of the I/O circuitry;
a software mechanism for assigning the assignable system resources to a plurality of partitions (202, 204, 206), each partition including at least one processor, some memory and some I/O circuitry;
an operating system (208, 210, 212) instance running in each partition (202, 204, 206); and
at least one group of partitions (412, 414) forms a community (410) that shares memory (434, 448); and
a processor migration apparatus that reassigns a first processor from a first partition to a second partition without a reboot of the entire system, wherein said migration apparatus stores a processing context of the processor relative to the first partition prior to the reassignment, and, after the reassignment of the first processor, the first processor loads any processing context that it may have stored during a previous execution with the second partition.

2. A computer system according to claim 1 wherein the plurality of processors (108-114) is physically divided into partitions (202, 204, 206) and wherein each partition comprises a console program (213, 215, 217) which interacts with the processors in the partition.

3. A computer system according to claim 2 wherein the software mechanism for assigning resources comprises a console program (213, 215, 217) which maintains configuration information indicating which of the plurality of processors (108-114), which memory portions (120) and which I/O circuitry portions are assigned to each partition (202, 204, 206); and wherein the software mechanism for assigning system resources comprises a first data storage for maintaining configuration information indicating which of the plurality of processors is assigned to each partition; and a mechanism for modifying the configuration information to change an assignment of assignable system resources from one partition to another.

4. A computer system according to claim 1 further **characterized by** a migration mechanism for migrating assignable system resources from one partition (1000, 1002) to another during system operation without a reboot of the entire system.

5. A computer system according to claim 4 wherein the migration mechanism comprises a first communication mechanism (904) which communicates with an operating system instance (1008) in a partition (1000) from which a processor is being moved to cause the operating system instance to quiesce the processor; a second communication mechanism (910) which communicates with an operating system (1018) instance in a partition (1002) to which a processor is being moved to cause the operating system instance to begin using the processor; a third communication mechanism which communicates with an operating system instance in a partition from which memory is being moved to cause the operating system instance to unload the memory; a fourth communication mechanism which communicates with a plurality of operating system instances which share memory to be moved to cause the operating system instances to cooperatively unload the memory; and a fifth communication mechanism which communicates with an operating system instance in a partition to which memory is being moved to cause the operating system instance to begin filling the memory.

6. A computer system according to claim 1, further **characterized by** a first pair of operating system instances sharing a first subset of the plurality of system resources and a second pair of operating system instances sharing a second subset of the plurality of system resources different from the first subset of operating system resources.

7. A computer system according to claim 6 wherein some memory being dedicated to each operating system instance in the first pair of operating system instances; some memory being dedicated to each operating system instance in the second pair of operating system instances; and some of the memory (1124) being shared among the first pair of operating system instances and the second pair of operating system instances.

8. A computer system according to claim 7 wherein the shared (1124) part of memory comprises a shared cache-coherent memory.

9. A computer system according to claim 1, further **characterized by**:
a processor designation storage device that stores a designation indicative of the operational status of a first processor relative to a first instance, the designation being used by the first instance in determining whether the first processor is currently available to it for processing activities.

10. A computer system according to claim 9 wherein the designation comprises a memory bit associated with the first instance, a first particular setting of the first memory bit indicating that the processor is under the control of the first instance.

11. A computer system according to claim 9 wherein the processor designation storage device stores (A) designations for each of a plurality of processors to define the association of each processor with one of said plurality of instances, the designations being used by the one instance to determine whether a given processor is currently available to it for processing; (B) a set of designations for each instance, each set of designations being associated with and examinable by its respective instance and indicating which, if any, of the processors is under the control of its respective instance, and whether a corresponding one or more of said processors has a particular operational status represented by that set.

12. A computer system according to claim 1 wherein a segment of the shared memory (434, 448) forms a database for the community's shared memory for indicating whether an operating system instance associated with a partition within the community is active.

13. A computer system according to claim 12 wherein each instance within a community maps to the shared memory database; and each instance examines the shared memory database as it maps to the database to determine whether other instances are active and, if other instances are active, joins the community.

14. A computer system according to claim 13 wherein access to the shared memory database region is synchronized through use of locks which block access to the database by one instance while another instance is accessing the region.

15. A computer system according to claim 1, wherein the software mechanism divides the memory into private (1126, 1128, 1130) and shared (1132) memory segments, allows only a single partition (1101, 1102, 1104) to have access to each private memory segment and allows a plurality of partitions which form a community to have access to each shared memory segment.

16. The computer system of claim 15 wherein the software mechanism blocks access by any partition (1101, 1102, 1104) to any memory segment that the software system designates as unowned by any partition.

17. A computer system according to claim 15 wherein the software mechanism (A) maintains free, zeroed, untested, and bad memory page lists; and memory pages to be removed are modified to an unowned status if they are on any of the memory page lists; (B) maintains a modified page list that indicates those memory pages which have been modified, but not written to a system paging file; and (C) maintains a shared memory database within shared memory, which indicates whether an operating system instance associated with a partition within the community is active.

18. A computer system according to claim 1, further **characterized by**:
a failure recovery apparatus that detects an event of a system failure within a first instance, and, in response, initiates a transfer of control of a processing resource from the first instance to a second instance without operator intervention.

19. A computer system according to claim 18 wherein the second instance has no processing duties prior to the failure within the first instance, and serves as a backup to the first instance to assume the processing duties of the first instance after said failure occurs; upon said failure within the first instance, control for a plurality of processing resources associated with the first instance is transferred to the second instance; and wherein each said processing resource for which control is to be transferred has associated with it a stored indication of the instance to which its control is to be transferred.

20. A computer system according to claim 18 wherein said processing resource is a secondary processor (2408) in the control of the first instance, and the first instance also controls a primary processor (2404) which directs the transfer of memory controlled by the first instance to a designated section of system memory.

21. A computer system according to claim 1, further **characterized by**:
permanent ownership assignment apparatus that provides an assignment of permanent ownership of each processor to a respective partition, the assignments being used to associate the processors with their respective partitions during initialization (2800) of the system.

22. A computer system according to claim 21 further comprising temporary ownership assignment apparatus that provides an assignment of temporary ownership of each processor to a respective partition, the temporary ownership assignments indicating the partition which currently has control of the processor.

23. A computer system according to claim 21 further comprising apparatus for changing the permanent ownership assignment of a given processor, information regarding the assignments being stored in a predetermined memory space; and said assignment changing apparatus comprises apparatus to change the contents of said predetermined memory space.

24. A computer system according to claim 22 wherein the permanent ownership assignment apparatus performs the permanent assignments using a specific processing action by the first processor causing the first processor to examine a memory location containing information indicative of the assigned owner, and causing the first processor, once it has joined its assigned partition, to provide an indication of its availability to join SMP operation, said indication of availability comprises a flag that is set by the first processor.

25. A computer system according to claim 1 further comprising a set of hardware flags associated with each partition, the hardware flags for a particular partition including at least one flag indicating the operational status of a particular processor executing on that partition, and an availability flag indicating whether said particular processor is available to join symmetric multiprocessing (SMP) on that partition.

26. A computer system according to claim 25 wherein each said set of hardware flags include an ownership flag, and, prior to the reassignment of the first processor, a first one of the ownership flags for the first partition indicates that the first processor is under the control of an instance running on the first partition, while, after the reassignment of the first processor, the first ownership flag indicates that the first processor is no longer under the control of the instance running on the first partition and is instead under the control of an instance running on the second partition.

27. A computer system according to claim 1, further **characterized by**:
a processor migration apparatus that reassigns a first processor from a first partition to a second partition, while it is executing under the control of an operating system instance running on the first partition, provides an indication of the destination partition to the first processor, and instructs the first processor to cease execution under the control of the instance running on the first partition.

28. A computer system according to claim 27 wherein the plurality of processors is divided into groups and wherein each group comprises a console program to which control of the processor is transferred prior to its reassignment to the second partition, and wherein said migration apparatus causes the first processor to enter an unassigned state prior to its reassignment to the second partition.

29. A computer system according to claim 1, further **characterized by**:
an inter-instance communication apparatus that enables communication between a first instance running on a first partition and a second instance running on a second partition by modification of shared memory to which both instances have access.

30. A computer system according to claim 29 wherein the communication apparatus can effect a given communication by modifying only one bit of the shared memory; wherein the bit that is modified is part of a notification bitvector of the second instance, the notification bitvector comprising a plurality of bits, each of which corresponds to a different predetermined event, and can have its value changed by the first instance to indicate the occurrence of the event to the second instance; and wherein the second instance uses the position of the bit in the bitvector as an index to locate in memory an appropriate task to initiate in response to the modification of that bit.

31. A computer system according to claim 30 wherein the communication apparatus includes apparatus under the control of the first instance that causes the generation of an interrupt from the first instance to the second instance to indicate to the second instance that said bit has been modified.

32. A computer system according to claim 29 wherein the communication apparatus further comprises a packet sending apparatus that stores in shared memory packetized data to be communicated from the first instance to the second instance.

33. A computer system according to claim 32 wherein the communication apparatus, for a given communication, modifies one notification bit in the shared memory, the modification of the bit indicating to the second instance that the packet has been stored; and said system further comprises apparatus for causing the generation of an interrupt to the second instance to indicate to the second instance that the notification bit has been modified; wherein, upon determining the presence of the packetized data, the second instance copies any pending data packet to local memory and deallocates the shared memory space in which it was previously stored.

34. A computer system according to claim 1, further **characterized by**:
the software mechanism assigning memory to private memory regions and to shared memory regions, and allowing a plurality of instances that form a sharing set to have access to an associated shared memory region by attaching to the region; and
a second software mechanism for recovering shared memory to which a failed instance has attached.

35. The computer system of claim 34 wherein an instance in a sharing set marks another instance in the sharing set that fails as unattached to a shared memory region to which the failed instance was attached at the time of its failure, and the memory of a shared memory region is freed when a last instance attached to the shared memory region detaches from the region.

36. A computer system according to claim 34 wherein an input/output reference count is maintained in private memory for every shared memory region, and (A) when an input/output operation is initiated, the reference count for each page of memory in the shared memory region on which input/output is performed is adjusted in one direction, and (B) when an input/output operation is completed, the reference count for each page of memory in the shared memory region on which input/output is performed is adjusted in the opposite direction.

37. A method of operating a computer system (200) having a plurality of assignable system resources, including processors (108-114), memory (120) and I/O circuitry (118), the method comprising the steps of:
(a) electrically interconnecting the processors (108-114), memory (120) and I/O circuitry (118) so that each processor has electrical access to all of the memory and at least some of the I/O circuitry;
(b) assigning the assignable system resources to a plurality of partitions (202, 204, 206), each partition including at least one processor, some memory and some I/O circuitry;
(c) running an operating system instance (208, 210, 212) in each partition (202, 204, 206);
(d) forming a community (420) of partitions by sharing memory (434, 448) among a group of partitions (412, 414); and
reassigning a first processor from a first partition to a second partition without rebooting the entire system, wherein said reassigning comprises causing, prior to the reassignment, the first processor to store a processing context relative to the first partition, and causing the first processor, after reassignment, to load any processing context which it may have stored from a previous execution with the second partition.

38. A method according to claim 37, further **characterized by** the step of:
(e) changing the configuration by migrating assignable system resources from one partition (202, 204, 206) to another during system operation without a reboot of the entire system (200)

39. A method according to claim 37, further **characterized by** the steps of:
(e) creating a first pair of operating system instances which share a first subset of the plurality of system resources;
(f) creating a second pair of operating system instances which share a second subset of the plurality of system resources different from the first subset of operating system resources;
(g) dedicating some memory to each operating system instance in the first pair of operating system instances;
(h) dedicating some memory to each operating system instance in the second pair of operating system instances; and
(i) sharing at least some of the memory among the first pair of operating system instances and the second pair of operating system instances.

40. A method according to claim 37, further **characterized by** the steps of:
(e) maintaining, with each instance, a record of processors present in the system, and recognizing a plurality of different operational statuses of the processors with regard to the instance; and
(f) storing, in a memory storage device, a designation for a first resource to define its association with a first instance and its operational status relative to the first instance, the designation being used by the first instance in determining whether to make use of the first resource, and changing the designation in a manner that comprises using a bit mask to change the contents of the memory storage device.

41. A method according to claim 37, further **characterized by** the step of:
(e) forming a shared memory database for the community (420) within the shared memory, including within the shared memory database an indication of whether an operating system instance associated with the community is active, each instance mapping to the shared memory database as it joins a community.

42. A method according to claim 41 wherein step (d) comprises the step of:
locking the shared memory database to block access to the database by another instance as an instance examines the shared memory database.

43. A method according to claim 37, further **characterized by** the step of:
(e) placing memory into an unowned state, whereby the memory is unowned by any partition, whenever the memory is to be added to or deleted from the system.

44. A method according to claim 37, further **characterized by** the steps of:
storing an indication of a destination instance to which control of a first processing resource of the first instance is to be transferred upon a failure within the first instance;
determining, upon the occurrence of said failure, the destination instance for the first processing resource; and
changing the indicia of control for the first processing resource to transfer control of the first processing resource from the first instance to the destination instance without operator involvement.

45. A method according to claim 37, further **characterized by** the step of:
providing an assignment of permanent ownership of each processor to a respective partition, the assignments being used to associate the processors with their respective partitions during initialization of the system, including the step of storing information regarding the assignments in non-volatile memory.

46. A method according to claim 37, further **characterized by** the step of:
reassigning a first processor from a first partition to a second partition, wherein said reassigning comprises causing the processor to terminate a first processing state prior to its reassignment under the control of an instance running on the first partition.

47. A method according to claim 37, further **characterized by** the step of:
providing inter-instance communication that allows a first instance running on a first partition to communicate with a second instance running on a second partition by modifying shared memory to which both instances have access.

48. A method according to claim 47 wherein, the communication providing step includes the steps of modifying a part of a notification bitvector of the second instance, the notification bitvector comprising a plurality of bits, each of which corresponds to a different predetermined event and can have its value changed to indicate the occurrence of that event; and using the position of the bit in the bitvector as an index to locate in memory an appropriate task to initiate in response to the modification of that bit; and storing in shared memory packetized data to be communicated from the first instance to the second instance.

49. A method according to claim 37, further **characterized by** the steps of:
(e) assigning memory to a shared memory region whereby a plurality of instances which form a sharing set have access to each shared memory region by attaching to the region and assigning memory to private memory regions; and
(f) recovering shared memory to which a failed instance has attached.

## Patentansprüche

1. Computersystem (200) mit einer Vielzahl von zuweisbaren Systemressourcen, enthaltend Prozessoren (108-114), einen Speicher (120) und I/O-Schaltkreise (118), wobei das Computersystem enthält:
einen Verbindungsmechanismus (122), der die Prozessoren, den Speicher und die I/O-Schaltkreise derart verbindet, dass jeder Prozessor elektrischen Zugriff auf den gesamten Speicher und wenigstens einige der I/O-Schaltkreise hat;
einen Softwaremechanismus, der die zuweisbaren Systemressourcen einer Vielzahl von Partitionen (202, 204, 206) zuweist, wobei jede Partition wenigstens einen Prozessor, einen Teil des Speichers und einen Teil der I/O-Schaltkreise enthält;
eine Instanz eines Betriebssystems (208, 210, 212), das auf jeder Partition (202, 204, 206) läuft; wobei
wenigstens eine Gruppe von Partitionen (412, 414) eine Gemeinschaft (410) bildet, die Speicher (434, 448) gemeinsam nutzt; und
eine Prozessor-Migrationsvorrichtung, die einen ersten Prozessor aus einer ersten Partition einer zweiten Partition ohne Neustart des gesamten Systems neu zuweist, wobei die Migrationsvorrichtung einen Verarbeitungskontext des Prozessors im Bezug auf die erste Partition vor der Neuzuweisung speichert und nach der Neuzuweisung des ersten Prozessors der erste Prozessor einen beliebigen Verarbeitungskontext lädt, den er während einer vorherigen Ausführung mit der zweiten Partition gespeichert haben kann.

2. Computersystem nach Anspruch 1, bei dem die Vielzahl der Prozessoren (108-114) physikalisch in Partitionen (202, 204, 206) geteilt ist, und bei dem jede Partition ein Konsolenprogramm (213, 215, 217) enthält, das mit den Prozessoren in der Partition interagiert.

3. Computersystem nach Anspruch 2, bei dem der Softwaremechanismus zum Zuweisen von Ressourcen ein Konsolenprogramm (213, 215, 217) enthält, das Konfigurationsinformationen hält, die darauf hinweisen, welcher aus der Vielzahl von Prozessoren (108-114), welche Speicherabschnitte (120) und welche I/O-Schaltkreisabschnitte jeder Partition (202, 204, 206) zugewiesen werden; und bei dem der Softwaremechanismus, der die Systemressourcen zuweist, einen ersten Datenspeicher zum Halten von Konfigurationsinformationen, die darauf hinweisen, welcher aus der Vielzahl von Prozessoren jeder Partition zugewiesen wird, und einen Mechanismus enthält, der die Konfigurationsinformationen abändert, um eine Zuweisung der zuweisbaren Systemressourcen von einer Partition zu einer weiteren zu ändern.

4. Computersystem nach Anspruch 1, weiterhin **gekennzeichnet durch** einen Migrationsmechanismus, um zuweisbare Systemressourcen von einer Partition (1000, 1002) zu einer weiteren während des Systembetriebs zu migrieren, ohne das gesamte System neuzustarten.

5. Computersystem nach Anspruch 4, bei dem der Migrationsmechanismus enthält: einen ersten Kommunikationsmechanismus (904), der mit einer Betriebssystem-Instanz (1008) auf einer Partition (1000) kommuniziert, von der ein Prozessor bewegt wird, um die Betriebssystem-Instanz zu veranlassen, den Prozessor stillzulegen; einen zweiten Kommunikationsmechanismus (910), der mit einer Betriebssystem-Instanz (1018) auf der Partition (1002) kommuniziert, zu der ein Prozessor bewegt wird, um die Betriebssystem-Instanz zu veranlassen, die Verwendung des Prozessors zu beginnen; einen dritten Kommunikationsmechanismus, der mit einer Betriebssystem-Instanz auf einer Partition kommuniziert, von der Speicher bewegt wird, um die Betriebssystem-Instanz zu veranlassen, den Speicher zu entladen; einen vierten Kommunikationsmechanismus, der mit einer Vielzahl von Betriebssystem-Instanzen kommuniziert, die Speicher gemeinsam nutzen, der bewegt werden soll, um die Betriebssystem-Instanzen zu veranlassen, gemeinsam den Speicher zu entladen; und einen fünften Kommunikationsmechanismus, der mit einer Betriebssystem-Instanz auf einer Partition kommuniziert, zu der der Speicher bewegt wird, um die Betriebssystem-Instanz zu veranlassen, das Füllen des Speichers zu beginnen.

6. Computersystem nach Anspruch 1, weiterhin **gekennzeichnet durch** ein erstes Paar von Betriebssystem-Instanzen, die einen ersten Teilsatz der Vielzahl von Betriebssystemressourcen gemeinsam nutzen, und ein zweites Paar von Betriebssystem-Instanzen, die einen zweiten Teilsatz der Vielzahl von Systemressourcen gemeinsam nutzen, der sich vom ersten Teilsatz der Betriebssystemressourcen unterscheidet.

7. Computersystem nach Anspruch 6, bei dem ein Teil des Speichers für jede Betriebssystem-Instanz im ersten Paar von Betriebssystem-Instanzen bestimmt ist, ein Teil des Speichers für jede Betriebssystem-Instanz im zweiten Paar der Betriebssystem-Instanzen bestimmt ist und ein Teil des Speichers (1124) vom ersten Paar der Betriebssystem-Instanzen und dem zweiten Paar der Betriebssystem-Instanzen gemeinsam genutzt wird.

8. Computersystem nach Anspruch 7, bei dem der gemeinsam genutzte Teil (1124) des Speichers einen gemeinsam genutzten cache-kohärenten Speicher enthält.

9. Computersystem nach Anspruch 1, weiterhin **gekennzeichnet durch**:
eine Prozessorkennzeichnungs-Speichervorrichtung, die eine Kennzeichnung speichert, die auf den Betriebszustand eines ersten Prozessors im Bezug auf eine erste Instanz hinweist, wobei die Kennzeichnung von der ersten Instanz verwendet wird, um zu bestimmen, ob der erste Prozessor derzeit für sie für die Verarbeitung von Aktivitäten verfügbar ist.

10. Computersystem nach Anspruch 9, bei dem die Kennzeichnung ein Speicherbit beinhaltet, das der ersten Instanz zugeordnet ist, wobei eine erste spezielle Einstellung des ersten Speicherbits darauf hinweist, dass der Prozessor von der ersten Instanz gesteuert wird.

11. Computersystem nach Anspruch 9, bei dem die Prozessorkennzeichnungs-Speichervorrichtung speichert: (A) Kennzeichnungen für jeden einer Vielzahl von Prozessoren, um die Zuordnung jedes Prozessors zu einer der Vielzahl von Instanzen zu definieren, wobei die Kennzeichnungen von der einen Instanz verwendet werden, um zu bestimmen, ob ein gegebener Prozessor derzeit für sie für die Verarbeitung verfügbar ist; (B) einen Satz von Kennzeichnungen für jede Instanz, wobei jeder Satz von Kennzeichnungen seiner jeweiligen Instanz zugeordnet ist und von dieser ausführbar ist und darauf hinweist, welcher der Prozessoren, wenn überhaupt, von seiner entsprechenden Instanz gesteuert wird, und ob ein entsprechender oder entsprechende der Prozessoren einen speziellen Betriebszustand hat/haben, der durch diesen Satz dargestellt ist.

12. Computersystem nach Anspruch 1, bei dem ein Segment des gemeinsam genutzten Speichers (434, 448) eine Datenbank für den gemeinsam genutzten Speicher der Gemeinschaft bildet um zu darauf hinzuweisen, ob eine Betriebssystem-Instanz, die einer Partition innerhalb der Gemeinschaft zugeordnet ist, aktiv ist.

13. Computersystem nach Anspruch 12, bei dem jede Instanz innerhalb einer Gemeinschaft auf die Datenbank gemeinsam genutzten Speichers abbildet und jede Instanz die Datenbank gemeinsam genutzten Speichers untersucht, wenn sie auf die Datenbank abbildet, um zu bestimmen, ob andere Instanzen aktiv sind, und sich, sofern andere Instanzen aktiv sind, der Gemeinschaft anschließt.

14. Computersystem nach Anspruch 13, bei dem der Zugriff auf den Datenbankbereich gemeinsam genutzten Speichers mit Hilfe von Verriegelungen synchronisiert ist, die den Zugriff auf die Datenbank durch eine Instanz sperren, während eine weitere Instanz auf den Bereich zugreift.

15. Computersystem nach Anspruch 1, bei dem der Softwaremechanismus den Speicher in private (1126, 1128, 1130) und gemeinsam genutzte (1132) Speichersegmente teilt, es nur einer einzigen Partition (1101, 1102, 1104) gestattet, auf jedes private Speichersegment zuzugreifen, und es einer Vielzahl von Partitionen, die eine Gemeinschaft bilden, gestattet, auf jedes gemeinsam genutzte Speichersegment zuzugreifen.

16. Computersystem nach Anspruch 15, bei dem der Softwaremechanismus den Zugriff durch eine beliebige Partition (1101, 1102, 1104) auf ein beliebiges Speichersegment sperrt, das das Softwaresystem als zu keiner Partition zugehörig kennzeichnet.

17. Computersystem nach Anspruch 15, bei dem der Softwaremechanismus (A) freie, genullte, ungeprüfte und beschädigte Speicherseitenlisten hält und Speicherseiten, die entfernt werden sollen, auf einen nicht zugehörigen Status abgeändert werden, wenn sie sich auf einer beliebigen der Speicherseitenlisten befinden, (B) eine abgeänderte Seitenliste hält, die auf jene Speicherseiten hinweist, die abgeändert, jedoch nicht in eine Systemseitenerstellungsdatei geschrieben wurden, und (C) eine Datenbank gemeinsam genutzten Speichers innerhalb des gemeinsam genutzten Speichers hält, die darauf hinweist, ob eine Betriebssystem-Instanz, die einer Partition innerhalb der Gemeinschaft zugeordnet ist, aktiv ist.

18. Computersystem nach Anspruch 1, weiterhin **gekennzeichnet durch**:
eine Fehlerwiederherstellungs-Vorrichtung, die ein Ereignis eines Systemfehlers innerhalb einer ersten Instanz erfasst und in Erwiderung einen Transfer einer Steuerung einer Verarbeitungsressource von der ersten Instanz zur zweiten Instanz ohne Eingreifen der Bedienperson initiiert.

19. Computersystem nach Anspruch 18, bei dem die zweite Instanz keine Verarbeitungsaufgaben vor dem Fehler innerhalb der ersten Instanz hat und als Unterstützung für die erste Instanz dient, um die Verarbeitungsaufgaben der ersten Instanz zu übernehmen, nachdem der Fehler aufgetreten ist, wobei bei dem Fehler innerhalb der ersten Instanz eine Steuerung für eine Vielzahl von Verarbeitungsressourcen, die der ersten Instanz zugeordnet sind, zur zweiten Instanz übertragen werden und jeder Verarbeitungsressource, für die die Steuerung übertragen werden soll, ein gespeicherter Hinweis auf die Instanz zugeordnet ist, zu der ihre Steuerung übertragen werden soll.

20. Computersystem nach Anspruch 18, bei dem die Verarbeitungsressource ein sekundärer Prozessor (2408) unter Steuerung der ersten Instanz ist und die erste Instanz zudem einen primären Prozessor (2404) steuert, der den Transfer des Speichers, der von der ersten Instanz gesteuert wird, zu einem **gekennzeichnet**en Abschnitt des Systemspeichers anweist.

21. Computersystem nach Anspruch 1, weiterhin **gekennzeichnet durch**:
eine Dauerzugehörigkeits-Zuweisungsvorrichtung, die eine Zuweisung einer dauerhaften Zugehörigkeit jedes Prozessors zu einer entsprechenden Partition erzeugt, wobei diese Zuweisungen verwendet werden, um die Prozessoren ihren jeweiligen Partitionen während der Initialisierung (2800) des Systems zuzuweisen.

22. Computersystem nach Anspruch 21, weiterhin enthaltend eine Temporärzugehörigkeits-Zuweisungsvorrichtung, die eine Zuweisung einer vorübergehenden Zugehörigkeit jedes Prozessors zu einer entsprechenden Partition erzeugt, wobei diese Temporärzugehörigkeits-Zuordnungen auf die Partition hinweisen, die momentan die Steuerung des Prozessors innehat.

23. Computersystem nach Anspruch 21, weiterhin enthaltend eine Vorrichtung zum Ändern der Dauerzugehörigkeits-Zuweisung eines gegebenen Prozessors, wobei Informationen, die die Zuweisung betreffen, in einem vorbestimmten Speicherplatz gespeichert sind und die Zuweisungsändenrngsvorrichtung eine Vorrichtung zum Ändern der Inhalte des vorbestimmten Speicherplatzes beinhaltet.

24. Computersystem nach Anspruch 22, bei dem die Dauerzugehörigkeits-Zuweisungsvorrichtung die Dauerzugehörigkeits-Zuweisungen mit Hilfe einer speziellen Verarbeitungsaktion durch den ersten Prozessor ausführt, wodurch der erste Prozessor veranlasst wird, einen Speicherort zu prüfen, der Informationen enthält, die für die zugewiesene Zugehörigkeit kennzeichnend sind, und der erste Prozessor veranlasst wird, sobald er sich mit seiner Partition verbunden hat, einen Hinweis auf seine Verfügbarkeit bereitzustellen, an einem SMP-Vorgang teilzunehmen, wobei dieser Hinweis auf die Verfügbarkeit ein Kennzeichen beinhaltet, das durch den ersten Prozessor eingestellt wird.

25. Computersystem gemäß Anspruch 1, weiterhin enthaltend einen Satz von Hardware-Kennzeichen, die jeder Partition zugeordnet sind, wobei die Hardware-Kennzeichen für eine spezielle Partition wenigstens ein Kennzeichen, dass auf den Betriebszustand eines speziellen Prozessors hinweist, der auf dieser Partition arbeitet, und ein Verfügbarkeitskennzeichen beinhalten, das darauf hinweist, ob der spezielle Prozessor verfügbar ist, um an einer symmetrischen Mehrfachverarbeitung (SMP) auf dieser Partition teilzunehmen.

26. Computersystem nach Anspruch 25, bei dem jeder Satz der Hardware-Kennzeichen ein Zugehörigkeitskennzeichen enthält und vor der Neuzuweisung des ersten Prozessors ein erstes der Zugehörigkeitskennzeichen für die erste Partition kennzeichnet, dass der erste Prozessor von einer Instanz gesteuert wird, die auf der ersten Partition läuft, während nach der Neuzuweisung des ersten Prozessors das erste Zugehörigkeitskennzeichen kennzeichnet, dass der erste Prozessor nicht länger von der Instanz gesteuert wird, die auf der ersten Partition läuft, sondern anstelle dessen von einer Instanz gesteuert wird, die auf der zweiten Partition läuft.

27. Computersystem nach Anspruch 1, weiterhin **gekennzeichnet durch**:
eine Prozessor-Migrationsvorrichtung, die einen ersten Prozessor von einer ersten Partition einer zweiten Partition neu zuweist, während sie unter Steuerung einer Betriebssystem-Instanz, die auf der ersten Partition läuft, einen Hinweis auf die Bestimmungspartition dem ersten Prozessor zuführt und den ersten Prozessor anweist, die Ausführung unter Steuerung der Instanz, die auf der ersten Partition läuft, zu beenden.

28. Computersystem nach Anspruch 27, bei dem die Vielzahl der Prozessoren in Gruppen unterteilt ist und bei der jede Gruppe ein Konsolenprogramm enthält, zu dem die Steuerung des Prozessors vor dessen Neuzuweisung zur zweiten Partition übertragen wird, und bei dem die Migrationsvorrichtung den ersten Prozessor veranlasst, in einen nicht zugewiesenen Zustand einzutreten, bevor er der zweiten Partition neu zugewiesen wird.

29. Computersystem nach Anspruch 1, weiterhin **gekennzeichnet durch**:
eine Zwischeninstanz-Kommunikationsvorrichtung, die eine Kommunikation zwischen einer ersten Instanz, die auf einer ersten Partition läuft, und einer zweiten Instanz, die auf einer zweiten Instanz läuft, **durch** eine Abänderung des gemeinsam genutzten Speichers ermöglicht, auf den beide Instanzen Zugriff haben.

30. Computersystem nach Anspruch 29, bei dem die Kommunikationsvorrichtung eine gegebene Kommunikation durch Abändern lediglich eines Bits des gemeinsam genutzten Speichers ausführen kann, wobei das Bit, das abgeändert wird, Teil eines Meldungsbitvektors der zweiten Instanz ist und der Meldungsbitvektor eine Vielzahl von Bits enthält, die jeweils einem anderen vorbestimmten Ereignis entsprechen und deren Wert durch die erste Instanz geändert werden kann, um auf das Auftreten des Ereignisses der zweiten Instanz hinzuweisen, und die zweite Instanz die Position des Bits im Bitvektor als Index verwendet, um im Speicher eine geeignete Aufgabe zu lokalisieren, die in Erwiderung der Modifikation dieses Bits initiiert wird.

31. Computersystem nach Anspruch 30, bei dem die Kommunikationsvorrichtung eine Vorrichtung unter Steuerung der ersten Instanz enthält, die die Erzeugung eines Interrupts von der ersten Instanz zur zweiten Instanz verursacht, um die zweite Instanz darauf hinzuweisen, dass das Bit abgeändert wurde.

32. Computersystem nach Anspruch 29, bei dem die Kommunikationsvorrichtung weiterhin eine Paketsendevorrichtung enthält, die im gemeinsam genutzten Speicher paketierte Daten speichert, die von der ersten Instanz zur zweiten Instanz übermittelt werden sollen.

33. Computersystem nach Anspruch 32, bei dem die Kommunikationsvorrichtung für eine gegebene Kommunikation ein Meldungsbit im gemeinsam genutzten Speicher abändert, wobei die Abänderung des Bits die zweite Instanz darauf hinweist, dass das Paket gespeichert wurde, und das System weiterhin eine Vorrichtung enthält, die die Erzeugung eines Interrupts zur zweiten Instanz bewirkt, um die zweite Instanz darauf hinzuweisen, dass das Meldungsbit abgeändert wurde, wobei bei Bestimmung der Gegenwart der paketierten Daten die zweite Instanz ein beliebiges bevorstehendes Datenpaket in den lokalen Speicher kopiert und die Zuordnung des gemeinsam genutzten Speichers aufhebt, in dem es zuvor gespeichert war.

34. Computersystem nach Anspruch 1, weiterhin **gekennzeichnet durch**:
den Softwaremechanismus, der Speicher privaten Speicherbereichen und gemeinsam genutzten Speicherbereichen zuweist und es einer Vielzahl von Instanzen, die einen gemeinsam nutzenden Satz erzeugen, gestattet, auf einen zugeordneten gemeinsam genutzten Speicherbereich zuzugreifen, indem sie sich an den Bereich anfügen, und
einen zweiten Softwaremechanismus zum Wiederherstellen eines gemeinsam genutzten Speichers, an den sich eine fehlerhafte Instanz angefügt hat.

35. Computersystem nach Anspruch 34, bei dem eine Instanz in einem gemeinsam nutzenden Satz eine weitere Instanz im gemeinsam nutzenden Satz, die als nicht angefügt an einen gemeinsam genutzten Speicherbereich fehlerhaft ist, an den die fehlerhafte Instanz angefügt wurde, zum Zeitpunkt ihres Fehlers markiert, und der Speicher eines gemeinsam genutzten Speicherbereiches freigemacht wird, wenn sich eine letzte Instanz, die an den gemeinsam genutzten Speicherbereich angefügt ist, sich von diesem Bereich löst.

36. Computersystem nach Anspruch 34, bei dem eine Eingangs-/Ausgangs-Bezugszahl in einem privaten Speicher für jeden gemeinsam genutzten Speicherbereich gehalten wird und (A), wenn ein Eingangs-/Ausgangsvorgang initiiert wird, die Bezugszahl für jede Seite des Speichers im gemeinsam genutzten Speicherbereich, an dem der Eingang/Ausgang ausgeführt wird, in einer Richtung eingestellt wird, und (B), wenn ein Eingangs-/Ausgangs-Vorgang abgeschlossen ist, die Bezugszahl für jede Seite des Speichers im gemeinsam genutzten Speicherbereich, an dem der Eingangs-/Ausgangsvorgang ausgeführt wird, in der entgegengesetzten Richtung eingestellt wird.

37. Verfahren zum Betreiben eines Computersystems (200), das über eine Vielzahl von zuweisbaren Systemressourcen verfügt, enthaltend Prozessoren (108-114), einen Speicher (120) und I/O-Schaltkreise (118), wobei das Verfahren folgende Schritte enthält:
(a) elektrisches Verbinden der Prozessoren (108-114), des Speichers (120) und der I/O-Schaltkreise (118), so dass jeder Prozessor elektrischen Zugriff auf den gesamten Speicher und wenigstens einen Teil der I/O-Schaltkreise hat;
(b) Zuweisen der zuweisbaren Systemressourcen zu einer Vielzahl von Partitionen (202, 204, 206), wobei jede Partition wenigstens einen Prozessor, einen Tei des Speichers und einen Teil der I/O-Schaltkreise enthält;
(c) Ausführen einer Betriebssystem-Instanz (208, 210, 212) auf jeder Partition (202, 204, 206);
(d) Ausbilden einer Gemeinschaft (420) von Partitionen durch gemeinsames Nutzen von Speicher (434, 448) aus einer Gruppe von Partitionen (412, 414); und
Neuzuweisen eines ersten Prozessors von einer ersten Partition zu einer zweiten Partition ohne Neustarten des gesamten Systems, wobei diese Neuzuweisung beinhaltet, dass vor der Neuzuweisung der erste Prozessor veranlasst wird, einen Verarbeitungskontext im Bezug auf die erste Partition zu speichern, und der erste Prozessor nach der Neuzuweisung veranlasst wird, einen beliebigen Verarbeitungskontext zu laden, den er von einer vorherigen Ausführung mit der zweiten Partition gespeichert haben kann.

38. Verfahren nach Anspruch 37, weiterhin **gekennzeichnet durch** folgenden Schritt:
(e) Ändern der Konfiguration **durch** zuweisbare Migrations-Systemressourcen von einer Partition (202, 204, 206) zu einer weiteren Partition während des Systembetriebs ohne ein Neustarten des gesamten Systems (200).

39. Verfahren nach Anspruch 37, weiterhin **gekennzeichnet durch** folgende Schritte:
(e) Erzeugen eines ersten Paares von Betriebssystem-Instanzen, die einen ersten Teilsatz aus der Vielzahl von Systemressourcen gemeinsam nutzen;
(f) Erzeugen eines zweiten Paares von Betriebssystem-Instanzen, die einen zweiten Teilsatz aus der Vielzahl von Systemressourcen gemeinsam nutzen, der sich vom ersten Teilsatz von Betriebssystem-Ressourcen unterscheidet;
(g) Bestimmen eines Teils des Speichers für jede Betriebssystem-Instanz im ersten Paar von Betriebssystem-Instanzen;
(h) Bestimmen eines Teils des Speichers für jede Betriebssystem-Instanz im zweiten Paar von Betriebssystem-Instanzen; und
(i) gemeinsames Nutzen wenigstens eines Teil des Speichers aus dem ersten Paar von Betriebssystem-Instanzen und dem zweiten Paar von Betriebssystem-Instanzen.

40. Verfahren nach Anspruch 37, weiterhin **gekennzeichnet durch** folgende Schritte:
Halten mit jeder Instanz eines Verzeichnisses von Prozessoren, die im System vorhanden sind, und Erkennen einer Vielzahl unterschiedlicher Betriebszustände der Prozessoren im Bezug auf die Instanz; und
(f) Speichern in einer Speicher-Speichervorrichtung einer Kennzeichnung für eine erste Ressource, um ihre Zuordnung zu einer ersten Instanz und ihren Betriebszustand im Bezug auf die erste Instanz zu definieren, wobei die Kennzeichnung von der ersten Instanz bei der Ermittlung verwendet wird, ob die erste Ressource verwendet werden soll, und Ändern der Kennzeichnung in einer Art und Weise, die die Verwendung einer Bitmaske beinhaltet, um die Inhalte der Speicher-Speichervorrichtung zu ändern.

41. Verfahren nach Anspruch 37, weiterhin **gekennzeichnet durch** folgenden Schritt:
Ausbilden einer Datenbank gemeinsam genutzten Speichers für die Gemeinschaft (420) innerhalb des gemeinsam genutzten Speichers, enthaltend innerhalb der Datenbank gemeinsam genutzten Speichers einen Hinweis darauf, ob eine Betriebssystem-Instanz, die der Gemeinschaft zugeordnet ist, aktiv ist, wobei jede Instanz auf die Datenbank gemeinsam genutzten Speichers abbildet, wenn sie sich der Gemeinschaft anschließt.

42. Verfahren nach Anspruch 41, bei dem der Schritt (d) folgenden Schritt enthält:
Verriegeln der Datenbank gemeinsam genutzten Speichers, um einen Zugriff auf die Datenbank durch eine weitere Instanz zu blockieren, wenn eine Instanz die Datenbank gemeinsam genutzten Speichers untersucht.

43. Verfahren nach Anspruch 37, weiterhin **gekennzeichnet durch** folgenden Schritt:
(e) Versetzen des Speichers in einen nicht zugehörigen Zustand, wodurch der Speicher nicht einer beliebigen Partition zugehörig ist, wann immer der Speicher dem System hinzugefügt oder aus diesem gelöscht werden soll.

44. Verfahren nach Anspruch 37, weiterhin **gekennzeichnet durch** folgende Schritte:
Speichen eines Hinweises auf eine Bestimmungs-Instanz, auf die die Steuerung einer ersten Verarbeitungsressource der ersten Instanz bei einem Fehler innerhalb der ersten Instanz übertragen werden soll;
Ermitteln bei Auftreten des Fehlers der Bestimmungs-Instanz für die erste Verarbeitungsressource; und
Ändern der Indizien einer Steuerung für die erste Verarbeitungsressource, um die Steuerung der ersten Verarbeitungsressource von der ersten Instanz auf die Bestimmungs-Instanz ohne Eingreifen der Bedienperson zu übertragen.

45. Verfahren nach Anspruch 37, weiterhin **gekennzeichnet durch** folgenden Schritt:
Bereitstellen einer Zuweisung einer dauerhaften Zugehörigkeit jedes Prozessors zu einer jeweiligen Partition, wobei die Zuweisungen verwendet werden, um die Prozessoren ihren jeweiligen Partitionen während der Initialisierung des Systems zuzuordnen, enthaltend den Schritt des Speicherns von Informationen, die die Zuweisungen im nicht flüchtigen Speicher betreffen.

46. Verfahren nach Anspruch 37, weiterhin **gekennzeichnet durch** folgenden Schritt:
Neuzuweisen eines ersten Prozessors von einer ersten Partition zu einer zweiten Partition, wobei die Neuzuweisung beinhaltet, den Prozessor zu veranlassen, einen ersten Verarbeitungszustand vor seiner Neuzuweisung unter Steuerung einer Instanz zu beenden, die auf der ersten Partition läuft.

47. Verfahren nach Anspruch 37, weiterhin **gekennzeichnet durch** folgenden Schritt:
Bereitstellen einer Zwischeninstanz-Kommunikation, die es einer ersten Instanz, die auf einer ersten Partition läuft, mit einer zweiten Instanz zu kommunizieren, die auf einer zweiten Partition läuft, indem gemeinsam genutzter Speicher abgeändert wird, auf den beide Instanzen zugriff haben.

48. Verfahren nach Anspruch 47, bei dem der Schritt zur Bereitstellung einer Kommunikation folgende Schritte umfasst: Abändern eines Teils eines Meldungsbitvektors der zweiten Instanz, wobei der Meldungsbitvektor eine Vielzahl von Bits enthält, die jeweils einem anderen vorbestimmten Ereignis entsprechen und deren Wert geändert werden kann, um einen Hinweis auf das Eintreten dieses Ereignisses zu geben; und Verwenden der Position des Bits im Bitvektor als Index, um im Speicher eine geeignete Aufgabe zu lokalisieren, die in Erwiderung auf die Abänderung dieses Bits initiiert wird; und Speichern von paketierten Daten im gemeinsam genutzten Speicher, die von der ersten Instanz zur zweiten Instanz übermittelt werden sollen.

49. Verfahren nach Anspruch 37, weiterhin **gekennzeichnet durch** folgende Schritte:
(e) Zuweisen von Speicher zu einem gemeinsam genutzten Speicherbereich, wodurch eine Vielzahl von Instanzen, die einen gemeinsam nutzenden Satz bilden, Zugriff auf jeden gemeinsam genutzten Speicherbereich haben, indem sie sich an den Bereich anfügen, und Zuweisen von Speicher zu privaten Speicherbereichen; und
(f) Wiederherstellen von gemeinsam genutztem Speicher, an den sich eine fehlerhafte Instanz angefügt hat.

## Revendications

1. Système d'ordinateur (200) ayant une pluralité de ressources système pouvant être allouées, comprenant des processeurs (108 à 114), une mémoire (120) et un ensemble de circuits E/S (118), le système d'ordinateur comportant :
un mécanisme d'interconnexion (122) pour interconnecter électriquement les processeurs, la mémoire et l'ensemble de circuits E/S de sorte que chaque processeur a un accès électrique à la totalité de la mémoire et à au moins une partie de l'ensemble de circuits E/S ;
un mécanisme logiciel pour allouer les ressources système pouvant être allouées à une pluralité de partitions (202, 204, 206), chaque partition comprenant au moins un processeur, une partie de la mémoire et une partie de l'ensemble de circuits E/S ;
une instance de système d'exploitation (208, 210, 212) s'exécutant dans chaque partition (202, 204, 206) ; et
au moins un groupe de partitions (412, 414) formant une communauté (410) qui se partage la mémoire (434, 448) ; et
un appareil de migration de processeur qui réalloue un premier processeur d'une première partition à une seconde partition sans nécessiter de redémarrage du système dans sa totalité, où ledit appareil de migration stocke un contexte de traitement du processeur se rapportant à la première partition avant la réallocation, et où, après la réallocation du premier processeur, le premier processeur charge tout contexte de traitement qu'il pourrait avoir stocké au cours d'une précédente exécution avec la seconde partition.

2. Système d'ordinateur selon la revendication 1, dans lequel la pluralité de processeurs (108 à 114) est divisée de façon physique en partitions (202, 204, 206) et dans lequel chaque partition comporte un programme de console (213, 215, 217) qui interagit avec les processeurs dans la partition.

3. Système d'ordinateur selon la revendication 2, dans lequel le mécanisme logiciel pour allouer les ressources comporte un programme de console (213, 215, 217) qui maintient les informations de configuration indiquant lesquels parmi la pluralité de processeurs (108 à 114), lesquelles parties de la mémoire (120) et lesquelles parties de l'ensemble de circuits E/S sont alloués à chacune des partitions (202, 204, 206) ; et dans lequel le mécanisme logiciel pour allouer les ressources systèmes comporte un premier stockage de données pour maintenir les informations de configuration indiquant lequel parmi la pluralité de processeurs est alloué à chaque partition ; ainsi qu'un mécanisme pour modifier les informations de configuration afin de changer une allocation de ressources système pouvant être allouées entre une partition et une autre.

4. Système d'ordinateur selon la revendication 1, **caractérisé en outre par** un mécanisme de migration pour migrer les ressources système pouvant être allouées d'une partition (1000, 1002) vers une autre au cours du fonctionnement du système sans nécessiter un redémarrage de la totalité du système.

5. Système d'ordinateur selon la revendication 4, dans lequel le mécanisme de migration comporte un premier mécanisme de communication (904) qui communique avec une instance du système d'exploitation (1008) dans une partition (1000) depuis laquelle un processeur est en train d'être migré pour provoquer la reconnaissance du processeur par l'instance de système d'exploitation ; un deuxième mécanisme de communication (910) qui communique avec une instance du système d'exploitation (1018) dans une partition (1002) vers laquelle un processeur est train d'être migré pour provoquer le commencement de l'utilisation du processeur par l'instance du système d'exploitation ; un troisième mécanisme de communication qui communique avec une instance de système d'exploitation dans une partition depuis laquelle une mémoire est en train d'être migrée pour provoquer le déchargement de la mémoire par l'instance du système d'exploitation ; un quatrième mécanisme de communication qui communique avec une pluralité d'instances de système d'exploitation qui se partagent la mémoire devant être migrée pour provoquer le déchargement de façon coopérative de la mémoire par les instances de système d'exploitation ; et un cinquième mécanisme de communication qui communique avec une instance du système d'exploitation dans une partition vers laquelle la mémoire est en train d'être migrée pour provoquer le commencement du remplissage de la mémoire par l'instance du système d'exploitation.

6. Système d'ordinateur selon la revendication 1, **caractérisé en outre par** une première paire d'instances du système d'exploitation se partageant un premier sous-ensemble de la pluralité de ressources système et une seconde paire d'instances du système d'exploitation se partageant un second sous-ensemble de la pluralité de ressources système différent du premier sous-ensemble de ressources du système d'exploitation.

7. Système d'ordinateur selon la revendication 6, dans lequel une partie de mémoire étant dédiée à chaque instance du système d'exploitation dans la première paire d'instances du système d'exploitation ; une partie de mémoire étant dédiée à chaque instance du système d'exploitation dans la seconde paire d'instances du système d'exploitation; et une partie de mémoire (1124) étant partagée entre la première paire d'instances du système d'exploitation et la seconde paire d'instances du système d'exploitation.

8. Système d'ordinateur selon la revendication 7, dans lequel la partie partagée de mémoire (1124) comporte une mémoire partagée avec un cache correspondant.

9. Système d'ordinateur selon la revendication 1, **caractérisé en outre par** :
un dispositif de stockage de désignation de processeur qui stocke une désignation indiquant le statut opérationnel d'un premier processeur se rapportant à une première instance, la désignation étant utilisée par la première instance quand il est déterminé si le premier processeur est actuellement à sa disposition pour lui permettre de traiter des activités.

10. Système d'ordinateur selon la revendication 9, dans lequel la désignation contient un bit de mémoire associé à la première instance, un premier paramétrage particulier du premier bit de mémoire indiquant que le processeur est sous le contrôle de la première instance.

11. Système d'ordinateur selon la revendication 9, dans lequel le dispositif de stockage de désignation du processeur stocke (A) des désignations pour chacun d'une pluralité de processeurs pour définir l'association de chaque processeur avec l'une parmi ladite pluralité d'instances, les désignations étant utilisées par la une instance pour déterminer si un processeur donné est actuellement à sa disposition pour lui permettre d'exécuter des traitements ; (B) un ensemble de désignations pour chaque instance, chaque ensemble de désignations étant associé avec son instance respective et pouvant être analysé par elle et indiquant lequel, s'il y en a un, des processeurs est sous le contrôle de son instance respective, et si l'un correspondant ou plusieurs desdits processeurs a un statut opérationnel particulier représenté par cet ensemble.

12. Système d'ordinateur selon la revendication 1, dans lequel un segment de la mémoire partagée (434, 448) forme une base de données pour la mémoire partagée de la communauté afin d'indiquer si une instance du système d'exploitation associée avec une partition au sein de la communauté est active.

13. Système d'ordinateur selon la revendication 12, dans lequel chaque instance au sein d'une communauté est mappée avec la base de données de mémoire partagée ; et chaque instance analyse la base de données de mémoire partagée alors qu'elle se mappe avec la base de données pour déterminer si d'autres instances sont actives et, dans le cas où d'autres instances sont actives, rejoint la communauté.

14. Système d'ordinateur selon la revendication 13, dans lequel l'accès à la zone de base de données de mémoire partagée est synchronisé par le biais de l'utilisation de verrous qui bloquent l'accès à la base de données par une instance tandis que l'autre instance est en train d'accéder à la zone.

15. Système d'ordinateur selon la revendication 1, dans lequel le mécanisme logiciel divise la mémoire en segments de mémoire privés (1126, 1128, 1130) et partagés (1132), permet l'accès à chaque segment de mémoire privé uniquement par une seule partition (1101, 1102, 1104) et permet l'accès à chaque segment de mémoire partagé par une pluralité de partitions qui forment une communauté.

16. Système d'ordinateur selon la revendication 15, dans lequel le mécanisme logiciel bloque l'accès par une quelconque partition (1101, 1102, 1104) à un quelconque segment de mémoire que le système logiciel désigne comme n'ayant pas de rattachement propriétaire à une quelconque partition.

17. Système d'ordinateur selon la revendication 15, dans lequel le mécanisme logiciel (A) maintient des listes de pages de mémoire libres, mises à zéro, non testées et incorrectes ; et des pages de mémoire devant être supprimées sont modifiées pour prendre un statut de non rattachement propriétaire dans le cas où elles figurent sur l'une quelconque des listes de pages de mémoire ; (B) maintient une liste de pages modifiée qui indique celles des pages de mémoire qui ont été modifiées, mais non écrites sur un fichier de pagination système ; et (C) maintient une base de données de mémoire partagée à l'intérieur de la mémoire partagée, qui indique si une instance du système d'exploitation associée avec une partition au sein de la communauté est active.

18. Système d'ordinateur selon la revendication 1, **caractérisé en outre par** :
un appareil de rétablissement après panne qui détecte un événement d'une défaillance système dans une première instance, et en réponse, lance un transfert du contrôle d'une ressource de traitement d'une première instance vers une seconde instance sans nécessiter l'intervention d'un opérateur.

19. Système d'ordinateur selon la revendication 18, dans lequel la seconde instance n'a pas de cycles de traitement avant la défaillance dans la première instance et sert comme secours de la première instance pour prendre en charge les cycles de traitement de la première instance après que ladite défaillance s'est produite ; au moment de la défaillance dans la première instance, le contrôle d'une pluralité de ressources de traitement associées à la première instance est transféré vers la seconde instance ; et dans lequel chaque dite ressource de traitement vers laquelle le contrôle doit être transféré possède une indication stockée qui lui est associée de l'instance vers laquelle son contrôle doit être transféré.

20. Système d'ordinateur selon la revendication 18, dans lequel ladite ressource de traitement est un processeur secondaire (2408) sous le contrôle de la première instance, et la première instance contrôle également un processeur principal (2404) qui dirige le transfert de mémoire contrôlée par la première instance vers une section désignée de la mémoire système.

21. Système d'ordinateur selon la revendication 1, **caractérisé en outre par** :
un appareil d'allocation de rattachement propriétaire permanent qui fournit une allocation de rattachement propriétaire permanent de chaque processeur à une partition respective, les allocations étant utilisées pour associer les processeurs avec leurs partitions respectives au cours de l'initialisation (2800) du système.

22. Système d'ordinateur selon la revendication 21, comprenant en outre un appareil d'allocation de rattachement propriétaire temporaire qui fournit une allocation de rattachement propriétaire temporaire de chaque processeur à une partition respective, les allocations de rattachement propriétaire temporaire indiquant la partition qui exerce actuellement le contrôle du processeur.

23. Système d'ordinateur selon la revendication 21, comprenant en outre un appareil pour changer l'allocation de rattachement propriétaire permanent d'un processeur donné, les informations relatives aux allocations étant stockées dans un espace de mémoire prédéterminé ; et ledit appareil de changement d'allocation comporte un appareil pour changer le contenu dudit espace de mémoire prédéterminé.

24. Système d'ordinateur selon la revendication 22, dans lequel l'appareil d'allocation de rattachement propriétaire permanent effectue les allocations permanentes en utilisant une action de traitement spécifique par le premier processeur provoquant l'analyse par le premier processeur d'un emplacement de mémoire contenant des informations indiquant le propriétaire bénéficiaire de l'allocation, et provoquant la fourniture par le premier processeur, une fois qu'il a rejoint sa partition allouée, d'une indication de sa disponibilité pour rejoindre le fonctionnement en mode multitraitement symétrique (SMP), ladite indication de disponibilité comportant un drapeau qui est établi par le premier processeur.

25. Système d'ordinateur selon la revendication 1, comportant en outre un ensemble de drapeaux matériels associés avec chaque partition, les drapeaux matériels pour une partition particulière comprenant au moins un drapeau indiquant le statut opérationnel d'un processeur particulier s'exécutant sur cette partition, et un drapeau de disponibilité indiquant si ledit processeur particulier est disponible pour rejoindre le multitraitement symétrique (SMP) sur cette partition.

26. Système d'ordinateur selon la revendication 25, dans lequel chaque dit ensemble de drapeaux matériels comprend un drapeau de rattachement propriétaire, et avant la réallocation du premier processeur, un premier des drapeaux de rattachement propriétaire pour la première partition indique que le premier processeur est sous le contrôle d'une instance s'exécutant sur la première partition, tandis que, une fois la réallocation du premier processeur faite, le premier drapeau de rattachement propriétaire indique que le premier processeur n'est plus sous le contrôle de l'instance s'exécutant sur la première partition et est en fait sous le contrôle d'une instance s'exécutant sur la seconde partition.

27. Système d'ordinateur selon la revendication 1, **caractérisé en outre par** :
un appareil de migration de processeur qui réalloue un premier processeur d'une première partition à une seconde partition, tandis qu'il est en train de fonctionner sous le contrôle d'une instance du système d'exploitation s'exécutant sur la première partition, fournit une indication de la partition de destination pour le premier processeur et donne au premier processeur l'ordre de cesser de fonctionner sous le contrôle de l'instance s'exécutant sur la première partition.

28. Système d'ordinateur selon la revendication 27, dans lequel la pluralité des processeurs est divisée en groupes et dans lequel chaque groupe comporte un programme de console vers lequel est transféré le contrôle du processeur avant sa réallocation vers la seconde partition, et dans lequel ledit appareil de migration provoque l'entrée du premier processeur dans un état non alloué avant sa réallocation vers la seconde partition.

29. Système d'ordinateur selon la revendication 1, **caractérisé en outre par** :
un appareil de communication entre les instances qui habilite la communication entre une première instance s'exécutant sur une première partition et une seconde instance s'exécutant sur une seconde partition en modifiant la mémoire partagée auxquelles les deux instances ont accès.

30. Système d'ordinateur selon la revendication 29, dans lequel l'appareil de communication peut réaliser une communication donnée en modifiant uniquement un seul bit de la mémoire partagée ; dans laquelle le bit qui est modifié fait partie d'un vecteur de bits de notification de la seconde instance, le vecteur de bits de notification comportant une pluralité de bits, chacun de ceux-ci correspondant à un événement prédéterminé différent, et pouvant voir sa valeur changer par la première instance pour indiquer l'occurrence de l'événement à la seconde instance ; et dans lequel la seconde instance utilise la position du bit dans le vecteur de bits en tant qu'index pour placer dans la mémoire une tâche appropriée à lancer en réponse à la modification de ce bit.

31. Système d'ordinateur selon la revendication 30, dans lequel l'appareil de communication comprend un appareil sous le contrôle de la première instance qui provoque la génération d'une interruption envoyée par la première instance à la seconde instance pour indiquer à la seconde instance que ledit bit a été modifié.

32. Système d'ordinateur selon la revendication 29, dans lequel l'appareil de communication comporte en outre un appareil d'émission par paquets qui stocke dans la mémoire partagée les données mises en paquet devant être communiquées de la première instance vers la seconde instance.

33. Système d'ordinateur selon la revendication 32, dans lequel l'appareil de communication, pour une communication donnée, modifie un bit de notification dans la mémoire partagée, la modification du bit indiquant à la seconde instance que le paquet a été stocké ; et ledit système comporte en outre un appareil pour provoquer la génération d'une interruption envoyée à la seconde instance pour indiquer à la seconde instance que le bit de notification a été modifié ; où, lors de la détermination de la présence des données mises en paquet, la seconde instance copie tout paquet de données en attente vers la mémoire locale et supprime l'allocation de l'espace de mémoire partagée dans lequel il était stocké précédemment.

34. Système d'ordinateur selon la revendication 1, **caractérisé en outre par** :
le mécanisme logiciel allouant de la mémoire aux zones de mémoire privées et aux zones de mémoire partagées, et permettant à une pluralité d'instances qui forment un ensemble de partage d'avoir accès à une zone de mémoire partagée associée par le rattachement à la zone ; et
un second mécanisme logiciel pour rétablir la mémoire partagée à laquelle était rattachée une instance défaillante.

35. Système d'ordinateur selon la revendication 34, dans lequel une instance dans un ensemble de partage marque une autre instance dans l'ensemble de partage qui est tombée en défaillance, comme non rattachée à une zone de mémoire partagée à laquelle l'instance défaillante était rattachée au moment de sa défaillance et la mémoire d'une zone de mémoire partagée est libérée lorsqu'une dernière instance rattachée à la zone de mémoire partagée est détachée de la zone.

36. Système d'ordinateur selon la revendication 34, dans lequel un compte de référence d'entrée/sortie est maintenu dans la mémoire privée pour chaque zone de mémoire partagée, et (A) lorsqu'une opération d'entrée/sortie est lancée, le compte de référence en rapport avec chaque page de mémoire dans la zone de mémoire partagée sur laquelle est effectuée l'entrée ou la sortie, est ajusté dans un sens, et (B) lorsqu'une opération d'entrée/sortie est accomplie, le compte de référence, pour chaque page de mémoire dans la zone de mémoire partagée sur laquelle est effectuée l'entrée ou la sortie, est ajusté dans le sens opposé.

37. Procédé d'exploitation d'un système d'ordinateur (200) ayant une pluralité de ressources système pouvant être allouées, comprenant des processeurs (108 à 114), une mémoire (120) et un ensemble de circuits E/S (118), le procédé comprenant les étapes consistant à :
(a) interconnecter électriquement les processeurs (108 à 114), la mémoire (120) et l'ensemble de circuits E/S (118), de sorte que chaque processeur a un accès électrique à la totalité de la mémoire et à au moins une partie de l'ensemble de circuits E/S ;
(b) allouer les ressources système pouvant être allouées à une pluralité de partitions (202, 204, 206), chaque partition comprenant au moins un processeur, une partie de la mémoire et une partie de l'ensemble des circuits E/S ;
(c) exécuter une instance du système d'exploitation (208, 210, 212) dans chaque partition (202, 204, 206) ;
(d) former une communauté (420) de partitions en partageant la mémoire (434, 448) entre un groupe de partitions (412, 414) ; et
réallouer un premier processeur d'une première partition à une seconde partition sans nécessiter un redémarrage du système dans sa totalité, où ladite réallocation comporte de provoquer, avant la réallocation, le stockage par le premier processeur d'un contexte de traitement se rapportant à la première partition et provoquant, après la réallocation, le chargement par le premier processeur de tout contexte de traitement qu'il pourrait avoir stocké dans une précédente exécution avec la seconde partition.

38. Procédé selon la revendication 37, **caractérisé en outre par** l'étape consistant à :
(e) changer la configuration en migrant les ressources système pouvant être allouées d'une partition (202, 204, 206) vers une autre au cours de l'exploitation du système sans nécessiter un redémarrage du système dans sa totalité (200).

39. Procédé selon la revendication 37, **caractérisé en outre par** les étapes consistant à:
(e) créer une première paire d'instances du système d'exploitation qui se partagent un premier sous-ensemble de la pluralité de ressources système ;
(f) créer une seconde paire d'instances du système d'exploitation qui se partagent un second sous-ensemble de la pluralité de ressources systèmes différent du premier sous-ensemble de ressources du système d'exploitation ;
(g) dédier une partie de la mémoire à chaque instance du système d'exploitation dans la première paire d'instances du système d'exploitation ;
(h) dédier une partie de la mémoire à chaque instance du système d'exploitation dans la seconde paire d'instances du système d'exploitation ; et
(i) partager au moins une partie de la mémoire entre la première paire d'instances du système d'exploitation et la seconde paire d'instances du système d'exploitation.

40. Procédé selon la revendication 37, **caractérisé en outre par** les étapes consistant à :
(e) maintenir, avec chaque instance, un enregistrement de processeurs présents dans le système et identifiant une pluralité de statuts opérationnels différents des processeurs au regard de l'instance ; et
(f) stocker, dans un dispositif de stockage de la mémoire, une désignation pour une première ressource pour définir son association avec une première instance et son statut opérationnel en rapport avec la première instance, la désignation étant utilisée par la première instance dans la détermination pour savoir si la première ressource doit être utilisée, et changer la désignation d'une manière qui comporte l'utilisation d'un masque binaire pour changer le contenu du dispositif de stockage de la mémoire.

41. Procédé selon la revendication 37, **caractérisé en outre par** l'étape consistant à :
(e) former une base de données de mémoire partagée pour la communauté (420) à l'intérieur de la mémoire partagée, comprenant à l'intérieur de la base de données de mémoire partagée une indication pour savoir si une instance du système d'exploitation associée à la communauté est active, chaque instance se mappant sur la base de données de mémoire partagée alors qu'elle rejoint une communauté.

42. Procédé selon la revendication 41, dans lequel l'étape (d) comporte l'étape consistant à :
verrouiller la base de données de mémoire partagée pour bloquer l'accès à la base de données par une autre instance alors qu'une instance analyse la base de données de mémoire partagée.

43. Procédé selon la revendication 37, **caractérisé en outre par** l'étape consistant à :
(e) placer la mémoire dans un état de non rattachement propriétaire, moyennant quoi la mémoire n'a pas de rattachement propriétaire avec aucune partition, chaque fois que la mémoire doit être ajoutée au système ou supprimée du système.

44. Procédé selon la revendication 37, **caractérisé en outre par** les étapes consistant à :
stocker une indication d'une instance de destination vers laquelle le contrôle d'une première ressource de processeur de la première instance doit être transféré au moment d'une défaillance à l'intérieur de la première instance ;
déterminer, lors de l'occurrence de ladite défaillance, l'instance de destination pour la première ressource de processeur ; et
changer les index de contrôle pour la première ressource de processeur pour transférer le contrôle de la première ressource de processeur de la première instance à l'instance de destination sans nécessiter l'intervention de l'opérateur.

45. Procédé selon la revendication 37, **caractérisé en outre par** l'étape consistant à :
fournir une allocation de propriété permanente de chaque processeur à une partition respective, les allocations étant utilisées pour associer les processeurs avec leurs partitions respectives au cours de l'initialisation du système, comprenant l'étape consistant à stocker les informations relatives aux allocations dans une mémoire non volatile.

46. Procédé selon la revendication 37, **caractérisé en outre par** l'étape consistant à :
réallouer un premier processeur d'une première partition à une seconde partition, dans lequel ladite réallocation comporte de provoquer l'arrêt par le processeur d'un premier état de traitement avant sa réallocation sous le contrôle d'une instance s'exécutant sur la première partition.

47. Procédé selon la revendication 37, **caractérisé en outre par** l'étape consistant à :
fournir une communication entre les instances qui permet la communication d'une première instance s'exécutant sur une première partition avec une seconde instance s'exécutant sur une seconde partition en modifiant la mémoire partagée à laquelle les deux instances ont accès.

48. Procédé selon la revendication 47, dans lequel l'étape de fourniture de la communication comprend les étapes consistant à modifier une partie d'un vecteur de bits de notification de la seconde instance, le vecteur de bits de notification comportant une pluralité de bits, chacun de ceux-ci correspondant à un événement prédéterminé différent et pouvant voir sa valeur changer afin d'indiquer l'occurrence de cet événement ; et à utiliser la position du bit dans le vecteur de bits en tant qu'index pour placer dans la mémoire une tâche appropriée à lancer en réponse de la modification de ce bit ; ainsi qu'à stocker dans la mémoire partagée les données mises en paquet devant être communiquées de la première instance vers la seconde instance.

49. Procédé selon la revendication 37, **caractérisé en outre par** les étapes consistant à :
(e) allouer de la mémoire à une zone de mémoire partagée, moyennant quoi une pluralité d'instances qui forment un ensemble de partage ont un accès à chaque zone de mémoire partagée par le rattachement à la zone, et à allouer de la mémoire à des zones de mémoire privées ; et
(f) rétablir la mémoire partagée à laquelle une instance défaillante était rattachée.
